(19) Europäisches Patentamt
European Patent Office
Office européen des brevets

(11) **EP 3 770 653 B1**

(12) **EUROPEAN PATENT SPECIFICATION**

(45) Date of publication and mention
of the grant of the patent:
**09.07.2025 Bulletin 2025/28**

(21) Application number: **19770923.1**

(22) Date of filing: **20.03.2019**

(51) International Patent Classification (IPC):
***G02B 5/18*** (2006.01)

(52) Cooperative Patent Classification (CPC):
**G02B 5/1809; G02B 5/1828; G02B 5/1861**

(86) International application number:
**PCT/JP2019/011842**

(87) International publication number:
**WO 2019/182051 (26.09.2019 Gazette 2019/39)**

(54) **OPTICAL ELEMENT AND AUTHENTICATION BODY**

OPTISCHES ELEMENT UND AUTHENTIFIZIERUNGSKÖRPER

ÉLÉMENT OPTIQUE ET CORPS D'AUTHENTIFICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.03.2018 JP 2018053546**

(43) Date of publication of application:
**27.01.2021 Bulletin 2021/04**

(60) Divisional application:
**25180671.7**

(73) Proprietor: **Toppan Printing Co., Ltd.**
**Tokyo 110-0016 (JP)**

(72) Inventors:
• **TASHIRO, Tomoko**
**Tokyo 110-0016 (JP)**
• **SUGIHARA, Keitaro**
**Tokyo 110-0016 (JP)**
• **YAMAMOTO, Hanako**
**Tokyo 110-0016 (JP)**

(74) Representative: **Hoffmann Eitle**
**Patent- und Rechtsanwälte PartmbB**
**Arabellastraße 30**
**81925 München (DE)**

(56) References cited:
EP-A1- 1 739 751      JP-A- 2005 514 672
JP-A- 2007 531 906      JP-A- 2016 503 356
JP-A- H0 951 009      US-A1- 2005 128 590
US-A1- 2007 247 714      US-A1- 2007 273 142
US-A1- 2012 162 771      US-A1- 2012 162 771
US-A1- 2017 341 454

**Description**

[Technical Field]

Embodiments of the present invention relate to optical elements and authentication media.

[Background Art]

For prevention of counterfeiting of valuable securities such as gift certificates, banknotes, and credit cards and brand protection of products, optical elements using holograms, diffraction gratings, multilayer interference films, and the like have been attached to such items. These optical elements, which are not easy to produce, have an effect of preventing counterfeiting of items to which an optical element is attached.

Optical elements that have been commonly used are capable of verifying the authenticity of optical element only by visual inspection, and do not require use of a particular verifier for verification. In particular, optical elements that change the color observed depending on the observation angle, and optical elements that change an image displayed thereon, have been widely used. Among others, the optical elements that change color depending on the observation angle can be diffraction gratings, multilayer interference films, and the like as described above.

Diffraction gratings and multilayer interference films have characteristics such that the color of the optical element observed by the observer continuously changes when the angle at which the optical element is observed is changed. Since a plurality of colors are thus observed by the observer, it is difficult to explicitly define the color of the optical element that should be observed when the optical element is genuine, in authenticity verification. Further, in authenticity verification of the optical element, the observer cannot easily find an appropriate angular range among observation angles for observing the optical element.

In order to solve the above problems, grating structures that develop a predetermined color have been used as optical elements. The grating structures have fine structures having a period that is equal to or smaller than the wavelength of visible light. The grating structures have characteristics of emitting light of a specific wavelength in a specular reflection direction, due to a phenomenon called guided mode resonance, from the incident light entering the grating structure. According to the grating structure, the observer, when observing the optical element in a direction other than the specular reflection direction, cannot observe light of a specific color in the optical element. Therefore, according to the grating structures, unlike diffraction gratings and multilayer interference films, an angle at which the optical element should be observed and a color that should be observed at the angle can be defined. As a result, the method for verifying the authenticity of the optical element can be clearly defined. As an example of anti-counterfeiting optical elements using such a sub-wavelength grating structure, an optical element is disclosed in PTL 1. EP1739751A1 is also cited as an example of optical element the prior art.

[Citation List]

[Patent Literature]

PTL 1: JP 2013-527938 T

[Summary of the Invention]

[Technical Problem]

According to the optical element disclosed in PTL 1, the optical element is observed at a first angle at which a first color is observed, and then the optical element is rotated about the normal to a plane in which the optical element extends. Further, the optical element is observed at a second angle at which the second color is observed to verify the authenticity of the optical element.

Here, the motion of the observer's hand rotating the optical element is not a natural motion compared with other motions, for example, tilting the optical element. Therefore, work efficiency of the verification work performed by the observer tends to be lowered, and thus verification efficiency also tends to be lowered. In addition, the sub-wavelength grating emits light of a specific color only in the specular reflection direction as described above. Therefore, it is unlikely that the observer can observe the color exhibited by the optical element at the moment when the observer picks up the optical element, or the observer puts the optical element on a planar surface and then observes it. That is, it is unlikely that the observer observes the optical element in the specular reflection direction at these moments. Therefore, after the observer finds an angle at which a color exhibited by the optical element can be observed, the observer needs to rotate the optical element to find another angle at which another color exhibited by the optical element can be observed. As a result, it takes time for the observer to verify the authenticity of the optical element. Accordingly, there has been a need for optical elements that can be more easily verified for authenticity.

The present invention has been made to provide an optical element and an authentication medium capable of facilitating authenticity verification.

[Solution to Problem]

An optical element for solving the above issues includes: a first layer; a second layer in contact with the first layer; and a third layer in contact with the second layer, each layer having light transmitting properties. The first layer is a resin layer having a first refractive index n1, and has a first surface in contact with the second layer, and includes a grating structure composed of concave and convex portions in at least part of the first surface; the second layer is a dielectric layer having a second refractive index n2 higher than the first refractive index n1, and has a concavo-convex shape that follows the grating structure; and the third layer is a resin layer having a third refractive index n3 lower than the second refractive index n2. The first surface has a concavo-convex surface; the grating structure includes a first grating structure and a second grating structure; and the concavo-convex surface includes a first region in which the first grating structure is located, and a second region in which the second grating structure is located and which is located close to the first region in plan view, as viewed perpendicular to the first surface. An azimuth angle of the first grating structure and an azimuth angle of the second grating structure are equal to each other; the first grating structure and the second grating structure have a grating period in a range of 250 nm or more and 500 nm or less, and a difference between the grating period d1 of the first grating structure and the grating period d2 of the second grating structure is 20 nm or more. The difference between the first refractive index n1 and the third refractive index n3 is 0.2 or less. The optical element further comprises a resin layer located on a side of the first layer opposite to that facing the second layer. The first layer, the third layer and the resin layer have the further properties as recited in the appended claim 1.

With this configuration, appearance and disappearance of color caused by the respective grating structures simultaneously occur in the first grating structure and the second grating structure. Accordingly, in authenticity verification of the optical element, whether or not the optical element includes the first region that exhibits the color derived from the first grating structure and the second region that exhibits the color derived from the second grating structure can be determined simultaneously. Therefore, the authenticity of the optical element can be more easily verified compared with the case where the optical element has to be rotated to verify whether the optical element has two states of exhibiting respective colors.

The above optical element may further include a third region located between the first region and the second region, wherein, when the optical element is irradiated with light from a light source positioned on a side of the second layer opposite to that facing the third layer and observed at a certain observation angle in a direction facing towards the side of the second layer, the third region may exhibit a color different from colors exhibited by the first region and the second region.

With this configuration, since the optical element includes the third region, the observer of the optical element can more clearly recognize the boundary between the first region and the second region compared with the case where the optical element does not include the third region.

The third region may be formed of a flat surface on the first surface of the first layer, and the flat surface may have an average roughness Sa of 20 $\mu$m or less. With this configuration, light incident on the third region is reflected by the third region in the specular reflection direction, and the third region appears white. Therefore, the boundary between the first region and the second region, which exhibits a specific color in the specular reflection direction by the guided mode resonance, becomes clearer.

In the above optical element, the third region may include a scattering structure having directivity in a direction different from a specular reflection direction of light incident on the third region, or an anti-reflection structure. With this configuration, the third region appears black in the specular reflection direction. Therefore, the boundary between the first region and the second region, which exhibits a specific color in the specular reflection direction by the guided mode resonance, becomes clearer.

In the above optical element, the third region may have a constant width. With this configuration, the boundary between the first region and the second region can be uniformly emphasized by the third region. The optical element tends to appear as a flat surface and impart a strong impression. The third region having a linear shape tends to produce a sharp impression. Further, the third region having a curved shape tends to produce a soft impression of the optical element.

In the above optical element, the third region may include a first portion and a second portion, and the first portion may have a width different from a width of the second portion. With this configuration, the varying width of the third region tends to produce an elegant impression of the optical element. In particular, when combined with a curved line, it produces a rhythmic impression. Further, when the width continuously varies, a natural appearance is likely to be produced.

In the above optical element, the third region may have a width in a range of 30 $\mu$m or more and 3000 $\mu$m or less. With this configuration, when the width of the third region is 30 $\mu$m or more, the observer can observe the third region.

Further, when the width of the third region is 3000 $\mu$m or less, the third region is prevented from standing out more than the first region and the second region.

In the above optical element, the first region and the second region may each include a plurality of cells that are partitioned to each have an area of 0.1 mm$^2$ or less, and the first region and the second region may include the grating structure at least in some of the cells.

With this configuration, the luminance of the cells can be changed by changing the area ratio of the grating structure of the cells.

Because the optical element of the present invention as defined in claim 1 includes a resin layer located on a side of the first layer opposite to that facing the second layer, wherein the first layer may has a hardness higher than a hardness of the resin layer and higher than a hardness of the third layer, an external force applied to the optical element can be absorbed by the resin layer and the third layer. Accordingly, the grating structure of the first layer is prevented from being deformed due to the external force.

Because in the optical element of the present invention as defined in claim 1, the first layer is made of an ultraviolet curable resin, the first layer has a thickness in a range of 1 $\mu$m or more and 10 $\mu$m or less, and the resin layer and the third layer are made of a thermoplastic resin, the grating structure of the first layer is more reliably prevented from being deformed due to the external force.

The above optical element may further include a resin layer located on a side of the first layer opposite to that facing the second layer, wherein at least one of the first layer, the third layer, and the resin layer may contain a filler, and the filler may have an average particle size of 400 nm or less. With this configuration, the range of emission angles of light emitted by the optical element increases compared with the case where each layer does not contain a filler. Therefore, the observation angle range in which the observer can observe the color exhibited by the optical element is widened.

[Advantageous Effects of Invention]

According to the present invention, the authenticity of optical elements and authentication media can be easily verified.

[Brief Description of Drawings]

Fig. 1 is a cross-sectional view schematically illustrating a structure of an optical element of a first embodiment that is outside the scope of the claimed invention.

Fig. 2 is a plan view schematically illustrating an appearance of the optical element of the first embodiment that is outside the scope of the claimed invention.

Fig. 3 is a plan view schematically illustrating a structure of the optical element of the first embodiment that is outside the scope of the claimed invention.

Fig. 4 is a plan view schematically illustrating an azimuth angle in cells of the present invention.

Fig. 5 shows cross-sectional views schematically illustrating a structure taken along the line I-I and the line II-II of Fig. 3.

Fig. 6 is a cross-sectional view schematically illustrating an effect of the optical element of the first embodiment that is outside the scope of the claimed invention.

Fig. 7 is a perspective view schematically illustrating a relationship between the wavelength of light emitted from the grating structure of the present invention and an azimuth angle.

Fig. 8 is a perspective view schematically illustrating a relationship between the wavelength of light emitted from the grating structure of the present invention and an azimuth angle.

Fig. 9 is a perspective view schematically illustrating a structure of the optical element of the first embodiment that is outside the scope of the claimed invention.

Fig. 10 is a view schematically illustrating an effect of the first embodiment .

Fig. 11 is a view schematically illustrating an effect of the first embodiment .

Fig. 12 (a) is a plan view schematically illustrating a structure of a boundary region of the first embodiment , (b) is a cross-sectional view taken along the line III-III and the line IV-IV.

Fig. 13 (a) is a plan view schematically illustrating a structure of a boundary region of the first embodiment , (b) is a cross-sectional view taken along the line V-V.

Fig. 14 (a) is a plan view schematically illustrating a structure of a boundary region of the first embodiment , (b) is a cross-sectional view taken along the line VI-VI.

Fig. 15 is a view of apparatus configuration schematically illustrating a configuration of a color measurement apparatus for the optical element of the present invention.

Fig. 16 is a graph showing optical properties of a structure of the first embodiment that is outside the scope of the claimed invention.

Fig. 17 is a graph showing optical properties of a structure of the first embodiment that is outside the scope of the claimed invention.

Fig. 18 is a graph showing optical properties of a structure of the first embodiment that is outside the scope of the claimed invention.

Fig. 19 is a graph showing optical properties of a structure of the first embodiment that is outside the scope of the claimed invention.

Fig. 20 is a chromaticity diagram showing optical properties of a structure of the first embodiment that is outside the scope of the claimed invention.

Fig. 21 is a chromaticity diagram showing optical properties of a structure of the first embodiment that is outside the scope of the claimed invention.

Fig. 22 is a graph showing optical properties of a structure of the first embodiment that is outside the scope of the claimed invention.

Fig. 23 is a graph showing optical properties of a structure of the first embodiment that is outside the scope of the claimed invention.

Fig. 24 is a graph showing optical properties of a structure of the first embodiment that is outside the scope of the claimed invention.

Fig. 25 is a plan view schematically illustrating a boundary region in the first embodiment that is outside the scope of the claimed invention.

Fig. 26 is a plan view schematically illustrating a configuration of regions in the first embodiment that is outside the scope of the claimed invention.

Fig. 27 is a plan view schematically illustrating a configuration of regions in the first embodiment that is outside the scope of the claimed invention.

Fig. 28 is a plan view schematically illustrating a configuration of regions in the first embodiment that is outside the scope of the claimed invention.

Fig. 29 is a plan view schematically illustrating a configuration of regions in the first embodiment that is outside the scope of the claimed invention.

Fig. 30 is a plan view schematically illustrating a structure of the first embodiment that is outside the scope of the claimed invention.

Fig. 31 is a cross-sectional view schematically illustrating a structure taken along the line VII-VII of Fig. 30.

Fig. 32 is a cross-sectional view schematically illustrating a structure taken along the line VII-VII of Fig. 30.

Fig. 33 includes a plan view and a cross-sectional view schematically illustrating a structure of each region in the optical element of the first embodiment that is outside the scope of the claimed invention.

Fig. 34 includes a plan view and a cross-sectional view schematically illustrating a structure of each region in the optical element of the first embodiment that is outside the scope of the claimed invention.

Fig. 35 is a plan view schematically illustrating a structure of another example of the first embodiment that is outside the scope of the claimed invention together with an enlarged view thereof.

Fig. 36 is a cross-sectional view schematically illustrating a structure of the optical element of a second embodiment that is outside the scope of the claimed invention together with an enlarged view thereof.

Fig. 37 is a cross-sectional view schematically illustrating a structure of another example of the optical element of the second embodiment that is outside the scope of the claimed invention.

Fig. 38 is a cross-sectional view schematically illustrating a structure of still another example of the optical element of the second embodiment that is outside the scope of the claimed invention.

Fig. 39 is a cross-sectional view schematically illustrating a structure of the optical element of a third embodiment that is outside the scope of the claimed invention.

Fig. 40 is a cross-sectional view schematically illustrating a structure of a first example of the optical element of a fourth embodiment that is outside the scope of the claimed invention.

Fig. 41 is a cross-sectional view schematically illustrating a structure of a second example of the optical element of the fourth embodiment that is outside the scope of the claimed invention.

Fig. 42 is a cross-sectional view schematically illustrating a structure of a first example of the optical element of a fifth embodiment of the present invention.

Fig. 43 is a cross-sectional view schematically illustrating a layer configuration of the optical element of the fifth embodiment of the present invention.

Fig. 44 is a cross-sectional view schematically illustrating a structure of a first example of the optical element of a sixth embodiment that is outside the scope of the claimed invention.

Fig. 45 is a view schematically illustrating an effect of a first example of the optical element of the sixth embodiment.

Fig. 46 is a plan view schematically illustrating a first state in the first example of the optical element of the sixth embodiment that is outside the scope of the claimed invention.

Fig. 47 is a plan view schematically illustrating a second state in the first example of the optical element of the sixth embodiment that is outside the scope of the claimed invention.

Fig. 48 is a plan view schematically illustrating a third state in the first example of the optical element of the sixth embodiment that is outside the scope of the claimed invention.

Fig. 49 is a plan view schematically illustrating a fourth state in the first example of the optical element of the sixth embodiment that is outside the scope of the claimed invention.

Fig. 50 is a cross-sectional view schematically illustrating a structure of a second example of the optical element of a sixth embodiment that is outside the scope of the claimed invention.

Fig. 51 is a cross-sectional view schematically illustrating a structure of a first example of the optical element of a seventh embodiment that is outside the scope of the claimed invention.

Fig. 52 is a cross-sectional view schematically illustrating a structure of a second example of the optical element of the seventh embodiment that is outside the scope of the claimed invention.

Fig. 53 is a cross-sectional view schematically illustrating a structure of a third example of the optical element of the seventh embodiment that is outside the scope of the claimed invention.

Fig. 54 is a cross-sectional view schematically illustrating a structure of a fourth example of the optical element of the seventh embodiment that is outside the scope of the claimed invention.

Fig. 55 is a cross-sectional view schematically illustrating a structure of a transfer foil of an eighth embodiment that is outside the scope of the claimed invention.

Fig. 56 is a cross-sectional view schematically illustrating a structure of the optical element of a ninth embodiment that is outside the scope of the claimed invention.

Fig. 57 is a plan view schematically illustrating a structure of a card to which the optical element of the ninth embodiment (that is outside the scope of the claimed invention) is applied.

Fig. 58 is a plan view schematically illustrating a structure of the optical element of the ninth embodiment that is outside the scope of the claimed invention.

Fig. 59 is a plan view schematically illustrating a structure of an authentication medium of a tenth embodiment of the present invention.

Fig. 60 is a cross-sectional view schematically illustrating a structure taken along the line XIV-XIV of Fig. 59.

Fig. 61 is a cross-sectional view schematically illustrating a structure of an authentication medium of an eleventh embodiment that is outside the scope of the claimed invention.

Fig. 62 is a view schematically illustrating an effect of a first example of the authentication medium of the eleventh embodiment.

Fig. 63 is a view schematically illustrating an effect of the first example of the authentication medium of the eleventh embodiment .

Fig. 64 is a view schematically illustrating an effect of the first example of the authentication medium of the eleventh embodiment .

Fig. 65 is a view schematically illustrating an effect of the first example of the authentication medium of the eleventh embodiment .

Fig. 66 is a view schematically illustrating an effect of a second example of the authentication medium of the eleventh embodiment.

Fig. 67 is a view schematically illustrating an effect of the second example of the authentication medium of the eleventh embodiment.

Fig. 68 is a view schematically illustrating an effect of the second example of the authentication medium of the eleventh embodiment.

[Description of Embodiments]

[First Embodiment]

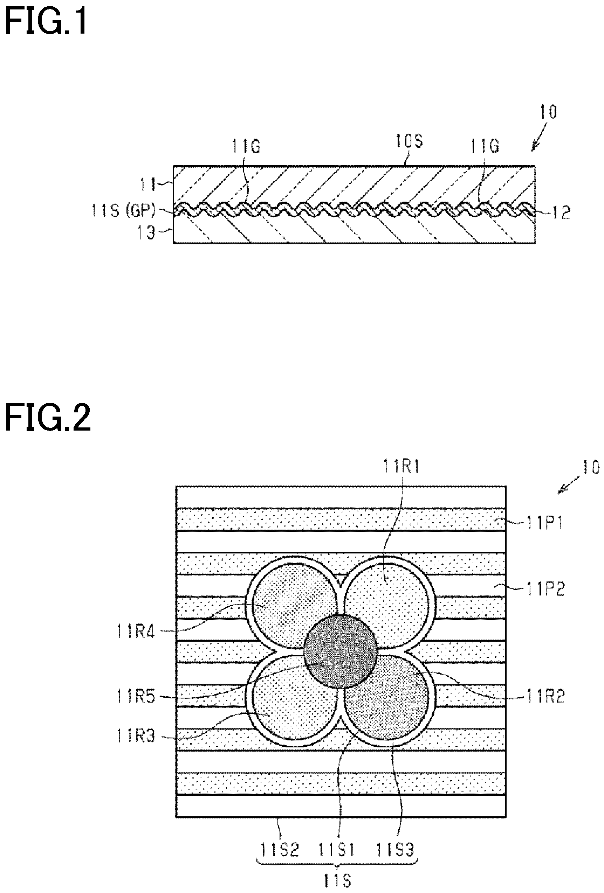

With reference to Figs. 1 to 35, a first embodiment of an optical element will be described. The first embodiment of the optical element as such is not in accordance with the claimed invention but is part of the fifth, tenth and eleventh embodiments that are described later. Throughout the drawings, components that perform the same or similar functions are denoted by the same reference signs, and duplicated description thereof will be omitted. Further, embodiments of the present disclosure are a group of embodiments based on a unique and unitary invention from the background. Further, aspects of the present disclosure are aspects of a group of embodiments based on a single invention. Configurations of the present disclosure may include each aspect of the present disclosure. Features of the present disclosure can be combined with each other and constitute each configuration. Accordingly, features of the present disclosure, configurations of the present disclosure, aspects of the present disclosure, and embodiments of the present disclosure can be combined with each other, and these combinations have synergistic functions and can perform synergistic effects.

As shown in Fig. 1, an optical element 10 includes a first layer 11, a second layer 12 in contact with the first layer 11, and a third layer 13 in contact with the second layer 12. Each layer has light transmitting properties. The optical element 10 can be a part or the entirety of a security seal. In other words, a security seal can include the optical element 10. Further, the optical element 10 can be a visible motif. The security seal can be in a form of patches, strips, overlays, or stickers. The optical element 10 is irradiated with light from a light source positioned on a side of the second layer 12 opposite to that facing the third layer 13, and observed from a side of the second layer 12 opposite to that facing the third layer 13. In the optical element 10, a surface of the first layer 11 on a side opposite to that in contact with the second layer 12 is an observation surface 10S observed by an observer.

The first layer 11 is a resin layer having a first refractive index n1. The first layer 11 includes a grating structure 11G on at least part of a first surface 11S that is in contact with the second layer 12. The first surface 11S is an example of a first surface. The second layer 12 has a concavo-convex shape that follows the grating structure 11G. The second layer 12 is a dielectric layer having a second refractive index n2 higher than the first refractive index n1. The third layer 13 is a resin layer having a third refractive index n3 lower than the second refractive index n2. The grating structure 11G is a minimum structural unit composed of concave and convex portions, and a plurality of grating structures 11G are arranged in one direction on the first surface 11S to form a grating pattern GP. The grating pattern GP can be formed as a concavo-convex surface of the first surface 11S. The grating structure 11G has a grating period of a sub-wavelength less than the visible wavelength in a range of 250 nm or more and 500 nm or less, for example, 400 nm.

The difference between the refractive index n1 of the first layer 11 and the refractive index n3 of the third layer 13 is 0.2 or less, and preferably 0.1 or less. When the difference between the refractive index n1 of the first layer 11 and the refractive index n3 of the third layer 13 is 0.2 or less, saturation tends to be high. When the difference between the refractive index n1 of the first layer 11 and the refractive index n3 of the third layer 13 is 0.1 or less, saturation is close to the maximum. The difference between the refractive index n1 of the first layer 11 and the refractive index n2 of the second layer 12, and the difference between the refractive index n3 of the third layer 13 and the refractive index n2 of the second layer 12 are each preferably 0.3 or more, and more preferably, 0.5 or more.

A region where the grating structure 11G is located on the first surface 11S of the first layer 11 is a concavo-convex surface. That is, the first surface 11S includes a concavo-convex surface. In the present embodiment, the entire first surface 11S is a concavo-convex surface. However, only part of the first surface 11S may be a concavo-convex surface.

Fig. 2 is a view illustrating an appearance of the optical element 10 in plan view, as viewed perpendicular to the observation surface 10S. The optical element 10 has a motif region 11S1 and a background region 11S2. The motif region 11S1 is an example of a first region, and the background region 11S2 is an example of a second region. The motif region 11S1 is composed of a plurality of image elements 11R1, 11R2, 11R3, 11R4, and 11R5. The background region 11S2 is composed of the pattern elements 11P1 and 11P2. The motif region 11S1 is a main element of the overall design such as characters, symbols, object shapes, and symbols, and includes a contour representing a particular meaning. On the other hand, the background region 11S2 is a region which does not have a particular meaning. The background region 11S2 may be stripes as shown in Fig. 2, or may have other shapes such as geometric patterns.

The motif region 11S1 and the background region 11S2 are adjacent to each other with a boundary region 11S3 interposed therebetween. The boundary region 11S3 is an example of a third region. When the optical element 10 is observed at a certain observation angle, the boundary region 11S3 exhibits a color different from colors exhibited by the motif region 11S1 and the background region 11S2 in the optical element 10. Since the optical element 10 includes the boundary region 11S3, the observer of the optical element 10 can more clearly recognize the boundary between the motif region 11S1 and the background region 11S2 compared with the case where the optical element 10 does not include the boundary region 11S3. The optical element 10 may not necessarily include the boundary region 11S3. When the optical element 10 does not include the boundary region 11S3, the motif region 11S1 and the background region 11S2 are in contact with each other.

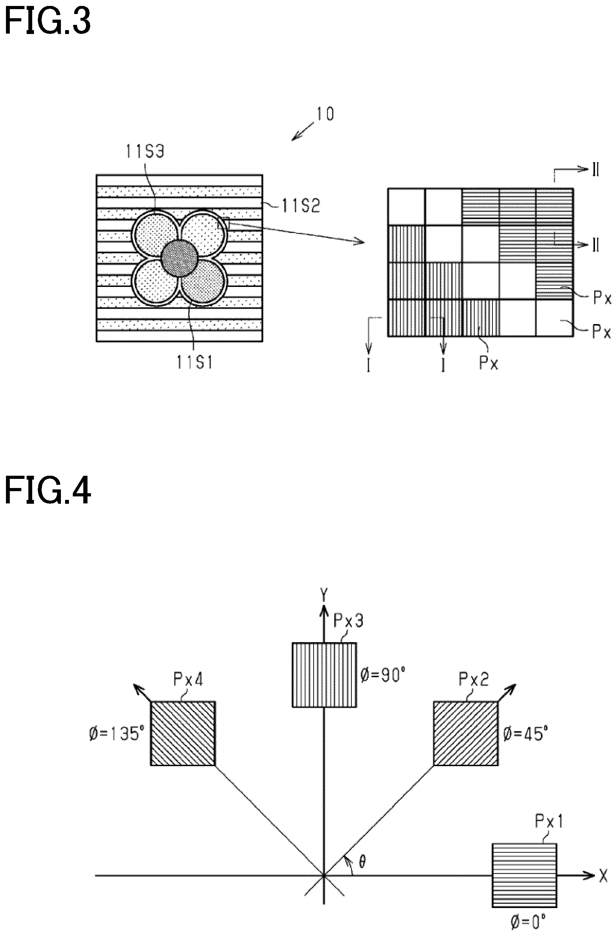

Fig. 3 is an enlarged view of a part of the optical element 10 shown in Fig. 2. A plurality of cells Px are partitioned in the motif region 11S1, the background region 11S2, and the boundary region 11S3. Each cell Px preferably has an area of 0.1 mm$^2$ or less. The plurality of cells Px are arranged without gaps across the entire first surface 11S of the first layer 11. In the present embodiment, each cell Px has a square shape in plan view, as viewed perpendicular to the first surface 11S. However, the cell Px may also have a regular triangular shape or a regular hexagonal shape. Further, the cell Px may also have a polygonal shape with sides of lengths different from each other. Each side length of the cell Px is preferably 0.3 mm or less. Further, each side length is more preferably 0.08 mm or less. In this case, each side length of the cell Px is a value smaller than the resolution of the human eye, so the cells Px are not visually recognized by the observer. Accordingly, the optical element 10 can display a high resolution image.

For convenience of illustration and explanation, the first surface 11S of the first layer 11, that is, a surface of the first layer 11 which forms an interface with the second layer 12, will be described by using a structure in plan view, as viewed perpendicular to the observation surface 10S. In Fig. 3, for convenience of illustration, a direction in which the grating pattern GP extends is indicated by the straight lines. As an example, the figure shows the case where the grating structures of the image element 11R1 and the pattern element 11P2 in contact with the boundary region 11S3, which are positioned in the cells Px located within at least 300 μm from the contour of the boundary region 11S3, have grating directions perpendicular to each other. Further, in the cells Px, the grating directions can be combined in any manner as long as they are parallel or perpendicular to each other.

With reference to Fig. 4, the definition of azimuth angle representing the grating direction will be described.

As shown in Fig. 4, an arbitrary direction parallel to the observation surface 10S of the optical element 10 is defined as an X direction, and a direction perpendicular to the X direction is defined as a Y direction. In the present embodiment, the X direction is a reference direction for the azimuth angle, and an angle formed between the X direction and the direction in which the grating structure extends is defined as an azimuth angle. Accordingly, the azimuth angle $\phi$ of the first cell Px1 is 0°, and the azimuth angle $\phi$ of the second cell Px2 is 45°. Further, the azimuth angle $\phi$ of the third cell Px3 is 90°, and the azimuth angle $\phi$ of the fourth cell Px4 is 135°. In addition, the X direction often corresponds to the horizontal direction of the optical element 10, and the azimuth angles of the grating structures used in this case are preferably 0°, 90°, or 0° and 90°. With this design, the optical elements 10 can be easily produced, and the production efficiency of the optical elements 10 can be improved. When the difference in azimuth angles between the first grating structure and the second grating structure is 1° or less, these azimuth angles can be defined as being equal to each other.

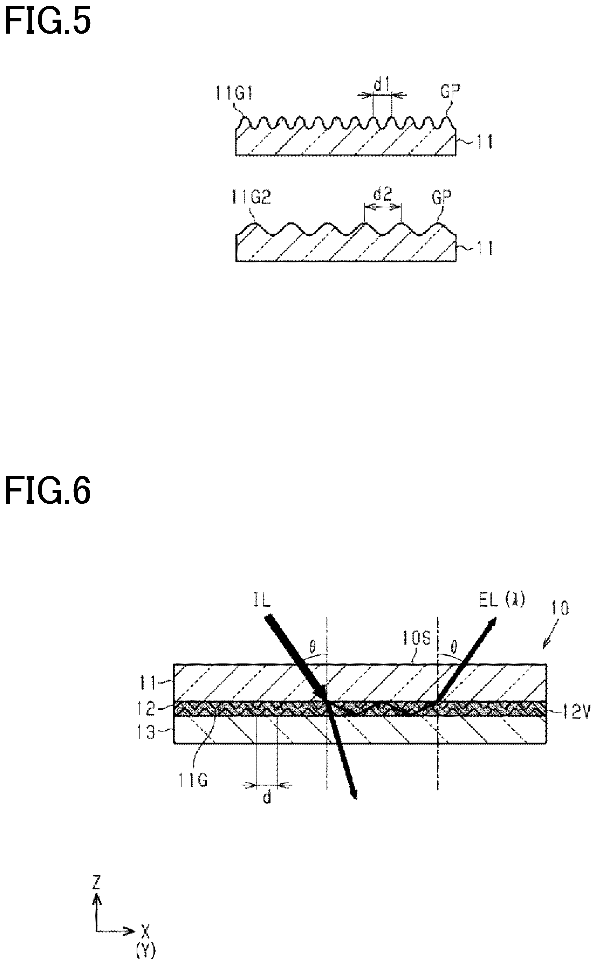

Fig. 5 shows the cross-sectional structure of the grating structure 11G taken along the line I-I and II-II of Fig. 3. In Fig. 5, the cross-sectional structure of the first grating structure 11G1 positioned in the image element, and the cross-sectional structure of the second grating structure 11G2 positioned in the pattern element are shown on the upper and lower sides in the sheet of drawing, respectively, for convenience of illustration. The cross-sectional structure of each grating structure schematically shows the cross-sectional structure of the grating structure located in each cell Px. Further, for convenience of illustration, Fig. 5 illustrates the grating structure as a surface having an array of convex portions that protrude in a direction away from the flat surface.

As shown in Fig. 5, in the grating pattern GP, a distance between the grating structures adjacent to each other is referred to as a grating period d. The grating period in the first grating structure 11G1 is referred to as a first period d1, and the grating period in the second grating structure 11G2 is referred to as a second period d2. In the present embodiment, the first period d1 is smaller than the second period d2. However, the first period d1 may be larger than the second period d2. In the present embodiment, the grating structure is a minimum unit structure having convex and concave portions, and the grating pattern GP is a pattern in which the grating structures are repeated in one direction.

In the case where the grating direction of the first grating structure 11G1 and the grating direction of the second grating structure 11G2 are perpendicular to each other, the first period d1 and the second period d2 may be the same or different from each other. On the other hand, in the case where the grating direction of the first grating structure 11G1 and the grating direction of the second grating structure 11G2 are parallel to each other, the first period d1 and the second period d2 are preferably different from each other. In any case, the optical element 10 may have a configuration that satisfies the following formula (1):

$$|d1(n21\text{-}R) - d2(n22\text{-}R)| \geqq 25 \ \ldots \ \text{formula (1)}$$

In the formula (1), n21 is an effective refractive index of a virtual layer 12V to the incident light in a region in which the first grating structure 11G1 is located, n22 is an effective refractive index of a virtual layer 12V to the incident light in a region in which the second grating structure 11G2 is located, and R is a constant defined by the refractive index n1 of the first layer 11 and an angle $\theta$ of the incident light.

Further, a color difference $\Delta E^*ab$ between an average color value $L^*a^*b^*$ of the motif region 11S1 and an average color value $L^*a^*b^*$ of the background region 11S2 can be 13 or more. The average color value $L^*a^*b^*$ can be a color value $L^*a^*b^*$ of an arbitrary range, for example, a range of 3 mm diameter.

Fig. 6 is a view schematically illustrating how light is incident on a region in which the grating structure 11G is located in the optical element 10. Incident light IL enters the second layer 12 via the first layer 11 at an incidence angle $\theta$. The second layer 12 corresponds to the shape of the grating structure 11G. In a fine structure having a period smaller than the visible wavelength, that is, a sub-wavelength grating, it is known that a region in which the grating structure is located can be regarded as a two dimensional planar layer having a substantially constant thickness in the Z direction, that is, a virtual layer 12V. The virtual layer 12V has an effective refractive index neff, which varies depending on the polarized light direction (optical anisotropy). The optical anisotropy that occurs when the structure has directivity such as the structure described above is called structural birefringence, and the effective refractive index varies depending on the relationship between the incident light and the directivity of the structure.

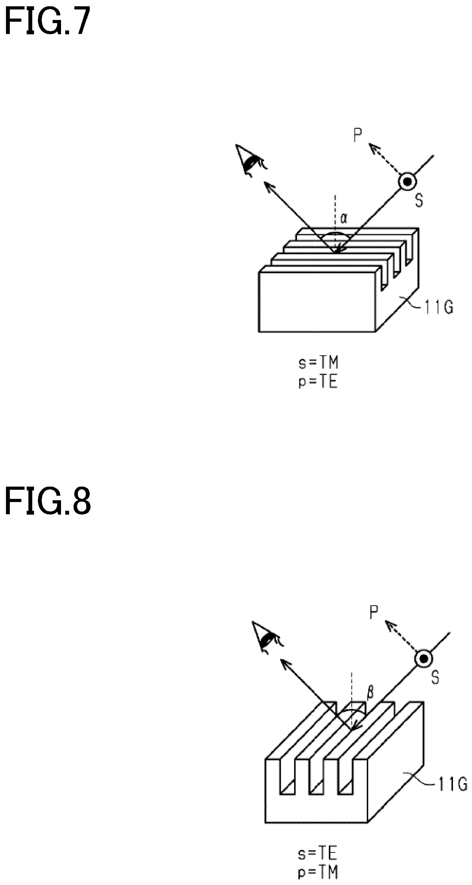

Fig. 7 is a view illustrating a perspective structure of the grating structure 11G having the azimuth angle $\phi$ of 0°. Fig. 8 is a view illustrating a perspective structure of the grating structure 11G having the azimuth angle $\phi$ of 90°. For convenience of illustration, the grating structure of the present embodiment has a rectangular shape. However, a corrugated shape may also be used. Among the polarization components of the incident light entering the grating structure 11G, the polarized light in which the electric field oscillates in a direction perpendicular to an incident plane of the grating structure 11G is s-polarized light. On the other hand, polarized light in which the electric field oscillates in a direction parallel to the incident plane of the grating structure 11G is p-polarized light. The incident plane refers to a plane which includes incident light and reflected light and is perpendicular to a plane in which the grating structure extends. Neither of the s-polarized light and the p-polarized light depend on the azimuth angle $\phi$ of the grating structure 11G. In other words, the s-polarized light and the p-polarized light are included in both the incident light entering the grating structure 11G shown in Fig. 7 and the incident light entering the grating structure 11G shown in Fig. 8.

In a structure having grooves such as the grating structure 11G, optical anisotropy occurs depending on the relationship between the direction in which the groove extends, that is, the azimuth angle $\phi$, and the oscillation direction of the electric field as described above. Among the components of light incident on the grating structure 11G, the component in which the oscillation direction of the electric field is parallel to the azimuth angle $\phi$ of the grating structure 11G is referred to as a TE wave. On the other hand, among the components of light incident on the grating structure 11G, the component in which the oscillation direction of the electric field is perpendicular to the azimuth angle $\phi$ of the grating structure 11G is referred to as a TM wave. As previously described in connection with Fig. 7, in the grating structure 11G having the azimuth angle $\phi$ of 0°, the p-polarized light, which is the component in which the oscillation direction of the electric field is parallel to the azimuth angle $\phi$ of the grating structure 11G, corresponds to the TE wave. On the other hand, as previously described in connection with Fig. 8, in the grating structure 11G having the azimuth angle $\phi$ of 90°, the p-polarized light, which is the component in which the oscillation direction of the electric field is perpendicular to the azimuth angle $\phi$ of the grating structure 11G, corresponds to the TM wave.

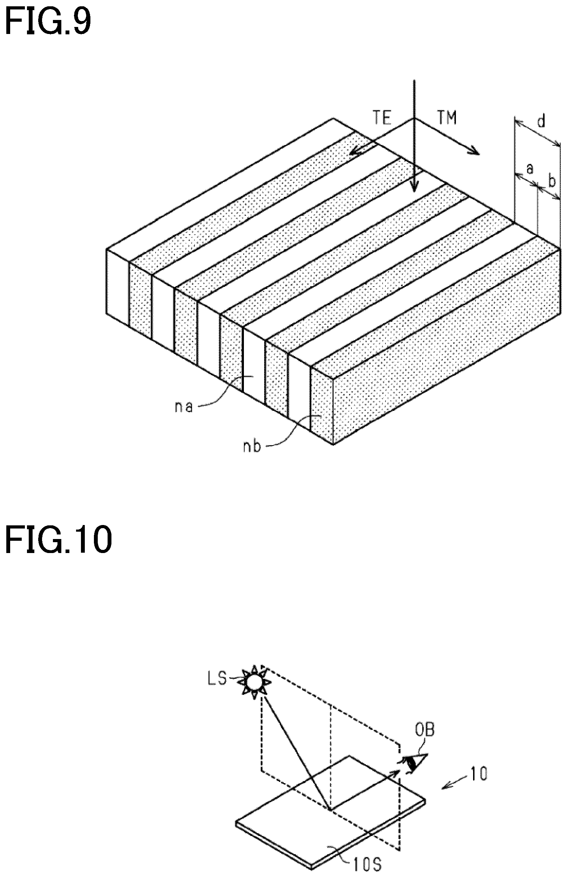

With reference to Fig. 9, the effective refractive index of the virtual layer 12V will be described using a simple model of the rectangular grating structure 11G.

As shown in Fig. 9, in the grating structure having the period d, a refractive index of the region corresponding to the convex portion is defined as na, and a refractive index of the region corresponding to the concave portion is defined as nb. Further, the width of the convex portion in the period d is defined as a, and the width of the concave portion is defined as b. When the occupancy ratio of the convex portion to the period d is defined as F, the effective refractive index neff of the TE wave and TM wave in the incident light are represented by formula (2) and formula (3), respectively.

[Math. 1]

$$n_{eff\_TE} = \sqrt{Fn_a^2 + (1-F)n_b^2} \quad \cdots \text{ formula (2)}$$

[Math. 2]

$$n_{eff\_TM} = 1 / \sqrt{\frac{F}{n_a^2} + \frac{(1-F)}{n_b^2}} \quad \cdots \text{ formula (3)}$$

The following description will be given of how the formula (1) has been derived. In the formula (1), both the effective refractive index n21 and the effective refractive index n22 are defined as including refractive indices for both the TE wave and the TM wave. As described above, the values of the effective refractive index n21 and the effective refractive index n22 vary depending on the azimuth angle $\phi$ of the grating structure 11G. Here, guided mode resonance occurs in the grating structure 11G when the following phase-matching conditions represented by the formulas (4) to (7) are satisfied. The light of a specific wavelength that satisfies these formulas is propagated in the virtual layer 12V, and emitted in a direction toward the observer. In the grating structure formed on a flat surface such as the one shown in Fig. 6, a specific color is observed as zero-order diffracted light at the specular reflection angle, in which the incidence angle $\theta$ of the incident light IL and the emission angle $\theta$ of the emitted light EL are equal.

$$kn1\sin\theta + mK = \beta \quad \ldots \text{ formula (4)}$$

$$k = 2\pi/\lambda \ldots \text{ formula (5)}$$

$$K = 2\pi/d \quad \ldots \text{ formula (6)}$$

$$\beta = (2\pi/\lambda) \cdot neff \quad \ldots \text{ formula (7)}$$

In the formulas, k is a wavenumber, n1 is a refractive index of the first layer 11, θ is an angle of light incident on the virtual layer 12V, m is a diffraction order, λ is a resonance wavelength, K is a reciprocal lattice vector, d is a grating period, β is a propagation constant, and neff is an effective refractive index.

By substituting the formulas (5) to (7) into the formula (4), the formula (8) is derived.

$$d(neff\text{-}R) = m\lambda \ \dots \ \text{formula (8)}$$

When the material and incidence angle are fixed, the refractive index n1 and the incidence angle θ are constant, so n1sinθ is treated as the constant R. Since only the first-order diffracted light mainly contributes to the guided mode resonance, m = 1 can be substituted into the formula (8). When the resonance wavelength λ derived from the formula (8) is defined as λ1 and λ2 for the first grating structure 11G1 and the second grating structure 11G2, respectively, the following formula (9) holds:

$$|\lambda1\text{-}\lambda2| = |d1(n21\text{-}R) - d2(n22\text{-}R)| \ \dots \ \text{formula (9)}$$

In the visible wavelength range, when there is a wavelength difference of 25 nm or more, which is larger than the wavelength range corresponding to a specific color having a relatively narrow wavelength range, such as yellow-green, yellow, and orange, the color difference between two regions, which are displayed in two colors, can be recognized. Therefore, when the first grating structure 11G1 and the second grating structure 11G2, with the right side of the formula (9) having a value of 25 or more, are provided in the image element and the pattern element, the color difference can be recognized. The greater the wavelength difference |λ1-λ2|, the clearer the color difference. In addition, compared with the TM wave perpendicular to the azimuth angle of the grating structure, the TE wave parallel to the azimuth angle of the grating structure has higher effective refractive index due to the structure, and thus larger refractive index difference between the virtual layer 12V and the first layer 11. Accordingly, the specific wavelength emitted in the specular reflection direction has high intensity, and thus a dominant optical effect.

The optical element 10 described above in connection with Fig. 3 can include the first grating structure 11G1 shown in Fig. 7 in the image element 11R1, and the second grating structure 11G2 shown in Fig. 8 in the pattern element 11P2. In this case, the image element 11R1 exhibits a first color, and the pattern element 11P2 exhibits a second color. This state is an initial position for the relative positions among the optical element 10, the observer, and the light source. When the optical element 10 is rotated 90° from the initial position about the normal of the optical element 10, the s-polarized light corresponds to the TE wave, and the p-polarized light corresponds to the TM wave in the image element 11R1. On the other hand, s-polarized light corresponds to the TM wave, and the p-polarized light corresponds to the TE wave in the pattern element 11P2. Accordingly, the image element 11R1 exhibits the second color, and the pattern element 11P2 exhibits the first color. Therefore, when the optical element 10 is rotated, the observer recognizes that the color exhibited by the image element 11R1 and the color exhibited by the pattern element 11P2 are switched.

As described above, the azimuth angle φ of the first grating structure 11G1 and the azimuth angle φ of the second grating structure 11G2 are preferably 90° or less for the following reasons. The angle formed between the observation surface 10S of the optical element 10 and the plane in which the observer's gaze is included is the observation angle. The observation angle at which the color exhibited by the grating structure is observed is defined by the relative positional relationship among the light source, the observer, and the optical element 10. Accordingly, even when the azimuth angle φ of the first grating structure 11G1 and the azimuth angle φ of the second grating structure 11G2 are different, the observation angle at which the color exhibited by the first grating structure 11G1 is observed, and the observation angle at which the color exhibited by the second grating structure 11G2 is observed are the same. In other words, these two grating structures have the same observation angles at which the colors respectively exhibited by the grating structures 11G1 and 11G2 appear, and the observation angles at which the colors respectively exhibited by the grating structures 11G1 and 11G2 disappear.

When the difference between the azimuth angle φ of the first grating structure 11G1 and the azimuth angle φ of the second grating structure 11G2 is 90°, the wavelength of the zero-order diffracted light emitted from the first grating structure 11G1 and the wavelength of the zero-order diffracted light emitted from the second grating structure 11G2 are different from each other. Accordingly, the first color exhibited by the first grating structure 11G1 and the second color exhibited by the second grating structure 11G2 are different from each other. When the difference between the azimuth angle φ of the first grating structure 11G1 and the azimuth angle φ of the second grating structure 11G2 is included in the angular range of larger than 0° and smaller than the 90°, at least one of the first grating structure 11G1 and the second grating structure 11G2 exhibits intermediate color between the first color and the second color. The color exhibited by the first grating structure 11G1 and the color exhibited by the second grating structure 11G2 vary depending on the difference in the azimuth angle φ. Accordingly, due to the difference between the azimuth angle φ of the first grating structure 11G1 and the azimuth angle φ of the second grating structure 11G2, the color exhibited by the respective cells Px arrayed in one direction can be gradually shifted, or the colors can be greatly different between adjacent cells Px.

Further, in the grating structure 11G, when the difference between the azimuth angle $\phi$ of the first grating structure 11G1 and the azimuth angle $\phi$ of the second grating structure 11G2 is set to 90°, the difference between the wavelength of light emitted by the first grating structure 11G1 and the wavelength of light emitted by the second grating structure 11G2 becomes a maximum.

As shown in Fig. 10, in the optical element 10, for example, when the light source LS and the observer OB are positioned symmetrical about the normal of the observation surface 10S in a plane perpendicular to the observation surface 10S of the optical element 10, the observer OB can observe the zero-order diffracted light emitted from the optical element 10. In other words, the optical element 10 can emit light having a wavelength corresponding to the grating period of the grating structure 11G in the direction of specular reflection of the incident light which is incident from the light source LS.

As described above, in the present embodiment, the grating period of the grating structure is set to be equal to or smaller than visible wavelengths, specifically, 250 nm or more and 500 nm or less. However, the grating period that causes only the zero-order diffracted light having a specific wavelength to be emitted in a specific direction depends on the refractive index of the grating structure and the incidence angle of the incident light entering the grating structure. The following description will be given of the conditions under which the grating structure causes only the zero-order diffracted light to be emitted, in other words, the conditions under which the sub-wavelength grating does not cause the first-order diffracted light to be emitted.

For a reflective diffraction grating, it is known that the following formula (10) holds:

$$\sin\theta1 + \sin\theta2 = m\lambda/nd \ldots \text{formula (10)}$$

In the formula (10), $\theta1$ is an incidence angle of the incident light entering the diffraction grating, $\theta2$ is a diffraction angle of the diffracted light emitted from the diffraction grating, m is a diffraction order of the diffracted light, $\lambda$ is a wavelength, n is a refractive index of the diffraction grating, and d is a grating period of the diffraction grating.

The following description will be given of the first-order diffracted light on the assumption that the refractive index n is 1, and the incident light is perpendicular to the plane in which the diffraction grating extends. In this case, the incidence angle $\theta1$ is 0°, and the diffraction order m is 1. Therefore, when these values are substituted into the formula (10), the formula (11) is derived as shown below.

$$\sin\theta2 = \lambda/d \ldots \text{formula (11)}$$

Since $\sin\theta2$ is -1 or more and 1 or less, the formula (11) does not hold if the right side ($\lambda/d$) of the formula (11) is larger than 1. In other words, when the right side ($\lambda/d$) is larger than 1, the first-order diffracted light is not emitted from the diffraction grating. Therefore, under the assumption described above, when the grating period of the diffraction grating is smaller than the wavelength, the diffraction grating causes only the zero-order diffracted light to be emitted.

On the other hand, when the refractive index is not 1, and the incidence angle $\theta1$ is not 0°, the diffraction grating may cause the diffracted light of orders other than the zero-order to be emitted. For example, the first-order diffracted light will be described below on the assumption that the incidence angle $\theta1$ is 30°, and the wavelength $\lambda$ is 600 nm. In this case, the incidence angle $\theta1$ is 30°, the wavelength $\lambda$ is 600 nm, and the diffraction order m is 1. Therefore, when these values are substituted into the formula (10), the formula (12) is derived as described below.

$$1/2 + \sin\theta2 = 600/nd \ldots \text{formula (12)}$$

Since $\sin\theta2$ is -1 or more and 1 or less, the left side ($1/2 + \sin\theta2$) of the formula (12) is -0.5 or more and 1.5 or less, and, when the product of the refractive index n and the grating period d is 0 or more and 400 or less, the diffraction grating causes the first-order diffracted light to be emitted according to the combination of the refractive index n and the grating period d. For example, the combination of the refractive index n and the grating period d (n, d) when the first-order diffracted light is emitted is as follows.

$$(n, d) = (1, 400), (1.5, 200), (2, 100)$$

As seen from the above combination, depending on the refractive index n of the diffraction grating, diffracted light of the first or higher order may be emitted even when the grating period d of the diffraction grating is equal to or lower than the wavelength $\lambda$. In other words, by adjusting the grating period d of the diffraction grating and the refractive index n of the diffraction grating, the diffraction grating can be configured so that the zero-order diffracted light is emitted from the diffraction grating, while the diffracted light of a higher order than zero-order is not emitted.

On the other hand, by designing the diffraction angle $\theta2$ of the first-order diffracted light to be significantly larger than the diffraction angle $\theta2$ of the zero-order diffracted light, the diffraction grating can be configured so that the zero-order diffracted light is observed by the observer, while the first-order diffracted light is not observed by the observer with the position of the diffraction grating relative to the observer being fixed. Accordingly, the degree of freedom in selecting the material for forming the diffraction grating, and the degree of freedom in the grating period of the diffraction grating can be increased.

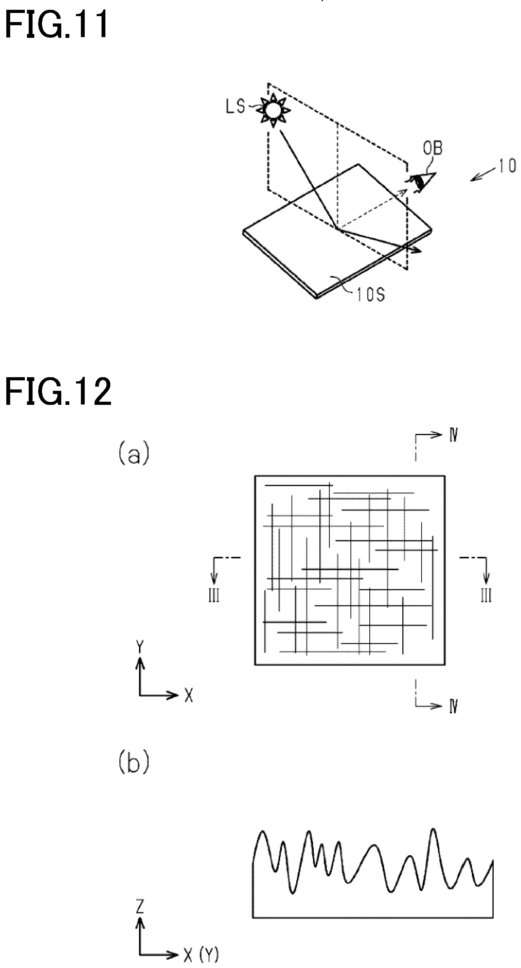

As shown in Fig. 11, the optical element 10 is tilted so that the above-mentioned plane and the optical element 10 intersect at an angle other than perpendicular to each other with the light source LS and the viewpoint of the observer OB being fixed. In this case, the optical element 10 does not cause the zero-order diffracted light to be emitted in the direction of the gaze of the observer OB. Accordingly, the observer cannot observe light of the specific wavelength emitted from the optical element 10. In other words, the observer cannot observe the color exhibited by the optical element 10.

In the optical element 10, appearance and disappearance of color caused by the respective grating structures simultaneously occur in the first grating structure 11G1 and the second grating structure 11G2. Accordingly, in the optical element 10 as a whole, the state of exhibiting a specific color and the state of not exhibiting a specific color are switched. Therefore, in authenticity verification of the optical element 10, whether or not the optical element 10 includes the motif region 11S1 that exhibits the color derived from the first grating structure 11G1 and the background region 11S2 that exhibits the color derived from the second grating structure 11G2 can be determined simultaneously. As a result, the authenticity of the optical element 10 can be more easily verified compared with the case where the optical element 10 is rotated to verify whether the optical element 10 has two states of exhibiting respective colors.

With reference to Figs. 12 to 14, a structure of the boundary region 11S3 will be described. In Figs. 12 to 14, (a) illustrates a schematic structure in the XY plane of the boundary region 11S3, and (b) illustrates a cross-sectional structure taken along the cross-section line in (a).

Fig. 12 is a view illustrating an example of a non-directional scattering structure.

As shown in Fig. 12, the non-directional scattering structure has a configuration in which the structures have irregular width and height. For convenience of illustration, the structures shown in Fig. 12 are randomly arranged in the X direction and the Y direction. However, concavo-convex structures may also be arranged completely randomly regardless of directions. The non-directional scattering structure may be produced simultaneously when the grating structure of the motif region 11S1 and the grating structure of the background region 11S2 are produced, or may be physically formed when the laminate including the first layer 11 to the third layer 13 is transferred to or laminated with another substrate.

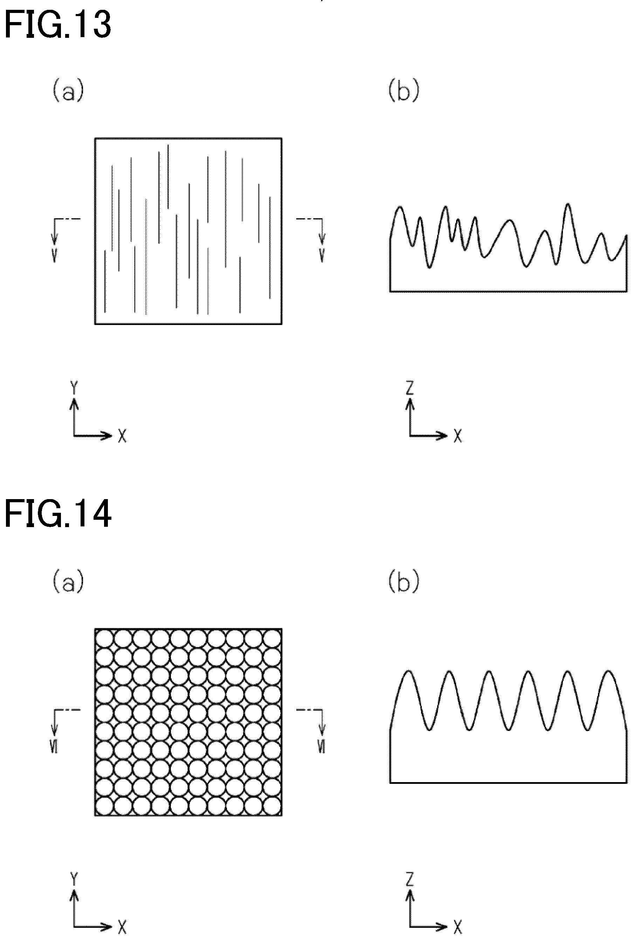

Fig. 13 is a view illustrating an example of a directional scattering structure.

As shown in Fig. 13, the directional scattering structure has a configuration in which the structures have irregular width and height, but are arrayed in an arrangement direction. On the assumption that the observer is on the front side of the drawing, when light is incident from the back to the front of Fig. 13 which shows the structure cross-sectional view, the light is perceived as white due to scattered light being emitted toward the observer. On the other hand, when light is incident from the left side to the right side of the drawing which shows the structure cross-sectional view, the scattering structure substantially appears black or gray since the light is weak even when it is observed in the emitting direction. That is, the boundary region can be displayed in white or black depending on which direction the directional scattering structure is oriented in plan view of the optical element 10. For example, according to the scattering structure having directivity in a direction different from the specular reflection direction of light incident on the boundary region 11S3, the third region appears black in the specular reflection direction. Therefore, the boundary between the motif region 11S1 and the background region 11S2, which exhibits a specific color in the specular reflection direction due to the guided mode resonance, becomes clearer.

Fig. 14 is a view illustrating an example of an anti-reflection structure, which is typically represented by a moth-eye structure.

As shown in Fig. 14, the principle of anti-reflection by a moth-eye structure is that the needle-like structures of nano-order are provided to gradually change the refractive index around the structures. Accordingly, reflection or refraction of incident light significantly decreases, resulting in a black color. Fig. 14 shows an example in which conical structures are arrayed in a matrix. However, the array is not limited to a matrix as long as the structures in a fine structure have a cross sectional area in the XY direction that varies in the Z direction.

Further, the grating structure 11G may also be provided in the boundary region 11S3. In this case, the color of a specific wavelength is displayed in the boundary region 11S3 as well as the motif region 11S1 and the background region 11S2. A color difference between the average color value L*a*b* of the boundary region 11S3 and the average color value L*a*b* of at least one of the image element and the pattern element adjacent to the boundary region 11S3 can be 13 or more. As long as this condition is satisfied, the grating structure 11G provided in the boundary region 11S3 is optional.

The grating structure 11G provided in the boundary region 11S3 preferably has a grating direction in the vertical direction in plan view, as viewed perpendicular to the optical element 10, that is, the azimuth angle $\phi$ of 90°. The optical properties of the grating structure 11G are different between the azimuth angle $\phi$ of 0° and 90°.

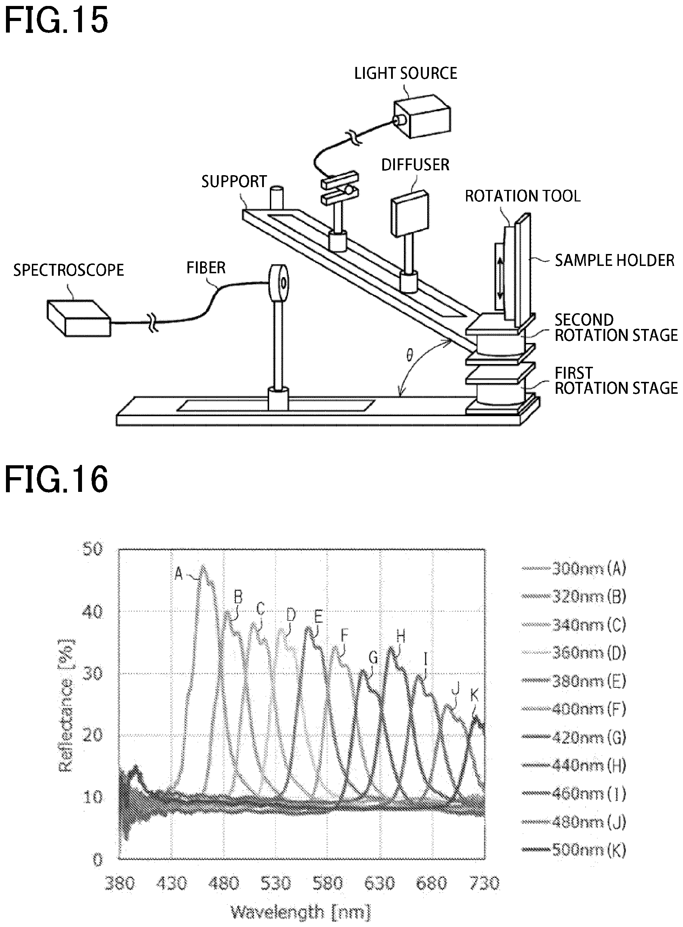

With reference to Figs. 15 to 24, the characteristics of the grating structure 11G depending on the difference in azimuth angle will be described. Figs. 16 to 24 are example results obtained from experiments. The experiments were conducted to measure the color of a sample by varying the conditions of the grating period d every 20 nm from 300 nm to 500 nm. The sample was formed of a laminate including the first layer 11 to the third layer 13, which was laminated with the substrate. The grating structure 11G having a constant grating period d was provided on a flat surface of 5 mm square under each condition. Color measurement was performed by spectral reflectance acquisition for each of the cases of $\alpha$ incidence and $\beta$ incidence. In the $\alpha$ incidence case, light was incident in a direction parallel to the grating direction as shown in Fig. 7, whereas in the $\beta$ incidence case, light was incident in a direction perpendicular to the grating direction as shown in Fig. 8.

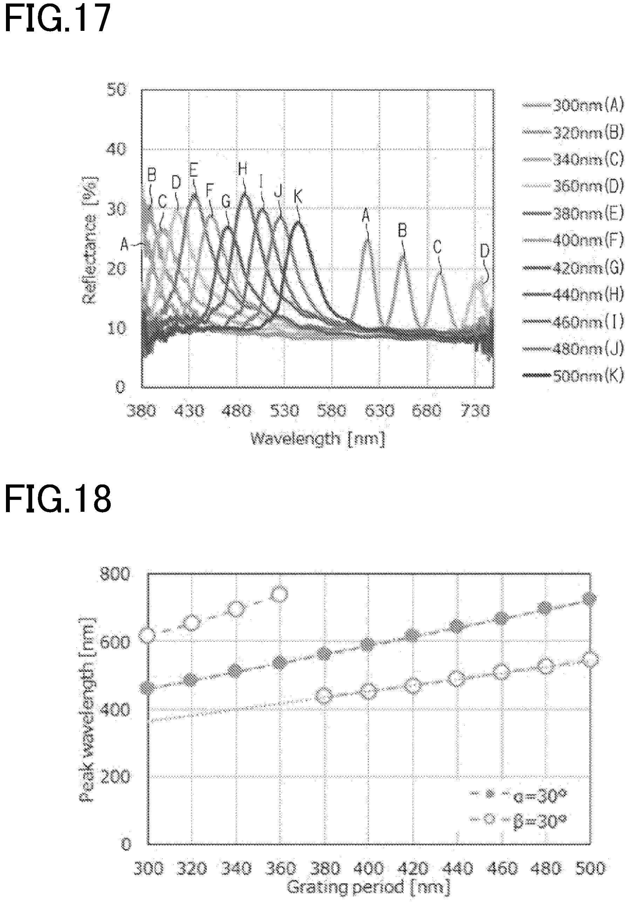

The measurement was performed using an optical system shown in Fig. 15. An optical system was prepared so that the incidence angle and the light-receiving angle to the sample were equal to each other. The reflected light was received by an approximately 4 mm$\phi$ region of the surface of the sample placed in a sample holder, and the color of the reflected light was measured. The incidence angle and the light-receiving angle were basically set to 30 degrees. A spectroscope obtains spectral reflection spectrum as raw data, which will be described later in connection with Figs. 16 and 17. From the reflectance of the object to each wavelength, spectral characteristics of the light source, and the visual sensitivity of human, tristimulus values XYZ were derived, and then converted into various color values such as in the L*a*b* color system.

The respective resonance wavelengths $\lambda 1$ and $\lambda 2$ were obtained by performing measurement for each of the image element and the pattern element by a technique shown in Fig. 15. That is, the relationship between the difference between the resonance wavelengths $\lambda 1$ and $\lambda 2$ and the difference between the structural periods, which is represented by the formula (9), can be experimentally obtained. From the results experimentally obtained as shown in Fig. 15, it was found that the difference between the resonance wavelengths $\lambda 1$ and $\lambda 2$ was 25 nm, and the difference between the structural periods was 20 nm. In other words, the relationship between the difference between the resonance wavelengths $\lambda 1$ and $\lambda 2$ and the difference between the structural periods can be strictly formulated by the formula (9). However, in practice, since the difference between the resonance wavelengths $\lambda 1$ and $\lambda 2$ and the difference between the structural periods are in a linear relationship, the experimental values can be used to obtain approximate values. The approximate value depends on the observation angle and the structural material, but is sufficiently practical in most practical configurations since the practical observation angles and the structural materials are similar.

Figs. 16 and 17 are spectral reflection spectra obtained by measuring samples having different grating periods d under the conditions of $\alpha$ incidence and $\beta$ incidence, which are different in grating direction of the grating structure 11G and the incidence direction. Fig. 16 is the spectral reflection spectrum obtained under the $\alpha$ incidence condition, and Fig. 17 is the spectral reflection spectrum obtained under the $\beta$ incidence condition.

Fig. 18 shows the relationship between the grating period d of the grating structure 11G and the reflection peak wavelength for the results of Figs. 16 and 17.

As shown in Fig. 18, the relationships between the grating period d and the reflection peak wavelength for both cases of $\alpha$ incidence and $\beta$ incidence have linearity. However, while the case of $\alpha$ incidence shows a constant change, the case of $\beta$ incidence is different from the case of $\alpha$ incidence from the range around 360 nm to 380 nm in the grating period. For this reason, the grating structure 11G having the $\alpha$ incidence condition is easier to control in terms of design and manufacturing.

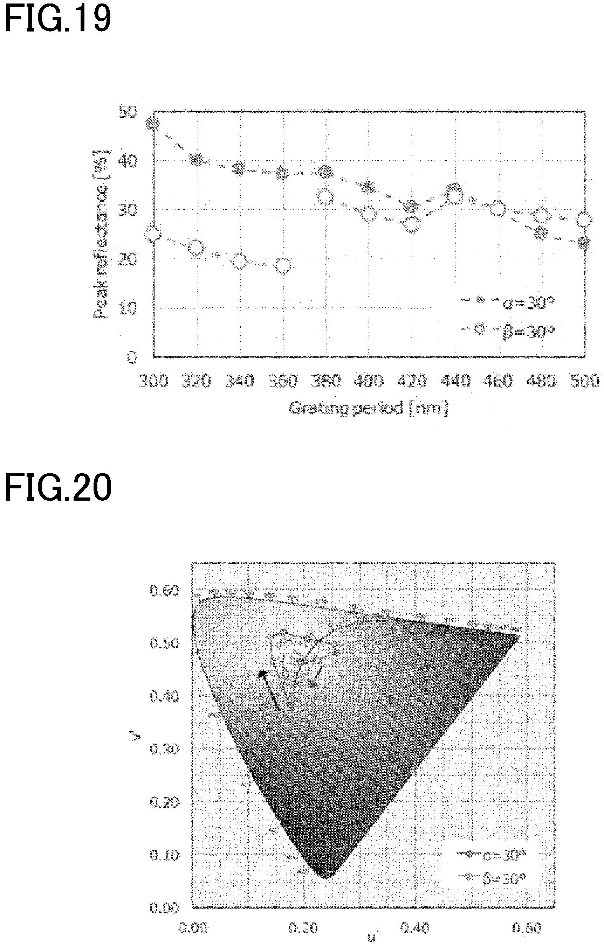

Fig. 19 shows the relationship between the grating period d of the grating structure 11G and the peak reflection for the results of Figs. 16 and 17.

As shown in Fig. 19, the reflectance is generally higher for $\alpha$ incidence than for $\beta$ incidence. The reason for this is that, in Fig. 17, the reflection peak of the grating structure 11G having the fine grating period d appears on the short wavelength side as well as the long wavelength side, which is the main component. This is due to the effect of polarized light generated depending on the relationship between the grating direction and the incidence direction. In the structure design for $\alpha$ incidence, the higher the reflectance at the wavelength corresponding to the main hue, the stronger the displayed color and thus the higher the visibility.

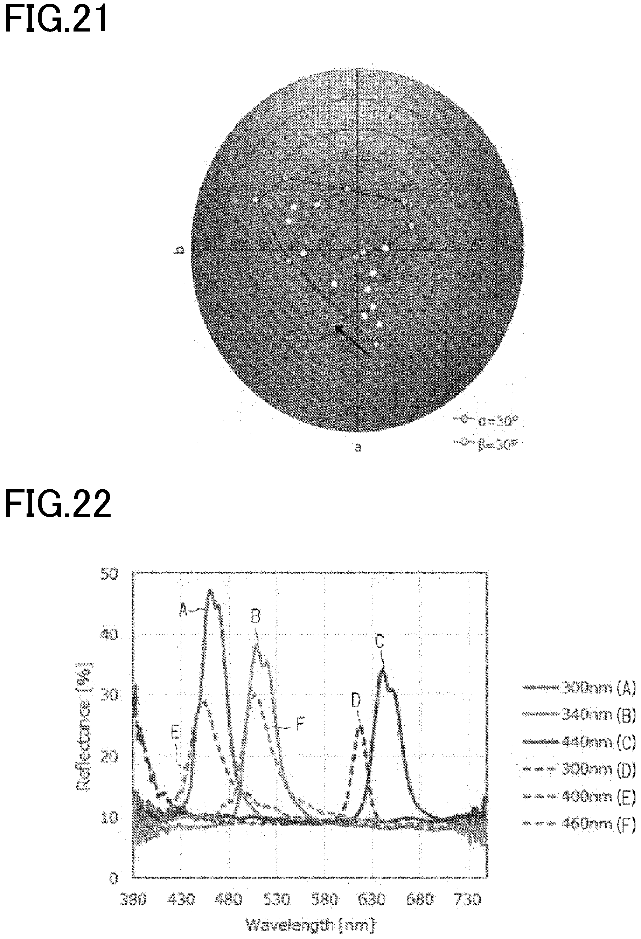

Figs. 20 and 21 are the results obtained by converting the spectral reflectance shown in Figs. 16 and 17 into color values. Fig. 20 shows a u'v' chromaticity diagram according to CIE1976. Fig. 21 shows an ab chromaticity diagram of the CIE Lab color system. In both cases, the starting point of the arrow shown in the chromaticity diagram is a color value for the grating period of 300 nm, and the grating period increases every 20 nm along the line connecting the plots. In comparison between $\alpha$ incidence and $\beta$ incidence, the former is generally positioned further out in the chromaticity diagram, and has higher saturation than the latter. The higher the saturation, the stronger the hue of each color appears. Accordingly, the visibility is improved in the case of $\alpha$ incidence, that is, the case where the grating structure is provided such that the grating direction and the incidence direction are parallel to each other.

In Fig. 22, the grating periods d that produce similar hues in the cases of $\alpha$ incidence and $\beta$ incidence are extracted from Fig. 21 for the wavelengths corresponding to blue, green, and red, and superposed with the corresponding spectral reflection spectra extracted from Figs. 16 and 17. The spectrum having a peak near 450 nm is blue, the spectrum having a peak near 500 nm is green, and the spectrum having a peak near 650 nm is red. Further, the spectrum indicated by the solid line represents the result of $\alpha$ incidence, and the spectrum indicated by the dotted line represents the result of $\beta$ incidence. From the comparison between the solid line and the dotted line for each wavelength, it is easily found that there is a difference in reflectance as described above.

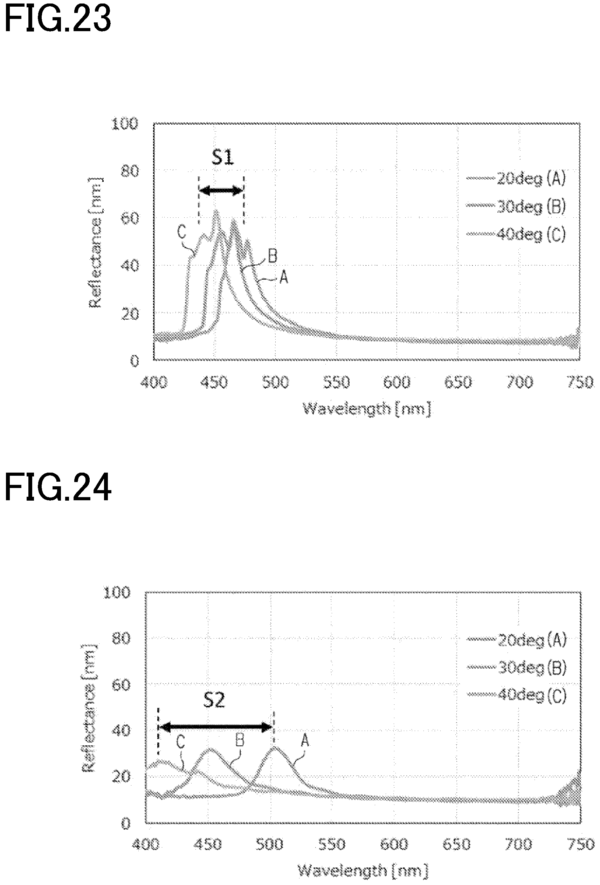

Figs. 23 and 24 show the spectral reflection spectra when the specular reflection angle to be measured is changed to 20° and 40° , around the 30° , for the $\alpha$ incidence and $\beta$ incidence, respectively. Fig. 23 shows the spectral reflection spectrum in the case of $\alpha$ incidence, and Fig. 24 shows the spectral reflection spectrum in the case of $\beta$ incidence. From the comparison between a variation range S1 and a variation range S2 around the peak wavelength for the specular reflection angles 20° to 40°, the variation range S2 for $\beta$ incidence is wider. That is, when the observer is instructed to observe the optical element 10 at the specular reflection angle, the hue may be significantly shifted depending on the observation angle in $\beta$ incidence even in the same specular reflection. On the other hand, since the hue is shifted to a relatively small extent in the case of $\alpha$ incidence, the structure can be designed as $\alpha$ incidence to reduce the angle dependence of the color observed.

The phenomenon in which the color is shifted depending on the specular reflection angle can be explained by a phase matching condition of the above formula (4). When the incidence angle $\theta$ varies, the resonance wavelength $\lambda$ varies accordingly, since the grating period d is constant. In the case where the grating direction and the incidence direction are parallel to each other as shown in Fig. 7, even when the incidence angle $\theta$ varies, F in the formulae (2) and (3) does not vary, and thus the effective refractive index does not vary. Therefore, a change in the resonance wavelength $\lambda$ is small. On the other hand, when the grating direction and the incidence direction are perpendicular to each other as shown in Fig. 8, F varies depending on the incidence angle $\theta$. In particular, when the thickness of the second layer 12 made of a dielectric layer varies relative to the shape of the grating structure formed at the boundary surface between the first layer 11 and the second layer 12, F is likely to vary, which may cause a large change in the effective refractive index due to the incidence angle $\theta$.

As described above, the case of $\alpha$ incidence, that is, the case where the grating structure is provided such that the grating direction and the incidence direction are parallel to each other is advantageous from the viewpoint of visibility and color stability. In general, the optical element 10 is often observed in an illumination environment in which it is irradiated with light from directly above or from the upper front side. Considering this, $\alpha$ incidence is achieved when the azimuth angle of the grating structure 11G viewed from the observer is 90°, that is, the vertical direction as shown in Fig. 7. Another advantage of this grating direction is that the diffracted light is not likely to enter the observer's eye. Accordingly, when the optical element 10 is tilted for observation, the gaze can be focused only on the motif region 11S1 and the background region 11S2 that are desired to be displayed.

Further, when the azimuth angle is 90° in all the grating structures 11G disposed in the motif region 11S1, the background region 11S2, and the boundary region 11S3, there are advantages as described below. For example, in production of a film having such grating structures 11G, a method is known in which heat and pressure are applied to a thermoplastic resin or an ultraviolet curable resin so that the resin is introduced into the grating structures 11G formed on the metal plate and cured. In mass production of the optical element 10, a metal plate is wound around a roll, and the elongated film can be embossed. In this process, when the feeding direction of the film and the direction of the grating structure are parallel to each other, it is easy to obtain an intended optical effect due to high moldability. Further, a problem that the metal plate often becomes unusable due to resin stuck to the metal plate is less likely to occur.

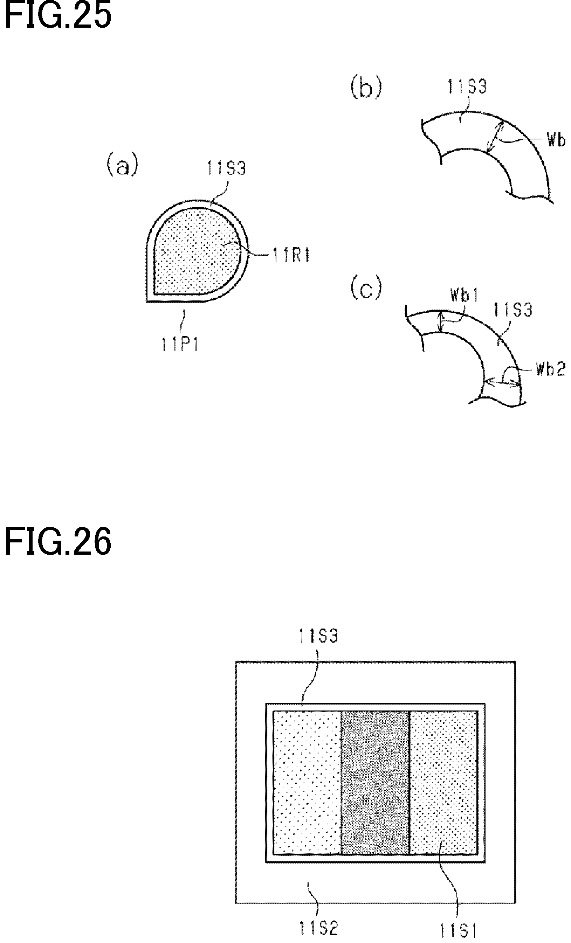

Fig. 25 is a view illustrating an example of the boundary region 11S3.

As shown in Fig. 25(a), the boundary region 11S3 has a contour including a portion in contact with the image element 11R1 and a portion in contact with the pattern element 11P1. A width Wb of the boundary region 11S3 is defined as a distance between a first point on the contour in contact with one of the regions and a second point that intersects with a line perpendicular to the tangent to the first point on the contour in contact with the other of the regions.

As shown in Fig. 25(b), the width Wb may be constant across the entire boundary region. In this configuration, the boundary between the motif region 11S1 and the background region 11S2 is uniformly emphasized by the boundary region 11S3. As a result, the optical element 10 tends to appear as a flat surface and impart a strong impression. In particular, the boundary region 11S3 having a linear shape tends to produce a sharp impression. Further, the boundary region 11S3 having a curved shape tends to produce a soft impression of the optical element 10.

Alternatively, as shown in Fig. 25(c), the width of the boundary region 11S3 may locally vary to include a width Wb1 and a width Wb2. That is, the boundary region 11S3 may include a first portion having the width Wb1 and a second portion having the width Wb2, which is different from that of the width Wb1. With the varying width of the boundary region 11S3, the aesthetic appearance of the optical element 10 is improved. The varying width of the boundary region 11S3 tends to produce an elegant impression of the optical element 10. In particular, when combined with a curved line, it produces a rhythmic impression. Further, when the width Wb continuously varies, a natural appearance is likely to be produced.

The width of the boundary region 11S3 can be in a range of 30 $\mu$m or more and 3000 $\mu$m or less. When the width of the boundary region 11S3 is 30 $\mu$m or more, the observer can observe the boundary region 11S3. Further, when the width of the boundary region 11S3 is 3000 $\mu$m or less, the boundary region 11S3 is prevented from standing out more than the motif region 11S1 and the background region 11S2. In particular, when the width of the boundary region 11S3 is in a range

of 30 $\mu$m or more and less than 300 $\mu$m, a fine line can be drawn to be used as an auxiliary boundary line. On the other hand, when the width of the boundary region 11S3 is in a range of 300 $\mu$m or more and 3000 $\mu$m or less, the line has a width that can be sufficiently resolved by the human eye, and can be used as a boundary between the regions, particularly as a boundary between different patterns.

With reference to Figs. 26 to 29, modified examples for arrangement of the motif region 11S1, the background region 11S2, and the boundary region 11S3 will be described.

In Fig. 26, the motif region 11S1 is composed of three image elements, and the boundary region 11S3 is provided on the outer periphery of the motif region 11S1. The boundary region 11S3 and the background region 11S2 may not necessarily include the grating structure 11G, and may be substantially flat surfaces having an average roughness Sa of 20 $\mu$m or less. With this structure, when a symbol such as a national flag is displayed, the region other than the motif region 11S1 is displayed in white. Accordingly, a desired design can be emphasized without impairing the impression of the symbol.

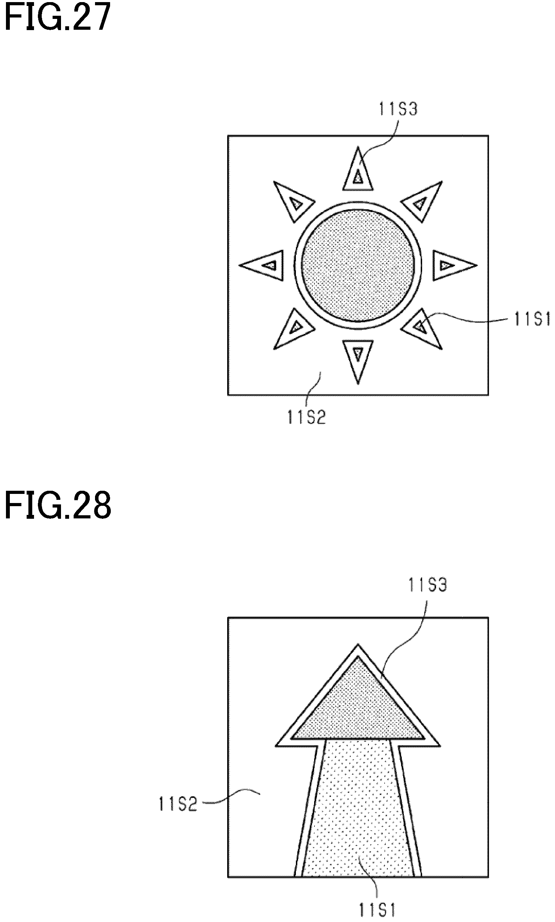

Fig. 27 shows an example of the case where the motif region 11S1 is composed of a plurality of image elements that are not in contact with each other. In this case, each image element can be regarded as the motif region 11S1, and the boundary region 11S3 may be provided for each image element. With this structure as well, the boundary of each image element is clearly marked by the boundary region 11S3. As a result, the observer can readily recognize the shape of the motif region 11S1 as a whole.

Fig. 28 shows an example of the case where part of the contour of the motif region 11S1 is not in contact with the background region 11S2 and the boundary region 11S3. Unlike the configuration shown in Fig. 27, in which the contour of the motif region 11S1 is entirely surrounded, part of the contour of the motif region 11S1 located at the end of the design region can be recognized without the boundary region 11S3 as shown in Fig. 28. However, when the color of the motif region 11S1 is similar to that of the region outside the design region, it is preferred to provide the boundary region 11S3 to emphasize the contour and facilitate recognition of the motif shape.

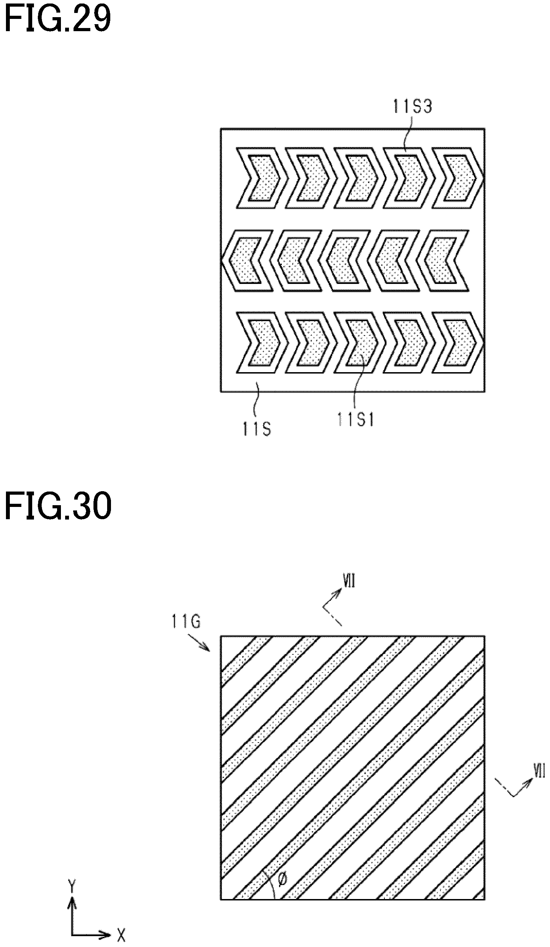

Fig. 29 shows an example of the case where the motif regions 11S1 are distributed across the entirety of the design region.

As shown in Fig. 29, when shapes, each of which does not have a meaning by itself, are distributed across the entirety of the design region and form a "pattern" as a whole, the respective pieces of the "pattern" may be regarded as motif regions 11S1. In this case, when the boundary region 11S3 is provided for each motif region 11S1, a region of the first surface 11S where the motif regions 11S1 are not positioned can be regarded as the background region 11S2. When the boundary region 11S3 is not provided in consideration of appearance of the entire design, a region between the plurality of motif regions 11S1 located close to each other may be regarded as the background region 11S2, or a region of the first surface 11S where the motif regions 11S1 are not provided may be regarded as the boundary region 11S3. When a distance between the closest points of the plurality of motif regions 11S1 is 1 mm or less, these motif regions 11S1 can be defined as being close to each other.

With reference to Figs. 30 to 32, modified examples of the grating structure 11G will be described.

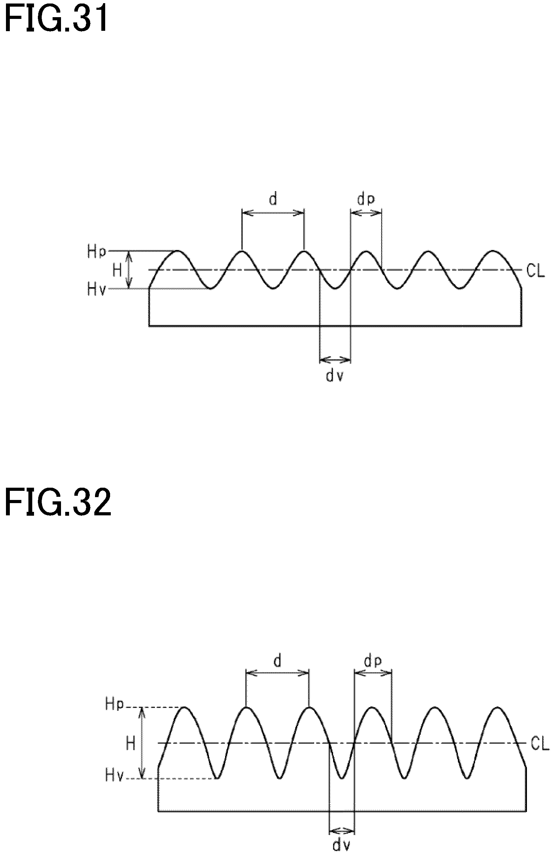

Fig. 30 is a view illustrating the grating structure 11G arranged on the XY plane at the azimuth angle $\phi$. Figs. 31 and 32 are cross-sectional views taken along the line VII-VII of Fig. 30, which is orthogonal to the grating structure 11G.

The structure shown in Fig. 31 is a basic structure. In Fig. 31, a height of the convex portion is Hp, a height of the concave portion is Hv, and a distance H between the height Hp and the height Hv is a structure height. When a center position CL between the convex portion and the concave portion is taken as a reference, a width of the convex portion located on the upper side of the center position CL is referred to as dp, and a width of the concave portion located on the lower side is referred to as dv. In the example shown in Fig. 31, the width dp and the width dv are equal to each other.

On the other, the structure shown in Fig. 32 is a modified example of the structure shown in Fig. 31. In the structure shown in Fig. 32, the width dp of the convex portion and the width dv of the concave portion around the center position CL are different from each other. The above effective refractive index varies depending on the ratio of the width dp and the width dv. When the effective refractive index changes, the resonance wavelength $\lambda$ that satisfies the phase matching condition shown in the formulas (4) to (7) changes, and the color observed changes accordingly.

Thus, the color observed changes depending on the value of variables included in the phase matching condition. In Figs. 31 and 32, the width ratio between the convex portion and the concave portion of the grating structure 11G has been described. In addition, the effective refractive index also changes depending on the azimuth angle $\phi$ and the grating period d of the grating structure 11G.

Further, even under a condition that satisfies the phase matching condition, light reflected by the convex portion and light reflected by the concave portion are different in interference of light depending on the structure height H of the grating structure 11G. Accordingly, the intensity of light observed, in other words, the saturation, which is a variable corresponding to the vividness, changes.

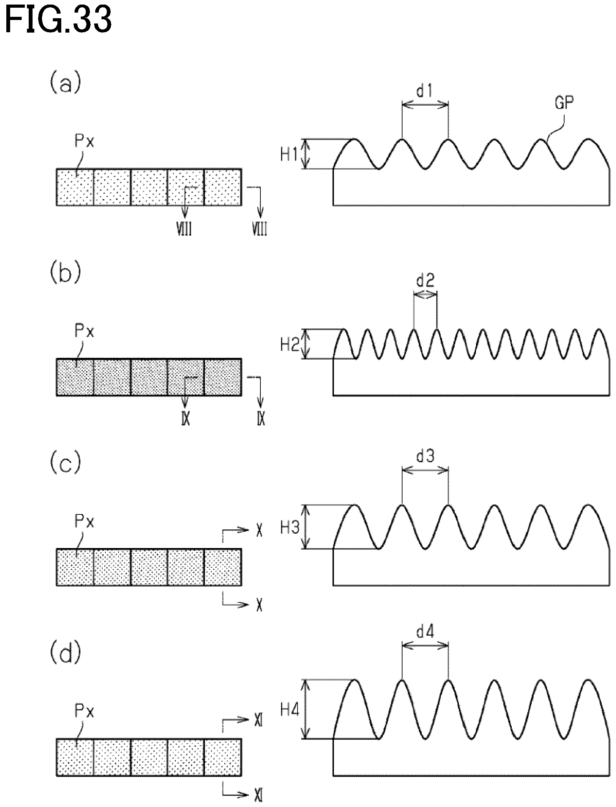

By changing at least one of these variables, hue and vividness of the motif region 11S1, the background region 11S2, and the boundary region 11S3 can be changed. Accordingly, variable color expression can be achieved. An example is shown in Fig. 33. The cells Px arranged in the X direction and the cross-sectional shape thereof are shown for the image elements 11R1 and 11R2 constituting the motif region 11S1, and the pattern elements 11P1 and 11P2 constituting the background region 11S2. Fig. 33(a) shows a planar structure of the image element 11R1 and the cross-sectional structure taken along the line VIII-VIII, Fig. 33(b) shows a planar structure of the image element 11R2 and the cross-sectional structure taken along the line IX-IX, Fig. 33(c) shows a planar structure of the pattern element 11P1 and the cross-sectional structure taken along the line X-X, and Fig. 33(d) shows a planar structure of the pattern element 11P2 and the cross-sectional structure taken along the line XI-XI.

In this example, the grating structures 11G of the cells Px in each element are uniform, which appears as if being solidly painted with a specific color. However, the cross-sections taken along the lines VIII-VIII to the line XI-XI are different for each element. For example, for the image element 11R1 and the image element 11R2, the grating periods d of the grating structure 11G are different (d1>d2), whereas the structure heights H are equal (H1=H2). On the other hand, the azimuth angles φ of the pattern elements are different from those of the image elements. Furthermore, for the pattern element 11P1 and the pattern element 11P2, the grating periods d of the grating structure 11G are equal (d3=d4), whereas the structure heights H are different (H3<H4).

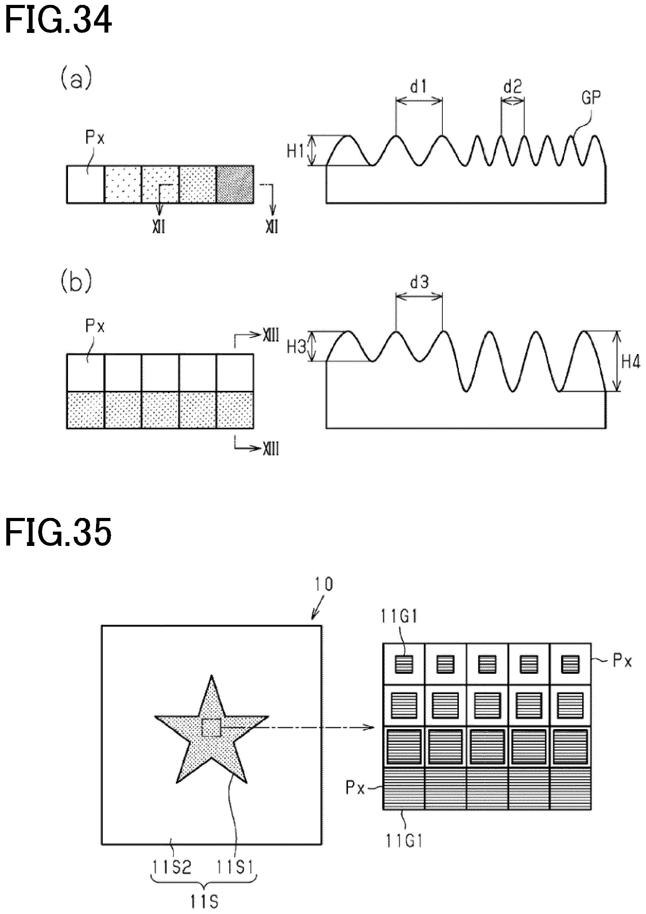

Fig. 34 is a view illustrating another modified example of the optical element 10. The cells Px arranged in the X direction or the Y direction and the cross-sectional shape thereof are shown for the image element 11R1 and the pattern elements 11P1. Fig. 34(a) shows a planar structure of the image element 11R1 and the cross-sectional structure taken along the line XII-XII, and Fig. 34(b) shows a planar structure of the pattern element 11P1 and the cross-sectional structure taken along the line XIII-XIII. In this example, in the image element 11R1, the grating period d partially changes. In the cross-section taken along the line XII-XII, the structure height H1 is constant, whereas the grating period d1 and the grating period d2 are different from each other.

Further, in the pattern element 11P1, the grating period d is constant, whereas the structure height H3 and the structure height H4 are different from each other. As described above, by changing any of the azimuth angle, the grating period, and the structure height of the grating structure, and the ratio between the concave portion and the convex portion of the grating structure in each of the elements, a gradation or a variation can be imparted to the hue. For example, when the optical element 10 displays petals such as those shown in Fig. 2, the variation in hue can be changed from the center toward the end of the petal to express a pseudo three-dimensional effect.

Fig. 35 is a view illustrating another modified example of the optical element 10 of the present embodiment. Fig. 35 shows a structure of the optical element 10 in plan view, as viewed perpendicular to the observation surface 10S as in Fig. 3.

As shown in Fig. 35, in the plurality of cells Px, some cells Px may include the first grating structure 11G1 located in a part of each cell Px in plan view, as viewed perpendicular to the first surface 11S. In the example described above in connection with Fig. 3, the first grating structure 11G1 is located on the entire surface of each cell Px. This is merely an example, and the first grating structure 11G1 may be partially located in each cell Px. The ratio of the area of the first grating structure 11G1 to the entire area of the cell Px is an area ratio. The plurality of cell Px may include the cells Px having different area ratios.

The higher the area ratio of the cell Px, the higher the luminance of the cell Px. Accordingly, when the plurality of cells Px include the cells Px having different area ratios, a variation in luminance in the same hue can be produced in the color exhibited by the motif region 11S1. Further, the area ratio may change gradually. Accordingly, the motif region 11S1 can display a pseudo three-dimensional image. In this case, the area ratio can be determined based on the level of the luminance, that is, gradient in the three-dimensional image to be displayed by the motif region 11S1.

Further, the optical element 10 includes the motif region 11S1 and the background region 11S2, but does not include the boundary region 11S3. Further, in the optical element 10, the motif region 11S1 and the background region 11S2 are in contact with each other.

In the optical element 10 of the present embodiment, the area ratio of the cell Px decreases from the center toward the end of the motif region 11S1, and the outer edge of the motif region 11S1 has the smallest area ratio.

[Second Embodiment]

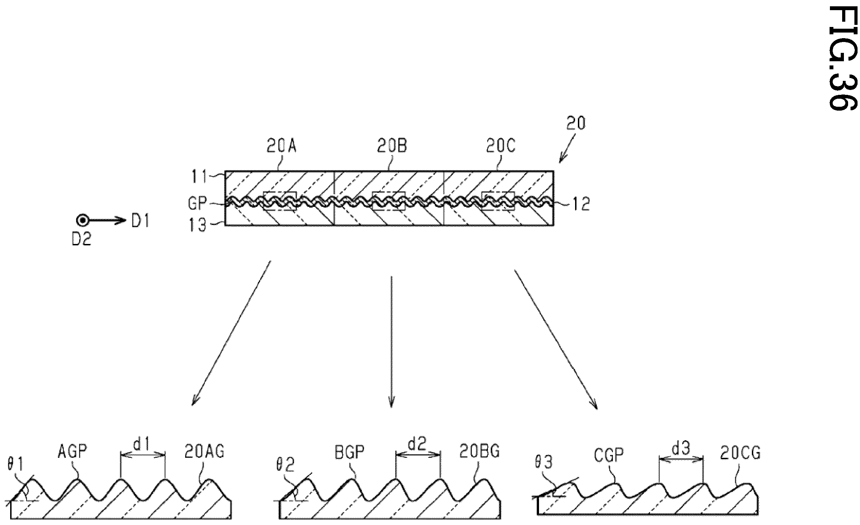

With reference to Figs. 36 to 38, a second embodiment of the optical element will be described. The second embodiment is not in accordance with the claimed invention. The optical element of the second embodiment differs from the optical element of the first embodiment in the shape of the grating pattern included in the grating structure. Therefore, the following description will be given focusing on this difference, while components of the optical element of the second embodiment corresponding to those of the optical element of the first embodiment are denoted by the same reference signs as those of the first embodiment, and the specific description thereof will be omitted. Further, for convenience of illustration, Figs. 36 to 38 illustrate the grating structure as a structure having an array of the convex portions that protrude in a direction away from the flat surface. In addition, in the optical element of the second embodiment, the color of the grating structure observed by the observer may be based on the diffracted light of a higher order than zero-order diffracted light. Therefore, in the following description, the angle at which the effect of color produced by the grating structure is achieved with the highest efficiency is defined as mth-order, and the diffracted light of mth-order is defined as an mth-order diffracted light.

As described above, the grating pattern includes a plurality of grating structures 11G. The direction in which the plurality of grating structures are arrayed is a first direction D1, and a direction perpendicular to the first direction D1 is a second direction D2. In each grating structure, the shape in the cross-section parallel to the first direction D1 and perpendicular to the plane in which the first layer 11 extends is a cross-sectional shape. The grating pattern includes a group of gratings repeatedly arranged. In the group of gratings, two or more grating structures having different cross-sectional shapes are arrayed in the second direction D2. The details of the optical element of the present embodiment will be described below.

As shown in Fig. 36, similar to the optical element 10 of the first embodiment, an optical element 20 includes the first layer 11, the second layer 12, and the third layer 13. The optical element 20 includes three portions arranged in the first direction D1. That is, the optical element 20 includes a first portion 20A, a second portion 20B, and a third portion 20C. The first portion 20A, the second portion 20B, and the third portion 20C are arranged in this order in a direction in which the grating structures are arranged.

In the grating pattern, a plurality of grating structures 11G included in the respective portions have the same cross-sectional shape. On the other hand, the cross-sectional shape of the grating structure included in each portion is different from that of other portions. In the grating pattern, the portions included in the first portion 20A, the second portion 20B, and the third portion 20C are referred to as a first grating 20AG, a second grating 20BG, a third grating 20CG, respectively.

The first grating 20AG includes a plurality of first grating structures AGP. The plurality of first grating structures AGP are repeated in the first direction D1. The cross-sectional shape of the first grating 20AG is a corrugated shape. The grating period of the first grating 20AG is a first period d1. The first grating structure AGP has a cross-sectional shape in the first direction D1 in which one convexity is sandwiched between two concavities. The first grating structure AGP includes an inclined surface between one of the two concavities and the convexity, and another inclined surface between the convexity and the other of the two concavities. Each inclined surface is angled relative to a plane in which the first layer 11 extends.

In the cross-section parallel to the first direction D1, an angle formed between the tangent to one of the inclined surfaces and a straight line connecting the plurality of concavities is a first tangent angle $\theta 1$. The straight line connecting the plurality of concavities is a straight line substantially parallel to the surface of the first layer 11. Further, the first tangent angle $\theta 1$ is equal to an angle formed between a plane in which the first layer 11 extends and the inclined surface.

The second grating 20BG includes a plurality of second grating structures BGP. The plurality of second grating structures BGP are repeated in the first direction D1. The cross-sectional shape of the second grating 20BG is a corrugated shape. The grating period of the second grating 20BG is a second period d2. The second period d2 is equal to the first period d1. Similar to the first grating structure AGP, the second grating structure BGP has a cross-sectional shape in the first direction D1 in which one convexity is sandwiched between two concavities. The second grating structure BGP includes an inclined surface between one of the two concavities and the convexity, and another inclined surface between the convexity and the other of the two concavities. Each inclined surface is angled relative to a plane in which the first layer 11 extends.

In the cross-section parallel to the first direction D1, an angle formed between the tangent to one of the inclined surfaces and a straight line connecting the plurality of concavities is a second tangent angle $\theta 2$. The second tangent angle $\theta 2$ is an angle different from the first tangent angle $\theta 1$. Further, the second tangent angle $\theta 2$ is equal to an angle formed between the plane in which the first layer 11 extends and the inclined surface. In the present embodiment, the second tangent angle $\theta 2$ is smaller than the first tangent angle $\theta 1$. On the other hand, as described above, the second period d2 of the second grating 20BG is equal to the first grating period d1 of the first grating 20AG. Accordingly, in the cross-section parallel to the first direction D1, the cross-sectional shape of the second grating structure BGP is different from the cross-sectional shape of the first grating structure AGP.

The third grating 20CG includes a plurality of third grating structures CGP. The plurality of third grating structures CGP are repeated in the first direction D1. The cross-sectional shape of the third grating 20CG is a corrugated shape. The grating period of the third grating 20CG is a third period d3. The third period d3 is equal to the first period d1 and the second period d2. Similar to the first grating structure AGP, the third grating structure CGP has a cross-sectional shape in the first direction D1 in which one convexity is sandwiched between two concavities. The third grating structure CGP includes an inclined surface between one of the two concavities and the convexity, and another inclined surface between the convexity and the other of the two concavities. Each inclined surface is angled relative to a plane in which the first layer 11 extends.

In the cross-section in parallel to the first direction D1, an angle formed between the tangent to one of the inclined surfaces and a straight line connecting the plurality of concavities is a third tangent angle $\theta 3$. The third tangent angle $\theta 3$ is an angle different from the first tangent angle $\theta 1$ and different from the second tangent angle $\theta 2$. Further, the third tangent angle $\theta 3$ is equal to an angle formed between the plane in which the first layer 11 extends and the inclined surface. In the present embodiment, the third tangent angle $\theta 3$ is smaller than the first tangent angle $\theta 1$ and is smaller than the second tangent angle θ2. On the other hand, as described above, the third period d3 of the third grating 20CG is equal to the first period d1 and the second period d2. Accordingly, in the cross-section parallel to the first direction D1, the cross-sectional shape of the third grating structure CGP is different from both the cross-sectional shape of the first grating structure AGP and the cross-sectional shape of the second grating structure BGP.

That is, in the present embodiment, the cross-sectional shape described above in the respective grating patterns includes an inclined surface that is angled relative to the plane in which the first layer 11 extends. The plurality of grating patterns include the grating structure having an inclination to the first layer 11, each inclination being different from the other.

According to the above grating pattern, the angle at which incident light entering the optical element 20 is diffracted can be changed by changing the tangent angles θ1, θ2, and θ3 of the respective inclined surfaces. That is, the angle at which the mth-order diffracted light is emitted from the gratings 20AG, 20BG, and 20CG can be changed by changing the tangent angles θ1, θ2, and θ3 of the first grating 20AG, the second grating 20BG, and the third grating 20CG, respectively. Accordingly, the angular range in which the mth-order diffracted light is emitted can be increased compared with the case where the tangent angles are the same in all the plurality of grating patterns. In other words, the observation angle range in which the observer can observe the mth-order diffracted light can be widened. Since the gratings 20AG, 20BG, and 20CG have different cross-sectional shapes, but have the same grating period, colors exhibited by the gratings 20AG, 20BG, and 20CG are substantially the same. Therefore, the mth-order diffracted lights emitted from the gratings 20AG, 20BG, and 20CG, when combined, do not produce white light.

In the first direction D1, the width of the gratings 20AG, 20BG, and 20CG can be 300 μm or less, and preferably 85 μm or less. When the width of the gratings 20AG, 20BG, and 20CG is 300 μm or less, the gratings 20AG, 20BG, and 20CG cannot be recognized by the resolution of the human eye. Therefore, the observer cannot recognize that each of the gratings 20AG, 20BG, and 20CG diffracts light at different angles.

In general, it is known that the gap that can be recognized by a person with visual acuity of 1.0 with a visual angle of 1 minute of arc at a distance of 5 m from an observation target is 1.454 mm. This has been explained using the Landolt ring. 1 minute of arc is 1/60 of 1 degree. On the assumption that the observer observes the optical element 20 from a position 30 cm away from the optical element 20, the gap that can be recognized by the observer's eye, that is, a resolution R, can be derived from the formula (13) as described below.

$$R = 1454 \times (30/500) \, (\mu m) \, \dots \text{ formula (13)}$$

In the right side of the formula (13), the unit of the first term is μm, the unit of the second term is cm. From the formula (13), the resolution R is 87.24 μm. Therefore, when the width of the gratings 20AG, 20BG, and 20CG is 85 μm or less, it is possible to increase the certainty that the gratings 20AG, 20BG, and 20CG cannot be recognized with the resolution of the human eye. For this reason, when the width of the gratings 20AG, 20BG, and 20CG is 85 μm or less, it is possible to reduce non-smooth features such as jagged edges in the image.

Since the cross-sectional shapes of the grating structures AGP, BGP, and CGP are corrugated shapes having different tangent angles, the direction in which the mth-order diffracted light is emitted can be controlled by the tangent angles. On the other hand, if the cross-sectional shapes of the grating structures are rectangular shapes composed of a plane parallel to the surface of the optical element 20 and a plane orthogonal to the surface, the mth-order diffracted light, that is, the zero-order diffracted light is emitted in a direction of specular reflection of the incident light. For example, when the incidence angle of light incident on the surface of the optical element 20 is 45°, the emission angle of specularly reflected light is also 45°. Accordingly, light emitted from the optical element 20 is not observed by the observer unless the optical element 20 is observed at an observation angle of 45°.

When the optical element 20 is observed at the emission angle of specularly reflected light, the specularly reflected light of light emitted from the light source toward the optical element 20 is also observed by the observer. Accordingly, it may be difficult for the observer to observe the light emitted by the grating structure. Further, depending on the position of the light source relative to the optical element 20, it may be difficult to observe the optical element 20 at the specular reflection angle. In this regard, since the direction in which the mth-order diffracted light is emitted can be controlled by the tangent angle, the degree of freedom of the angle at which the mth-order diffracted light is emitted by the optical element 20 increases. This contributes to solution of the above problem.

The grating pattern including three grating structures may have the following structure.

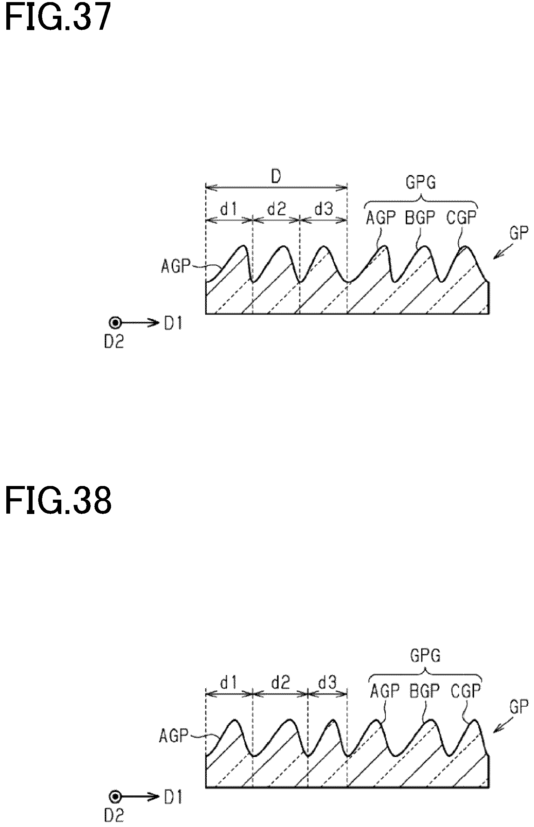

As shown in Fig. 37, the grating pattern includes the first grating structure AGP, the second grating structure BGP, and the third grating structure CGP. The first grating structure AGP, the second grating structure BGP, and the third grating structure CGP are arranged in this order in the first direction D1. Accordingly, the first grating structure AGP, the second grating structure BGP, and the third grating structure CGP form a single group of gratings GPG. In the grating pattern, a plurality of groups of gratings GPG are repeated in the first direction D1.

In the first direction D1, a grating period of the first grating structure AGP is a first period d1, a grating period of the second grating structure BGP is a second period d2, and a grating period of the third grating structure CGP is a third period d3. The first period d1, the second period d2, and the third period d3 are mutually equal.

In the first direction D1, the period D of the group of gratings GPG is preferably 20 $\mu$m or more. The larger the period D of the group of gratings GPG, the higher the order of diffracted light that is included in the same range of observation angle. In other words, the larger the period D of the group of gratings GPG, the smaller the observation angle range in which the same order diffracted light is included. Accordingly, by reducing the difference between the observation angle of the mth-order diffracted light and the observation angle of other diffracted lights, the observer can observe a plurality of diffracted lights together with the mth-order diffracted light. Thus, the observation angle range in which the observer can observe light emitted by the optical element 20 is widened.

For example, as described above, in a diffraction grating having a rectangular cross-sectional shape, when an angle formed between the incident light and the radiation of the diffraction grating is defined as an angle $\alpha$, and an angle formed between the diffracted light and the normal to the diffraction grating is defined as an angle $\beta$, the formula (14) holds. The angle $\alpha$ is an incidence angle, and an angle $\beta$ is a diffraction angle.

$$d(\sin\alpha + \sin\beta) = m\lambda \ldots \text{formula (14)}$$

In the formula (14), d is a period of the diffraction grating, m is a diffraction order, and $\lambda$ is a wavelength of light. The unit of the period and wavelength is nm. Further, in the grating structure 11G shown in Fig. 37, the period d corresponds to the period D of the group of gratings GPG described above. In the formula (14), when the angle $\alpha$ is set to 45°, the wavelength $\lambda$ is set to 500 nm, and the period d is set to 5000 nm, the diffraction order m and the angle $\beta$ are as follows.

$$(m, \beta) = (1, -37.4), (2, -30.5), (3, -24.0) \ldots$$

Further, when the period d is changed to 10,000 nm, the diffraction order m and the angle $\beta$ are as follows.

$$(m, \beta) = (1, -41.1), (2, -37.4), (3, -33.9) \ldots$$

Further, when the period d is changed to 20,000 nm, the diffraction order m and the angle $\beta$ are as follows.

$$(m, \beta) = (1, -43.0), (2, -41.1), (3, -39.2) \ldots$$

As described above, with an increase in the period d, the difference in the angle $\beta$ between diffracted lights having different diffraction orders decreases.

Here it is assumed that the pupil diameter of human eye is 5 mm, and the distance at which the observer observes the optical element 20 is 30 cm. In this case, among the light emitted from a point in the optical element 20, light included in the range of the observation angle of approximately 1° enters the observer's eye. That is, the observer observes the result of integration of light in the range of observation angle of approximately 1°. That is, when the diffracted light having a specific wavelength is included in the observation angle range of approximately 1°, the diffraction efficiency increases within this range of observation angle. Further, in the case where the observer observes the optical element 20 while changing the observation angle by tilting the optical element 20, the color exhibited by the optical element 20 can be easily recognized by the observer when the color exhibited by the optical element 20 is held at a specific color for a period during which the observer changes the observation angle by 2° or more. Accordingly, the above effect can be achieved by the optical element 20 configured to emit at least two diffracted lights of different orders in the range of an observation angle of 2°. In this regard, the above effect can be achieved when the period D of the optical element 20 is 20 $\mu$m or more.

The grating pattern including three grating structures may have the following structure.

As shown in Fig. 38, the grating structure 11G includes the first grating structure AGP, the second grating structure BGP, and the third grating structure CGP. The first grating structure AGP, the second grating structure BGP, and the third grating structure CGP are arranged in this order in the first direction D1. Accordingly, the first grating structure AGP, the second grating structure BGP, and the third grating structure CGP form a single group of gratings GPG. In the grating pattern, a plurality of groups of gratings GPG are repeated in the first direction D1.

A grating period of the first grating structure AGP is a first period d1, a grating period of the second grating structure BGP is a second period d2, and a grating period of the third grating structure CGP is a third period d3. The first period d1, the second period d2, and the third period d3 are different from each other. The difference in the grating period between the grating structures adjacent to each other in the first direction D1 can be smaller than 20 nm. For example, the first period d1 can be set to 300 nm, the second period d2 can be set to 310 nm, and the third period d3 can be set to 290 nm.

Since the grating periods are different between the grating structures, the diffraction angles are different between the grating structures. The smaller the difference in grating period between the grating structures, the smaller the difference in diffraction angle. As described above, when the difference in grating period between the grating structures adjacent to each other in the first direction D1 is smaller than 20 nm, the diffraction angles of the mth-order diffracted light emitted from the grating structures are substantially equal to each other. As a result, the observer cannot resolve the mth-order diffracted light emitted from the respective grating structures. Accordingly, the range of the observation angle at which the observer can observe light emitted by the optical element 20 can be widened.

As described above, according to the second embodiment of the optical element, the following advantageous effects can be obtained.

(1) Compared with a case where the plurality of grating patterns have the same cross-sectional shapes taken parallel to the first direction D1, the range of observation angle at which the observer can observe light emitted from the grating structure 11G can be widened.

(2) Compared with a case where the plurality of grating patterns have the same inclination of the inclined surfaces in the cross-sectional shapes taken parallel to the first direction D1, the range of observation angle at which the observer can observe light emitted from the grating structure 11G can be widened according to the difference in inclination between the grating patterns.

[Modifications of Second Embodiment]

The second embodiment described above can be modified and implemented as below.

[Cross-sectional Shape]

· The grating structure 11G may include grating structures having different cross-sectional shapes. Further, the cross-sectional shapes may include four or more types of grating structures. Further, a plurality of types of grating structures may be randomly positioned in the grating pattern.

· The cross-sectional shape of the grating structure 11G is not limited to the corrugated shape described above. Even when the grating structure 11G has a shape other than the corrugated shape, an effect similar to the above (1) can be obtained as long as the pattern grating includes the grating structures having different cross-sectional shapes.

[Third Embodiment]

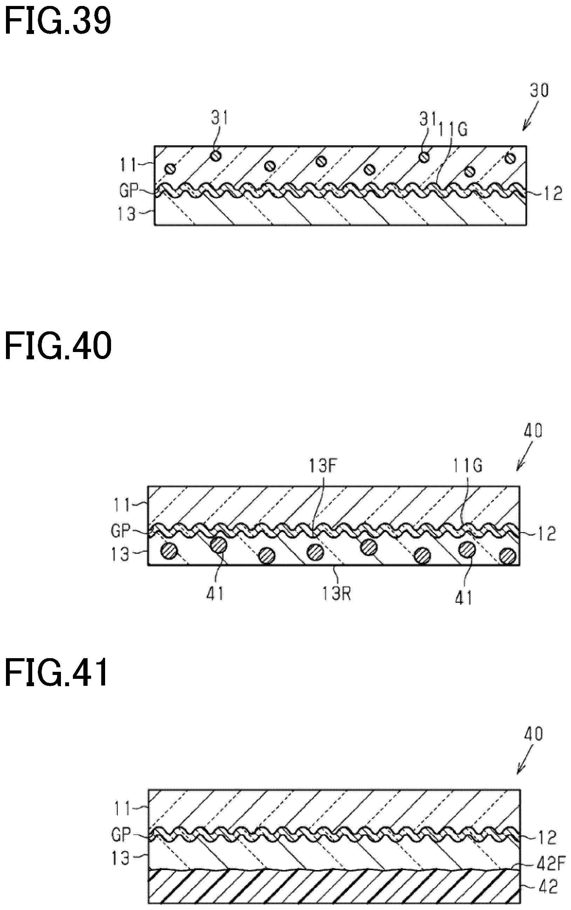

With reference to Fig. 39, a third embodiment of the optical element will be described. The third embodiment is not in accordance with the claimed invention. The optical element of the third embodiment differs from the optical element 10 of the first embodiment in that the first layer contains a filler. Therefore, the following description will be given focusing on this difference, while the components of the optical element of the third embodiment corresponding to those of the optical element of the first embodiment are denoted by the same reference signs as those of the first embodiment, and specific description thereof will be omitted.

As shown in Fig. 39, the first layer 11 of an optical element 30 includes a filler 31 dispersed in a resin constituting the first layer 11. The filler 31 has an average particle size of 400 nm or less. At least part of light incident on the first layer 11 is dispersed by the filler dispersed in the first layer 11. Accordingly, the light incident on the grating structure 11G includes lights having different incidence angles. As a result, each grating structure 11G in the grating pattern GP reflects light in the specular reflection direction according to the incidence angle of light incident on the grating structure 11G. The light reflected by the grating structure 11G is emitted outside the optical element 30 without being scattered by the filler 31, or after being scattered by the filler 31. Therefore, the range of emission angle of light emitted by the optical element 30 increases compared with the case where the first layer 11 does not contain a filler. As a result, the observation angle range in which the observer can observe the color exhibited by the optical element 30 is widened.

As described above, the filler 31 has an average particle size of 400 nm or less. This suppresses occurrence of Mie scattering, which increases transparency of the first layer 11 to some extent. The shape of the filler 31 is not limited to a sphere. Therefore, in the present embodiment, the average value of a plurality of diameters that can be defined in each filler 31 is the average particle size of each filler 31. The followings are known for the relationship between the size of a scatterer such as the filler 31 and a scattering state. When the average particle size of the scatterer is within the range of 400 nm or more and 700 nm or less, Mie scattering occurs due to the scatterer. In Mie scattering, since light included in the visible range is scattered to the same extent regardless of the wavelength of light, the light scattered by Mie scattering is recognized as white light. Further, in Mie scattering, the particle size of the scatterer has an effect on the scattering angle of light. In Mie scattering, the larger the particle size of the scatterer, the stronger the scattering in the traveling direction of light.

On the other hand, when the scatterer is smaller than 1/10 of the wavelength of light, Rayleigh scattering occurs.

In Rayleigh scattering, the direction in which light is scattered does not depend on the particle size of the scatterer. In Rayleigh scattering, light is scattered in a figure eight around the traveling direction of light regardless of the particle size of the scatterer. Further, in Rayleigh scattering, the shorter the wavelength of light, the stronger the scattering of light.

In the present embodiment, in which the first layer 11 that includes the filler 31 as a scatterer dispersed therein is required to be transparent, it is required that the average particle size of the filler 31 is at least equal to or smaller than the wavelength of light, and scattering of the filler 31 is Rayleigh scattering. In this case, the average particle size of the filler 31 can be 400 nm or less. When the average particle size of the filler 31 is D, and the wavelength of light is λ, the scattering cross-sectional area α can be calculated by the formula (15) described below.

$$\alpha = \pi D/\lambda \ \dots \ \text{formula (15)}$$

By using the formula (15), it is possible to simply determine whether the scattering phenomenon caused by the filler 31 is Rayleigh scattering or Mie scattering. It is known that Rayleigh scattering mainly occurs when the scattering cross-sectional area α is 0.4 or more, whereas Mie scattering occurs when the scattering cross-sectional area α is larger than 0.4 and smaller than 3. Accordingly, when light incident on the filler 31 is in the visible range, for example, at a light wavelength of 400 nm, and the average particle size of the filler 31 is 50 nm or less, Rayleigh scattering mainly occurs, due to the filler 31. Therefore, light incident on the first layer 11 can be scattered by the filler 31 while the first layer 11 remains highly transparent.

As described above, according to the optical element of the third embodiment, the following advantageous effects can be obtained.

(3) The range of emission angle of light emitted by the optical element 30 increases compared with the case where the first layer 11 does not contain a filler. Therefore, the observation angle range in which the observer can observe the color exhibited by the optical element 30 is widened.

[Fourth Embodiment]

With reference to Figs. 40 and 41, a fourth embodiment of the optical element will be described. The fourth embodiment is not in accordance with the claimed invention. The optical element of the fourth embodiment differs from the optical element 10 of the first embodiment in the state of the surface of the third layer 13 on a side opposite to that in contact with the second layer 12. Therefore, the following description will be given focusing on this difference, while the components of the optical element of the third embodiment corresponding to those of the optical element 10 of the first embodiment are denoted by the same reference signs as those of the first embodiment, and specific description thereof will be omitted. In the following description, a first example and a second example in the fourth embodiment will be sequentially described.

[First Example]

As shown in Fig. 40, in an optical element 40, the third layer 13 is an adhesive layer having thermoplasticity. The third layer 13 includes a filler 41 dispersed in a portion closer to the surface on a side opposite to that in contact with the second layer 12 than the center in the thickness direction of the third layer 13 is. A surface of the third layer 13 in contact with the second layer 12 is referred to as a first surface 13F, and a surface facing away from the first surface 13F is a second surface 13R. As described above, in the third layer 13, the filler 41 is preferably located closer to the second surface 13R than the center in the thickness direction of the third layer 13 is, and is preferably located in proximity to the second surface 13R.

As described above, the third layer 13 is an adhesive layer having thermoplasticity. Materials forming the third layer 13 may be an adhesive having thermoplasticity. Since the third layer 13 is an adhesive layer having thermoplasticity, the optical element 40 can be transferred to a transfer target by applying heat and pressure to the optical element 40 while the third layer 13 is in contact with the transfer target. In this process, as the heat and pressure are applied to the third layer 13, a concavo-convex structure due to the filler 41 is formed on the second surface 13R of the third layer 13. Consequently, a concavo-convex structure is also formed on the first surface 13F of the third layer 13. Accordingly, a concavo-convex structure is also formed on a portion of the first layer 11 and the second layer 12 which overlaps the concavo-convex structure formed on the third layer 13 as viewed in the thickness direction of the optical element 40. As a result, a concavo-convex structure attributable to the filler 41 is added to the grating pattern GP at the interface between the first layer 11 and the second layer 12. The transfer target may be, for example, a bill, a passport, or a card.

A concavo-convex structure at the interface between the first layer 11 and the second layer 12 can be adjusted by the size of the filler 41, the thickness of each layer 11, 12, and 13, and the heat and pressure conditions in transfer of the optical element 40.

Since the concavo-convex structure attributable to the filler 41 is added to the grating pattern GP, the plurality of grating structures 11G constituting the grating pattern GP include the grating structures 11G having different incidence angles of light entering the grating structures 11G. Each grating structure 11G reflects the mth-order diffracted light at an emission angle depending on the incidence angle of light in the grating structure 11G. The range of emission angle at which each grating structure 11G emits the mth-order diffracted light varies depending on the curvature of the concavo-convex structure added to the grating structure 11G. In other words, the observation angle at which the observer can observe the color exhibited by the grating pattern GP varies depending on the curvature of the concavo-convex structure 11G.

As described above, the color exhibited by the optical element 40 is preferably maintained in the range of 2° or more of the observation angle. On the other hand, when the observation angle range in which the observer can observe the color exhibited by the optical element 40 is too large, the intensity of light emitted by the optical element 40 at each observation angle becomes low. Therefore, the observation angle range in which the observer can observe the color exhibited by the optical element 40 is preferably in the range of 2° or more and 10° or less, and more preferably in the range of 2° or more and 5° or less. Such an observation angle range preferably includes the emission angles of the mth-order diffracted lights emitted by all the grating patterns GP.

Therefore, it is preferred that the curvature of the concavo-convex structure attributable to the filler 41 is not excessively large. The following two methods can prevent the curvature of the concavo-convex structure attributable to the filler 41 from being excessively large. In the first method, the filler 41 is uniformly dispersed in the third layer 13, and the heat and pressure conditions are controlled so as not to excessively increase the curvature of the concavo-convex structure. In the second method, a filler having a flat shape rather than a spherical shape is used as the filler 41, and the filler 41 is dispersed in the third layer 13 such that the diameter of the filler 41 decreases in the thickness direction of the third layer 13.

[Second Example]

As shown in Fig. 41, the optical element 40 further includes a fourth layer 42 that is in contact with the third layer 13. The fourth layer 42 includes a first surface 42F that is in contact with the third layer 13. The first surface 42F includes a concavo-convex structure.

The concavo-convex structure on the first surface 42F of the fourth layer 42 can be formed by various methods. For example, in transfer of the third layer 13 onto the fourth layer 42, which is a transfer target, a concavo-convex structure can be formed on the first surface 42F of the fourth layer 42 so as to follow the third layer 13 deformed by the heat and pressure. In this case, an adhesive layer having thermoplasticity can be used for the third layer 13. Further, for example, paper or resin film can be used for the fourth layer 42. Alternatively, a concavo-convex structure can be formed on the first surface 42F of the fourth layer 42 by dispersing fine particles or fibers in the fourth layer 42. Further, a concavo-convex structure can also be formed on the first surface 42F of the fourth layer 42 by defoaming or unevenness caused during film formation of the fourth layer 42. In the second example, similar to the first example, a concavo-convex structure attributable to the first surface 42F of the fourth layer 42 can be added to the grating structure 11G. Accordingly, the optical element 40 of the second example can also achieve the same effect as that of the optical element 40 of the first example.

When the fourth layer 42 is a transfer target, and the fourth layer 42 includes fine particles, the average particle size of the fine particles is preferably substantially the same as the thickness of the third layer 13, which is an adhesive layer. Further, in transfer to the fourth layer 42, heat and pressure conditions can be adjusted so as not to excessively increase the concavo-convex structure added to the grating structure 11G.

In addition, the fourth layer 42 made of paper can be used as the fourth layer 42 in which fibers are dispersed. In this case, the fibers constituting the fourth layer 42 are arranged parallel to the first surface 42F of the fourth layer 42. Pulp fibers have a diameter of 20 μm or more and 50 μm or less, and a length of approximately 1 mm or more and 5 mm or less. Therefore, there may be a case where the concavo-convex structure added to the grating pattern GP becomes excessively large. On the other hand, cellulose nanofibers have a diameter of 4 nm or more and 100 nm or less, and a length of approximately 5 μm or more. Therefore, the concavo-convex shape added to the grating structure 11G can be prevented from becoming excessively large. Cellulose nanofibers are fibers obtained by decomposing pulp fibers.

As described above, according to the optical element of the fourth embodiment, the following advantageous effects can be obtained.

(4) Since the concavo-convex structure due to the filler 41 is added to the grating pattern GP, a plurality of grating structures 11G can include the grating structures 11G having different incidence angles of light entering the grating structures 11G. Accordingly, since the emission angles at the grating structures 11G are also different, the range of observation angle at which light emitted from the grating pattern GP is observed can also be widened.

(5) Since the concavo-convex structure due to the first surface 42F of the fourth layer 42 is added to the grating pattern GP, a plurality of grating structures 11G can include the grating structures 11G having different incidence angles of light entering the grating structures 11G. Accordingly, since the emission angles at the grating structures 11G are also different, the range of observation angle at which light emitted from the grating pattern GP is observed can also be widened.

[Fifth Embodiment]

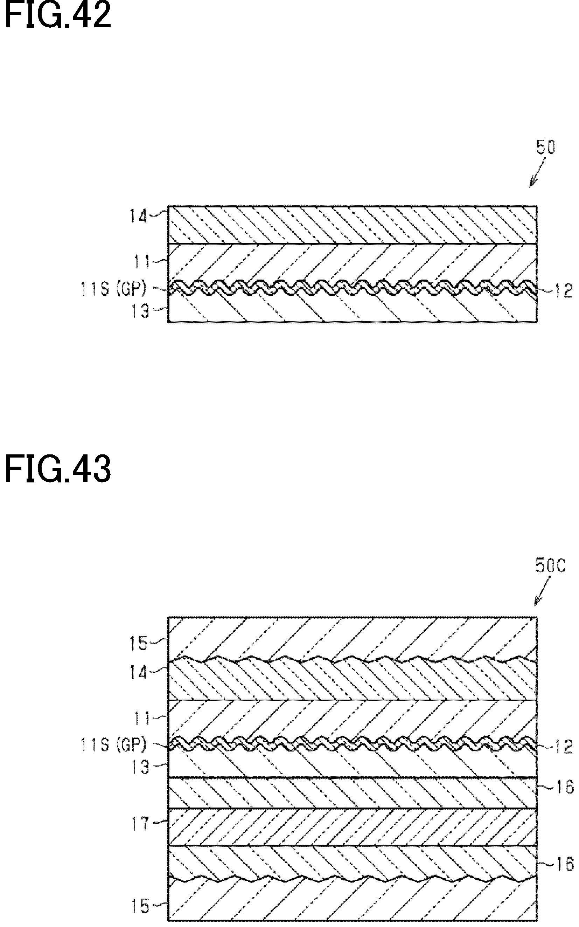

With reference to Figs. 42 and 43, a fifth embodiment of the optical element will be described. The optical element of the fifth embodiment of the present invention differs from the optical element of the first embodiment in that a resin layer is provided in addition to the first to third layers. Therefore, the following description will be given focusing on this difference, while the components of the optical element of the fifth embodiment corresponding to those of the optical element 10 of the first embodiment are denoted by the same reference signs as those of the optical element 10 of the first embodiment, and the specific description thereof will be omitted.

[First Example]

As shown in Fig. 42, an optical element 50 includes a resin layer 14 on the opposite side of the first layer 11 to the second layer 12. The resin layer 14 is in contact with the first layer 11. The first layer 11 has a hardness higher than the hardness of the third layer 13 and the hardness of the resin layer 14. In the laminate of these layers, the thickness of the second layer 12 is smaller than the thicknesses of other layers. Therefore, the hardness of the second layer 12 is ignored since it can be regarded as not having a significant effect on the properties of the optical element 50.

For example, in production of a medium such as a card having the first layer 11, the second layer 12, the third layer, and the resin layer 14, a fine concavo-convex structure of each layer or a concavo-convex structure of the filler may be added to the grating pattern GP during lamination of a plurality of layers that constitute the card. In this case, the resin layer 14 and the third layer 13, which are made of a relatively elastic material, can absorb external force. Further, the first layer 11, which is made of a material having a hardness higher than the hardness of these layers, can prevent the fine concavo-convex structure from influencing the region of the grating pattern GP when an external force is applied to the laminate. Accordingly, it is possible to prevent deformation of the shape of the grating structure 11G of the grating pattern GP, and maintain the purity of the color and the intensity of color development of the color observed in a specific direction.

In order to achieve the above hardness, the material forming the first layer 11 is an ultraviolet curable resin, and the material forming the third layer 13 and the resin layer 14 is a thermoplastic resin. In addition, the effect of the hardness of the first layer 11 can be further enhanced by making the thickness of the first layer 11 larger than the structure height of the grating structure 11G formed on the first layer 11. The thickness of the first layer 11 is in a range of 1 $\mu$m or more and 10 $\mu$m or less.

Further, the resin layer 14 may include the filler described above.

[Second Example]

Fig. 43 shows an example of a structure of a card 50C including a structure of the first example.

In the example shown in Fig. 43, for example, the first layer 11 is a molded layer, the second layer 12 is a reflective layer, the third layer 13 is an adhesive layer, and the resin layer 14 is a peeling layer. The laminate of these layers is transferred to an imprint layer 16, and then a white layer 17 and another imprint layer 16 are laminated on the imprint layer 16 in this order. Then, the resin layer 14, which is the uppermost layer, and the imprint layer 16, which is the lowermost layer, are each laminated with a protective layer 15. Thus, the card 50C shown in Fig. 43 can be obtained.

The imprint layer 16 is made of a material that becomes black by reacting with a laser beam, for example. The imprint layer 16 can be made of a material that is carbonized by being irradiated with a laser beam and becomes black. After lamination described above, identification information and biometric information such as a facial image can be imprinted on the imprint layer 16. In addition, the white layer 17 is preferably formed of a substrate made of polycarbonate having high thermal stability. Printing may also be applied to the surface of the white layer 17.

The protective layer 15 includes a concavo-convex structure on a surface in contact with the resin layer 14. Accordingly, after lamination as described above, an effect of scattering the light incident on the card 50C via the protective layer 15 is imparted to the card 50C. Thus, the observation angle range in which the observer can observe the light emitted from the card 50C can be widened. In this case, the first layer 11 can have at least one of the hardness described in the first example and the thickness described in the first example. Accordingly, while reducing the influence of the concavo-convex structure of the protective layer 15 on the shape of the grating pattern GP, that is, while maintaining the clear hue of light emitted from the card 50C, the angular range at which the light is observed can be widened.

[Sixth Embodiment]

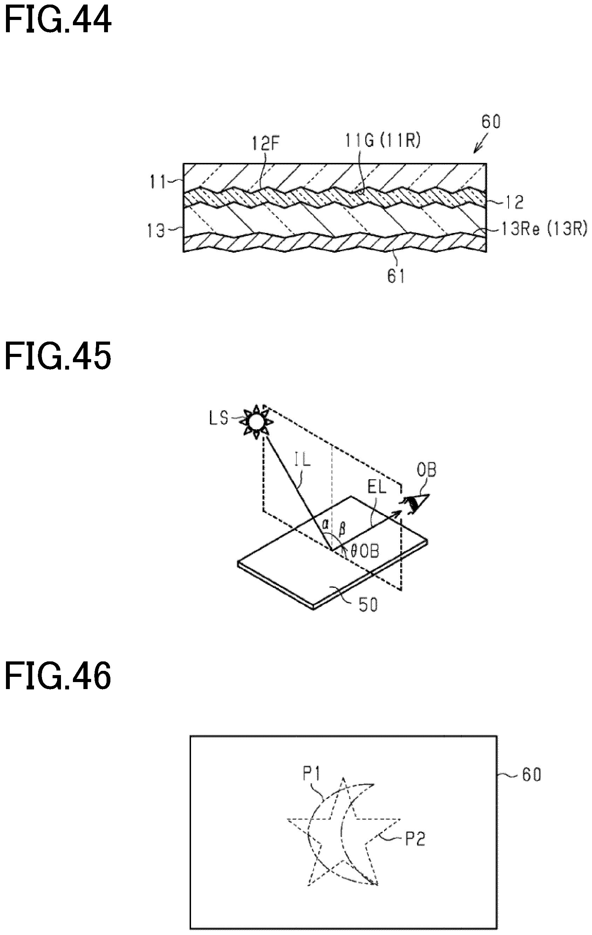

With reference to Figs. 44 to 50, a sixth embodiment of the optical element will be described. The sixth embodiment is not in accordance with the claimed invention. The optical element of the sixth embodiment differs from the optical element of the first embodiment in that a relief layer having a relief surface is provided. Therefore, the following description will be given focusing on this difference, while the components of the optical element of the sixth embodiment corresponding to those of the optical element 10 of the first embodiment are denoted by the same reference signs as those of the optical element 10 of the first embodiment, and specific description thereof will be omitted. In the following description, two examples in the sixth embodiment will be sequentially described.

[First Example]

[Configuration of Optical Element]

With reference to Fig. 44, a configuration of the optical element of a first example will be described.

As shown in Fig. 44, an optical element 60 includes a first layer 11, a second layer 12 in contact with the first layer 11, and a third layer 13 in contact with the second layer 12 as in the optical element 10 of the first embodiment. The first layer 11 is a resin layer including the grating structure 11G on at least part of a second surface 11R that is in contact with the second layer 12. The second surface 11R is an example of the first surface. Although Fig. 44 shows the cross-sectional shape of the grating structure 11G as being disposed on the entire second surface 11R for convenience of illustration, the grating structure 11G of the optical element 60 of the present embodiment is formed on part of the second surface 11R.

In the second layer 12, a first surface 12F in contact with the second surface 11R of the first layer 11 has a concavo-convex shape that follows the grating structure 11G. The first surface 12F is an example of a second surface. The second layer 12 is a dielectric layer having a refractive index higher than the refractive index of the first layer 11. The third layer 13 is a resin layer having a refractive index lower than the refractive index of the second layer 12.

The optical element 60 includes a relief layer having a relief surface 13Re, which is different from the second surface 11R and the first surface 12F. The relief surface 13Re includes a plurality of reflecting surfaces, and a pitch between the adjacent reflecting surfaces is larger than the pitch of the grating structure 11G. In the present embodiment, the relief layer is the third layer 13 described above. More specifically, the relief surface 13Re is the second surface 13R of the third layer 13, which is a surface in contact with a fourth layer 61.

Although Fig. 44 shows the relief surface 13Re as being disposed on the entire second surface 13R for convenience of illustration, the relief surface 13Re of the optical element 60 of the present embodiment is formed on part of the second surface 13R. Further, the relief surface 13Re is formed at a position in the second surface 13R overlapping the grating structure 11G as viewed in the thickness direction of the optical element 60.

The grating structure 11G displays a color image having a color specific to the grating period of the grating structure 11G in the reflection direction which includes the specular reflection direction. The relief surface 13Re displays a reflection image of white reflection light in the reflection direction which is different from the specular reflection direction. The optical element 60 has a first state that does not display a color image and a reflection image, a second state that displays mainly a color image, a third state that displays mainly a reflection image, and a fourth state that displays mainly a color image and a reflection image. The angle formed between the plane in which the optical element 60 extends and the plane in which the observer's gaze is included is the observation angle. The optical element 60 includes any of the above states depending on the observation angle.

The optical element 60 further includes the fourth layer 61. The fourth layer 61 may be a reflective layer or a refractive layer. When the fourth layer 61 is a refractive layer, the refractive index of the fourth layer 61 is different from the refractive index of the third layer 13. When the refractive index of the fourth layer 61 is different from the refractive index of the third layer 13, the fourth layer 61 can increase the reflectance on the relief surface 13Re. The reflectance at the interface between two adjacent layers is determined by the difference in refractive index between the two layers. Therefore, since the refractive index of the fourth layer 61 is different from the refractive index of the third layer 13, the same effect as that of the case where the fourth layer 61 is a reflective layer can be obtained.

As described above, the optical element 60 is observed from a side of the second layer 12 opposite to that facing the third layer 13. The fourth layer 61 may be light transmissive, or may not be light transmissive. The fourth layer 61 may be formed of a single layer, or may be a plurality of layers. When the fourth layer 61 is a refractive layer and formed of a plurality of layers, the fourth layer 61 can include a layer having a relatively low refractive index and a layer having a relatively high refractive index.

The relief surface 13Re includes a plurality of reflecting surfaces as described above. The relief surface 13Re displays a reflection image formed by white light due to at least one of scattering and reflection. The relief surface 13Re includes a plurality of reflecting surfaces as described above, and the plurality of reflecting surfaces may be arranged regularly in a predetermined manner on the relief surface 13Re or may be arranged irregularly. The relief surface 13Re can control the direction of light emitted by the relief surface 13Re by the orientations and angles of the respective reflecting surfaces.

The grating structure 11G emits light in the range of emission directions including the specular reflection direction described above. Among the light emitted by the grating structure 11G, light of the highest intensity is emitted in the specular reflection direction. On the other hand, the relief surface 13Re emits light in a range of emission directions including a direction different from the specular reflection direction. Among the light emitted by the relief surface 13Re, light of the highest intensity is emitted in a direction different from the specular reflection direction. In other words, orientations and angles of the reflecting surface of the relief surface 13Re are set to emit light of the highest intensity among the lights emitted by the relief surface 13Re in a direction different from the specular reflection direction.

The period of the reflecting surface of the relief surface 13Re may be larger than 400 nm and not larger than 1000 nm, or may be larger than 1000 nm. In order to prevent the relief surface 13Re from emitting diffracted light, the period of the reflecting surface is preferably larger than 1000 nm. For example, the cross-sectional shape of the relief surface 13Re orthogonal to the extending direction of the reflecting surface may be a serrated shape.

The color image displayed by the grating structure 11G is an image formed by light of specific wavelengths, which is included in the visible light wavelength. The color image includes, for example, chromatic images such as red images, green images, and blue images. When the grating structure 11G displays a red image, light emitted by the grating structure 11G includes, for example, light of a wavelength in a range of 620 nm or more and 750 nm or less. When the grating structure 11G displays a green image, light emitted by the grating structure 11G includes, for example, light of a wavelength in a range of 495 nm or more and 570 nm or less. When the grating structure 11G displays a blue image, light emitted by the grating structure 11G includes, for example, light of a wavelength in a range of 450 nm or more and 495 nm or less. The statement that the grating structure 11G displays a color image is synonymous with that the grating structure 11G produces a chromatic image.

The reflection image displayed by the relief surface 13Re is an image formed by white light due to reflection or scattering by the relief surface 13Re. In other words, a reflection image displayed by the relief surface 13Re is an achromatic image having no hue. The relief surface 13Re may also be configured so that white lights emitted at respective positions have different intensities from each other. Accordingly, the relief surface 13Re can display a specific image due to the difference in intensity of white light, in other words, the difference in brightness. Further, the statement that the relief surface 13Re displays a reflection image is synonymous with that the relief surface 13Re produces an achromatic image.

[Effect of Optical Element]

With reference to Figs. 45 to 49, an effect of the optical element 60 will be described.

As shown in Fig. 45, the angle at which the incident light IL emitted from the light source LS enters the optical element 60 is an incidence angle $\alpha$, and the angle at which the emitted light EL is emitted from the optical element 60 is an emission angle $\beta$. The angle formed between the plane in which the gaze of the observer OB is included and the plane in which the optical element 60 extends is an observation angle $\theta$ OB. The above-mentioned specular reflection direction is a direction in which the emitted light EL is emitted at the emission angle $\beta$ having the same magnitude as the incidence angle $\alpha$. In the optical element 60, while the grating structure 11G displays a color image in a reflection direction which includes the specular reflection direction, the relief surface 13Re displays a reflection image by white light in the reflection direction which is different from the specular reflection direction. The optical element 60 includes any of the four states described below depending on the observation angle $\theta$ OB.

In the present embodiment, the color image displayed by the grating structure 11G has a moon shape, and the reflection image displayed by the relief surface 13Re has a star shape. However, the shape of the color image displayed by the grating structure 11G, and the shape of the reflection image displayed by the relief surface 13Re may be any shape. The image displayed by the grating structure 11G is a first image, and the image displayed by the relief surface 13Re is a second image.

Fig. 46 shows the first state of the optical element 60.

As shown in Fig. 46, in the first state of the optical element 60, both the first image P1 and the second image P2 disappear in the optical element 60. In the first state, the luminance of light for forming the first image P1 and the luminance of light for forming the second image P2 are low to such an extent that the observer OB cannot identify the first image P1 and the second image P2. In other words, at the observation angle $\theta$ OB at which the observer OB observes the optical element 60, both the light reflected by the grating structure 11G and the light reflected by the relief surface 13Re have luminance lower than that of the reflected light of the medium to which the optical element 60 is attached so that the first image P1 and the second image P2 are not identifiable by the observer OB.

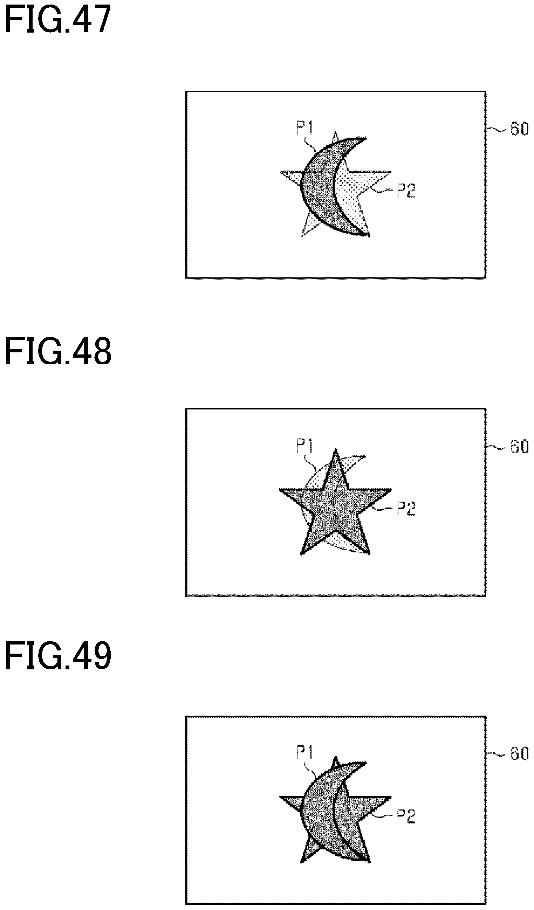

Fig. 47 shows the second state of the optical element 60.

As shown in Fig. 47, in the second state of the optical element 60, the first image P1 appears and the second image P2 disappears in the optical element 60. The statement that the first image P1 appears means that the optical element 60 displays the first image P1, and the luminance of light in the first image P1 is higher than the luminance of light in the second image P2. Accordingly, the second state includes the state in which the first image P1 is identifiable, while the second image P2 is not identifiable. Further, the second state includes the state in which the first image P1 and the second image P2 appear in the optical element 60, and the luminance of light in the first image P1 is higher than the luminance of light in the second image P2.

In other words, at the observation angle θ OB at which the observer OB observes the optical element 60, the observer can easily perceive the light reflected by the grating structure 11G, but cannot easily perceive the light reflected by the relief surface 13Re.

Fig. 48 shows the third state of the optical element 60.

As shown in Fig. 48, in the third state of the optical element 60, the second image P2 appears in the optical element 60. The statement that the second image P2 appears means that the optical element 60 displays at least the second image P2, and the luminance of light in the second image P2 is higher than the luminance of light in the first image P1. Accordingly, the third state includes the state in which the second image P2 is identifiable, while the first image P1 is not identifiable. Further, the third state includes the state in which the optical element 60 displays the second image P2 and the first image P1, and the luminance of light in the second image P2 is higher than the luminance of light in the first image P1.

In other words, at the observation angle θ OB at which the observer OB observes the optical element 60, the light reflected by the relief surface 13Re has a luminance at which the observer can identify the image, while the light reflected by the grating structure 11G does not have a luminance at which the observer can identify the image.

Fig. 49 shows the fourth state of the optical element 60.

As shown in Fig. 49, in the fourth state of the optical element 60, both the first image P1 and the second image P2 appear in the optical element 60. The statement that both the first image P1 and the second image P2 appear means that both the first image P1 and the second image P2 are identifiable by the observer in the optical element 60. In this state, the luminance of light from the first image P1 may be substantially equal to the luminance of light from the second image P2. In other words, at the observation angle θ OB at which the observer OB observes the optical element 50, the light reflected by the grating structure 11G and the light reflected by the relief surface 13Re have the intensity at which the observer OB can identify the image. The optical element 60 may have the first to third states, but may not necessarily have the fourth state.

As described above, the optical element 60 displays the reflection image formed by white reflection light, that is, an achromatic image, and a color image formed by light having a specific wavelength, that is, a chromatic image. When distinguishing between two images, there are fewer subjective differences in comparison between an achromatic image and a chromatic image, compared with comparison between an achromatic first image and an achromatic second image, and comparison between a chromatic first image and a chromatic second image. Therefore, there are fewer subjective differences in authenticity verification for the optical element 60, and the criteria for authenticity verification can be explicitly defined, compared with authenticity verification based on comparison between two chromatic images or between two achromatic images.

Further, the optical element 60 includes the second state that displays mainly the first image P1, and the third state that displays mainly the second image P2, and the first state that does not display the first image P1 and the second image P2. Since the second state or the third state and the first state are in contrast to each other, merely subjective differences are less likely to occur when distinguishing between the second state or the third state and the first state. Therefore, there are fewer subjective differences in authenticity verification, and the criteria for authenticity verification can be easily described.

[Second Example]

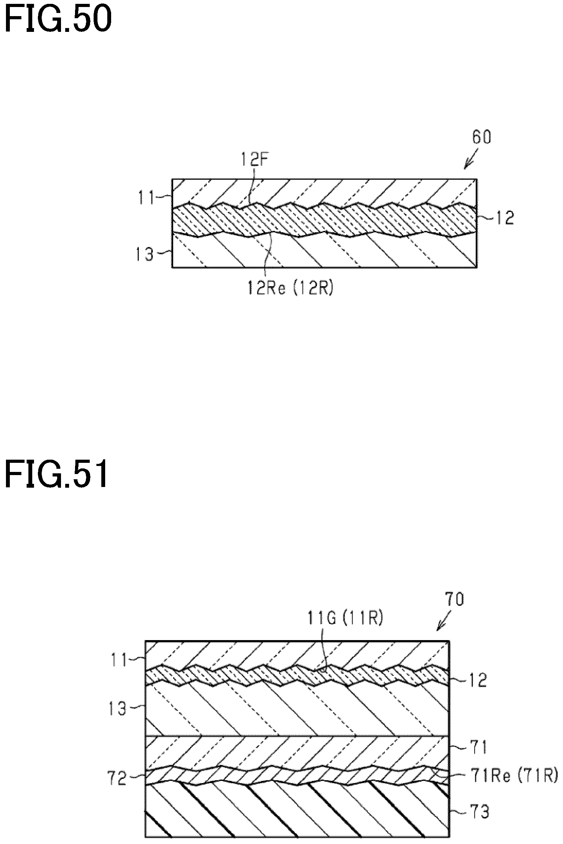

With reference to Fig. 50, a second example of the optical element 60 will be described.

As shown in Fig. 50, similar to the optical element 60 of the first example, the optical element 60 of the second example includes the first layer 11, the second layer 12, and the third layer 13. In the optical element 60 of the second example, the second layer 12 is a relief layer. The second layer 12 has a relief surface 12Re as a surface of the second layer 12 facing away from the first surface 12F, that is, a second surface 12R. Although Fig. 50 shows the relief surface 12Re as being disposed on the entire second surface 12R, the relief surface 12Re may be located on the entire second surface 12R or may be located on part of the second surface 12R.

The optical element 60 of the second example can display a color image by the light reflected by the grating structure 11G due to the difference between the refractive index of the first layer 11 and the refractive index of the second layer 12. Further, the optical element 60 of the second example can display a reflection image by the light reflected by the relief surface 12Re due to the difference between the refractive index of the second layer 12 and the refractive index of the third layer 13.

In addition, in the optical element 60 of the second example, the surface of third layer 13 on a side opposite to that in contact with the second layer 12 may be a flat surface, or may have a shape that follows the concavo-convex shape of the relief surface 12Re of the second layer 12.

As described above, according to the sixth embodiment of the optical element, the following advantageous effects can be obtained.

(6) Since the optical element 60 displays a color image and a reflection image formed by white light, merely subjective differences are less likely to occur when distinguishing between the two images. Therefore, there are fewer subjective differences in authenticity verification for the optical element 60, and the criteria for authenticity verification can be easily described.

(7) Since the second layer 12 includes the grating structure 11G and the relief surface 12Re, the reflectance at the grating structure 11G can be enhanced by the difference between the refractive index of the first layer 11 and the refractive index of the second layer 12, and the reflectance at the relief surface 12Re can be enhanced by the difference between the refractive index of the second layer 12 and the refractive index of the third layer 13.

[Modifications of Sixth Embodiment]

The sixth embodiment described above can be modified and implemented as below.

[Relief Layer]

· In the optical element 60, the first layer 11 may be a relief layer. That is, a surface of the first layer 11 on a side opposite to the surface that includes the grating structure 11G may include a relief surface. In this case as well, an effect similar to the above (6) can be obtained.

· In the optical element 60 of the second example, a surface of the third layer 13 in contact with the relief surface 12Re has a shape that follows the relief surface 12Re. Therefore, the surface of the third layer 13 can also functions as a relief surface.

[Seventh Embodiment]

With reference to Figs. 51 to 54, a seventh embodiment of the optical element will be described. The seventh embodiment is not in accordance with the claimed invention. The optical element of the seventh embodiment differs from the optical element 60 of the sixth embodiment in that a layer other than the first layer 11, the second layer 12, and the third layer 13 is a relief layer. Therefore, the following description will be given focusing on such difference, while the components of the optical element of the seventh embodiment corresponding to those of the optical element 60 of the sixth embodiment are denoted by the same reference signs as those of the sixth embodiment, and the specific description thereof will be omitted. In the following description, four examples of the seventh embodiment will be sequentially described.

[First Example]

With reference to Fig. 51, the optical element of a first example will be described.

As shown in Fig. 51, an optical element 70 includes the first layer 11, the second layer 12, and the third layer 13. The optical element 70 further includes a relief layer 71 having a relief surface 71Re. The relief surface 71Re is a surface different from the second surface 11R and the first surface 12F described above. The relief surface 71Re includes a plurality of reflecting surfaces, and a pitch between the adjacent reflecting surfaces is larger than the pitch of the grating structure 11G. The relief surface 71Re is included in the second surface 71R of the relief layer 71.

The optical element 70 further includes a reflective layer 72 and an adhesive layer 73. The reflective layer 72 is in contact with the relief surface 71Re, and has a shape that follows the concavo-convex shape of the relief surface 71Re. The adhesive layer 73 is in contact with a surface of the reflective layer 72 on a side opposite to that in contact with the relief layer 71. In the optical element 70, the third layer 13 functions as an adhesive layer. Accordingly, a multilayer body composed of the first layer 11 and the second layer 12 is attached to the relief layer 71 via the third layer 13. Therefore, in the optical element 70, the grating structure 11G and the relief surface 71Re overlap each other when viewed in the thickness direction of the optical element 70.

The adhesive layer 73 may be located on a part or the entirety of the surface of the reflective layer 72 on a side opposite to that in contact with the relief layer 71.

According to the optical element 70 of the first example, a first multilayer body composed of the first layer 11, the second layer 12, and the third layer 13, and a second multilayer composed of the relief layer 71, the reflective layer 72, and the adhesive layer 73 can be individually manufactured. Further, according to the optical element 70 of the first example, the optical element 70 can be attached to the adhesion target using the adhesive layer 73.

[Second Example]

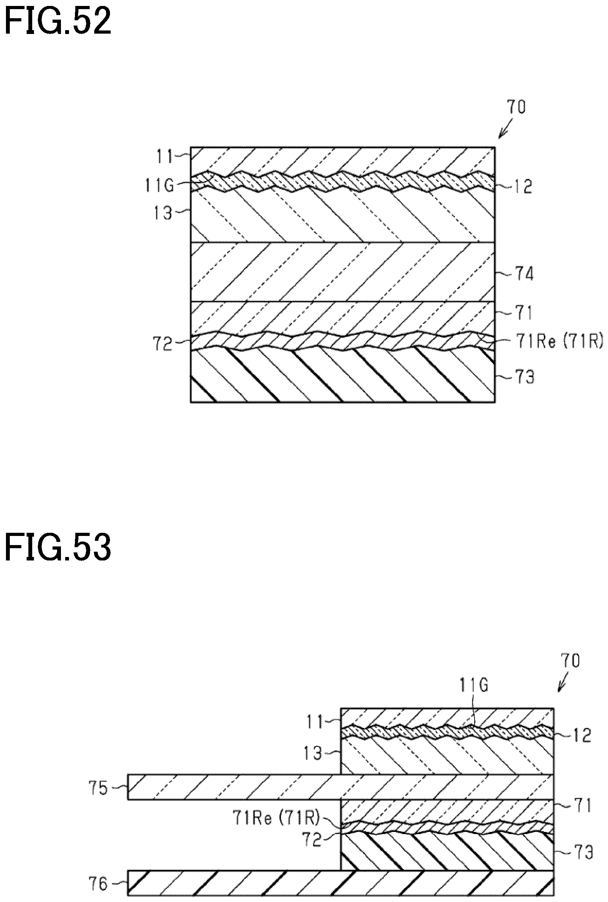

With reference to Fig. 52, the optical element of a second example will be described.

As shown in Fig. 52, similar to the optical element 70 of the first example described above, the optical element 70 includes the relief layer 71, the reflective layer 72, and the adhesive layer 73 in addition to the first layer 11, the second layer 12, and the third layer 13. The optical element 70 of the second example further includes a substrate 74 between the third layer 13 and the relief layer 71. The substrate 74 is adjacent to the third layer 13 on one side, and the relief layer 71 on the other side. The substrate 74 is light transmissive. The substrate 74 can function as a support layer for the first layer 11 and the relief layer 71, which are formed on the substrate 74 in manufacturing of the optical element 70. The optical element 70 of the second example is observed toward the relief layer 71 via the substrate 74.

[Third Example]

With reference to Fig. 53, the optical element of a third example will be described.

As shown in Fig. 53, similar to the optical element 70 of the first example described above, the optical element 70 includes the relief layer 71, the reflective layer 72, and the adhesive layer 73 in addition to the first layer 11, the second layer 12, and the third layer 13. The optical element 70 of the third example further includes a first substrate 75 and a second substrate 76. The first substrate 75 is located between the third layer 13 and the relief layer 71. The third layer 13 functions as an adhesive layer such that a multilayer body composed of the first layer 11 and the second layer 12 is adhered to the first substrate 75 via the third layer 13. The adhesive layer 73 is adhered to the second substrate 76. The first substrate 75 is light transmissive. The second substrate 76 may be light transmissive, or may not be light transmissive.

The first multilayer body composed of the first layer 11, the second layer 12, and the third layer 13 is located on a part of the first substrate 75 in plan view, as viewed perpendicular to the grating structure 11G. The second multilayer body composed of the relief layer 71, the reflective layer 72, and the adhesive layer 73 is located on a part of the second substrate 76 in plan view, as viewed perpendicular to the relief surface 71Re. The first layer 11 overlaps the relief layer 71 as viewed in the thickness direction of the optical element 70.

[Fourth Example]

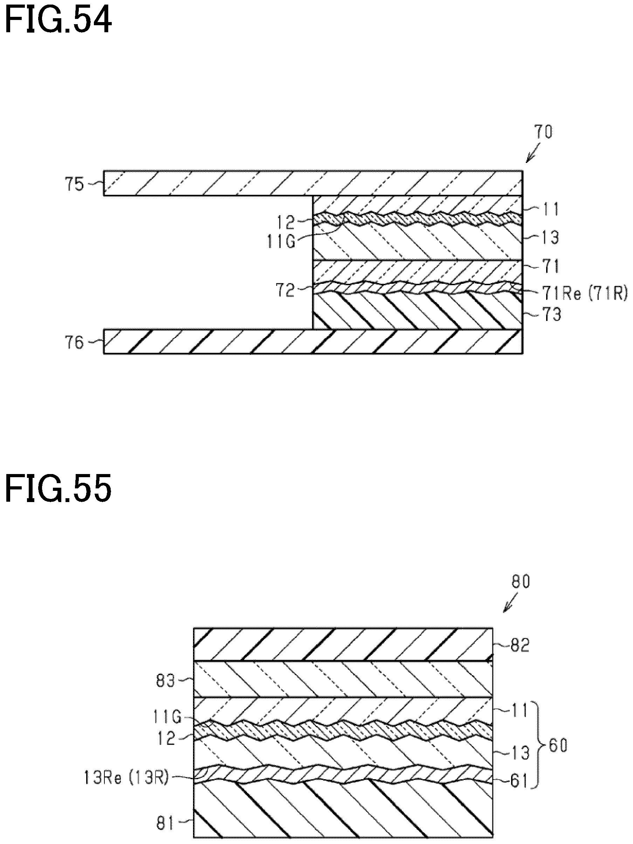

With reference to Fig. 54, the optical element of a fourth example will be described.

As shown in Fig. 54, similar to the optical element 70 of the first example, the optical element 70 includes the relief layer 71, the reflective layer 72, and the adhesive layer 73 in addition to the first layer 11, the second layer 12, and the third layer 13. The optical element 70 further includes the first substrate 75 and the second substrate 76. The third layer 13 functions as an adhesive layer, and is in contact with the relief layer 71. The adhesive layer 73 is adhered to the second substrate 76.

The above-mentioned first multilayer body is located on a part of the first substrate 75 in plan view, as viewed perpendicular to the grating structure 11G. The second multilayer body is located on a part of the second substrate 76 in plan view, as viewed perpendicular to the relief surface 71Re. The first layer 11 overlaps the relief layer 71 as viewed in the thickness direction of the optical element 70.

The optical element 70 is observed toward the adhesive layer 73 via the reflective layer 72. Accordingly, the first substrate 75 is light transmissive. The second substrate 76 may be light transmissive, or may not be light transmissive.

In the first to fourth examples of the optical element 70, each substrate may be made of paper or plastic film. Printing may also be applied to each substrate. Alternatively, each substrate may be a multilayer body, and printing may be applied to at least some of a plurality of layers constituting the substrate.

As described above, according to the optical element of the seventh embodiment, the following advantageous effects can be obtained in addition to the above (6).

(8) Since layers other than the first layer 11, the second layer 12, and the third layer 13 are relief layers having a relief surface, the degree of freedom in design of the relief layer is increased.

[Modifications of Seventh Embodiment]

The seventh embodiment described above can be modified and implemented as below.

[Substrate]

· In the optical element 70 of the first to fourth examples, each substrate may be smaller than at least one of the first multilayer body and the second multilayer body in plan view, as viewed perpendicular to the grating structure 11G.

· The first multilayer body including the first layer 11 and the second multilayer body including the relief layer 71 may be included between two substrates. In other words, each of the first multilayer body and the second multilayer body may be laminated while being sandwiched between two substrates.

· Each substrate may be a laser color developing layer that develops a color by irradiation with a laser beam. The substrate 74 in the first example may include information that is recorded in the substrate 74 by laser beam irradiation.

Further, in the optical element 70 of the third example, at least one of the first substrate 75 and the second substrate 76 can include information recorded by laser beam irradiation. When the first substrate 75 includes information, the second image displayed by the relief surface 71Re and information included in the first substrate 75 can be overlapped as viewed in the thickness direction of the optical element 70 so that only part of the second image is observed. Accordingly, resistance to counterfeiting of the optical element 70 is improved. On the other hand, when the second substrate 76 includes information, the entirety of the first image displayed by the grating structure 11G and the entirety of the second image displayed by the relief surface can be observed in the thickness direction of the optical element 70.

In the optical element 70 of the third example, when the first substrate 75 includes information, the first image displayed by the grating structure 11G, the second image displayed by the relief surface 71Re, and information included in the first substrate 75 can be overlapped as viewed in the thickness direction of the optical element 70 so that only part of the first image and part of the second image are observed. Accordingly, resistance to counterfeiting of the optical element 70 is improved. On the other hand, when the second substrate 76 includes information, the entirety of the first image displayed by the grating structure 11G and the entirety of the second image displayed by the relief surface can be observed in the thickness direction of the optical element 70.

[Eighth Embodiment]

With reference to Fig. 55, a transfer foil including the optical element will be described. In an eighth embodiment, which is not in accordance with the claimed invention, an example of the transfer foil will be described by using a case where the optical element included in the transfer foil is the first example of the optical element 60 of the sixth embodiment.

As shown in Fig. 55, a transfer foil 80 includes an adhesive body that includes the optical element 60 and an adhesive layer 81 for adhering the optical element 60 to a transfer target. The transfer foil 80 further includes a support layer 82 and a peeling layer 83. In the transfer foil 80, the support layer 82, the peeling layer 83, the optical element 60, and the adhesive layer 81 are laminated in this order. The optical element 60 after being transferred to the transfer target is observed via the peeling layer 83. Accordingly, the peeling layer 83 is light transmissive. Since the peeling layer 83 is removed from the support layer 82 in transfer of the optical element 60, the support layer 82 may be light transmissive, or may not be light transmissive.

The transfer foil 80 includes the grating structure 11G and the relief surface 13Re. Therefore, the optical element 60 that displays the first image P1 and the second image P2 can be transferred to the transfer target by transferring only part of the transfer foil 80. The optical element 60 can be transferred by hot stamping, for example.

[Modifications of Eighth Embodiment]

[Transfer Foil]

· The optical element can be formed by preparing the first transfer foil including the grating structure 11G and the second transfer foil including the relief surface 13Re, and using these two transfer foils. In this case, part of the first transfer foil and part of the second transfer foil may be transferred to the transfer target so that the grating structure 11G included in the first transfer foil and the relief surface 13Re included in the second transfer foil overlap each other as viewed in the thickness direction of the optical element. In this case, when forming the optical element, it is necessary to align the position where the part of the first transfer foil is transferred and the position where the part of the second transfer foil is transferred. Thus, resistance to counterfeiting of the optical element is improved.

[Optical Element]

· The transfer foil may include the optical element 10 of the first embodiment, the optical element 20 of the second embodiment, the optical element 30 of the third embodiment, and the optical element 40 of the fourth embodiment, instead of the optical element 60. Further, the transfer foil may include the optical element 60 of the second example of the sixth embodiment, and the optical element 70 of the first example and the second example of the seventh embodiment, instead of the optical element 60.

[Ninth Embodiment]

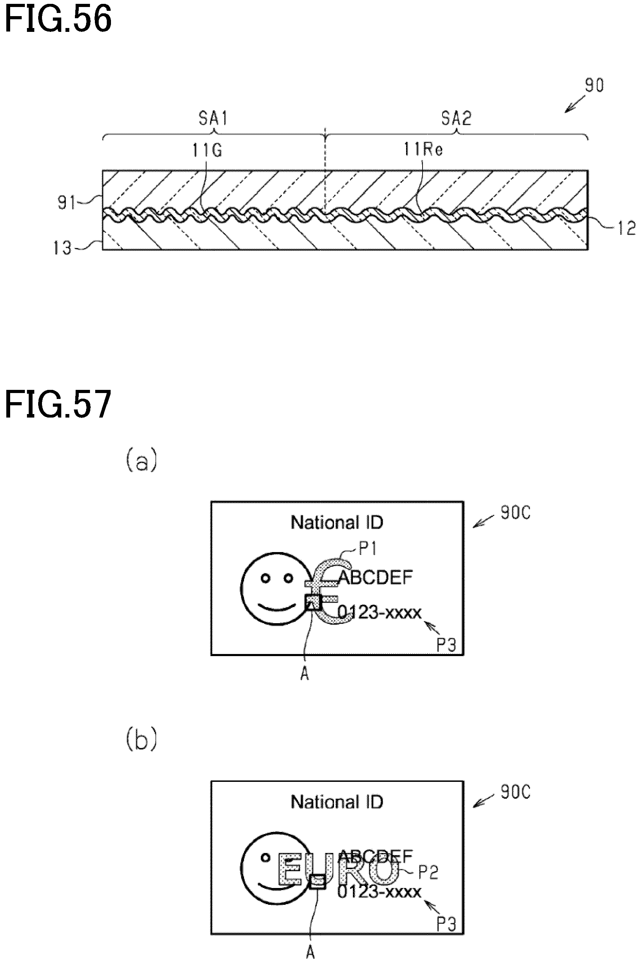

With reference to Figs. 56 to 58, a ninth embodiment of the optical element will be described. The ninth embodiment is not in accordance with the claimed invention. The ninth embodiment differs from the sixth embodiment in that the relief layer of the sixth embodiment is provided on the same surface as the grating structure.

As shown in Fig. 56, in an optical element 90, a first layer 91 includes the grating structure 11G and a relief surface 11Re at the interface between the second layer 12 and the first layer 91. In the optical element 90, for example, a grating region SA1 on which the grating structure 11G is formed and a relief region SA2 on which the relief surface 11Re is formed are alternately arranged. In Fig. 56, for convenience of illustration, the first layer 11 includes one grating region SA1 and one relief region SA2, and the second surface 11R of the first layer 11 does not include a region other than the grating region SA1 and the relief region SA2. However, the number and arrangement of the grating regions SA1 and the relief regions SA2 vary depending on the image displayed by the optical element 90.

Similar to the relief surface 71Re described above, the relief surface 11Re includes a plurality of reflecting surfaces. The width of the structure including the reflecting surfaces may be larger than the width of the grating structure 11G, and the height of the structure including the reflecting surfaces may be larger than the height of the grating structure 11G. Alternatively, the width of the structure including the reflecting surface may be equal to the width of the grating structure 11G, and the height of the structure including the reflecting surfaces may be equal to the height of the grating structure 11G. However, the color displayed by the relief surface 11Re is mainly an achromatic color, and the relief surface 11Re displays an image at an observation angle different from the observation angle at which the color image is displayed by the grating structure 11G.

As described above, the cross-sectional shape of the relief surface 11Re orthogonal to the extending direction of the reflecting surface may be a serrated shape, for example. When the structure including the reflecting surface is large enough that diffracted light does not occur on the relief surface 11Re, the pitch of the relief surface 11Re to the adjacent reflecting surface may be substantially constant so that the relief surface 11Re can reflect white light in a specific direction. On the other hand, when the structure including the reflecting surface is small to such an extent that diffracted light occurs on the relief surface 11Re, for example, structures having different sizes may be provided on the relief surface 11Re so that diffracted lights attributable to the structures of different sizes are mixed to thereby cause the optical element 90 to display white.

Fig. 57(a) is an example of a first image P1 displayed by the grating structure 11G of the optical element 90, and Fig. 57(b) is an example of a second image P2 displayed by the relief surface 11Re of the optical element 90. Fig. 57 shows a planar structure of a card 90C to which the optical element 90 is applied, together with a third image P3 of the card 90C. Further, the third image P3 includes identification information for identifying the owner of the card 90C. The third image P3 includes, for example, a facial image of the owner, and identification information such as a name and an ID number.

As shown in Fig. 57(a), the optical element 90 can display a symbol representing the euro symbol as the first image P1. As shown in Fig. 57(b), the optical element 90 can display a character string (EURO) representing the word EURO as the second image P2. The optical element 90 can display a part of the first image P1 and a part of the second image P2 in the region A. That is, a part of the grating structure 11G for displaying the first image P1 and a part of the relief surface 11Re for displaying the second image P2 are positioned in the region A.

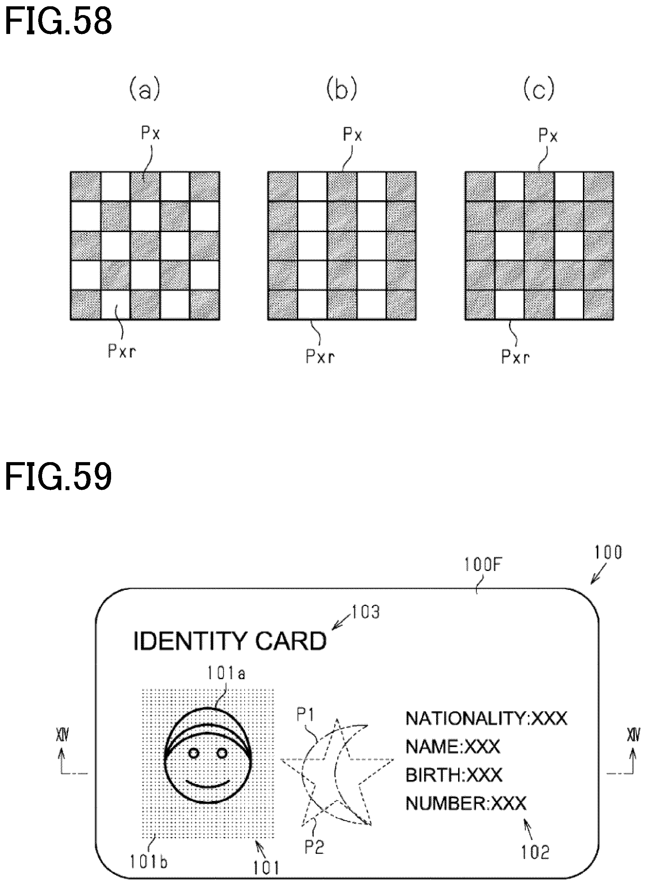

As shown in Fig. 58, cells in which the grating structure 11G is located and cells in which the structure including the reflecting surface that forms the relief surface 11Re is located are positioned in the region A.

As shown in Fig. 58(a), the cells Px and cells Pxr may be arranged in a checkered pattern. Further, as shown in Fig. 58(b), the cells Px and the cells Pxr may be arranged in a stripe pattern. Further, as shown in Fig. 58(c), the cells Px and the cells Pxr may be arranged such that one cell Pxr is surrounded by eight cells Px. In addition, the arrangement of the cells Px and the cells Pxr, and the ratio between the area of the cells Px and the area of the cells Pxr in the region A can be modified depending on the image displayed by the optical element 90. For example, when a part of the first image P1 is desired to be emphasized over a part of the second image P2 in the region A, the ratio occupied by the cells Px in the region A may be larger than the ratio occupied by the cells Pxr.

[Tenth Embodiment]

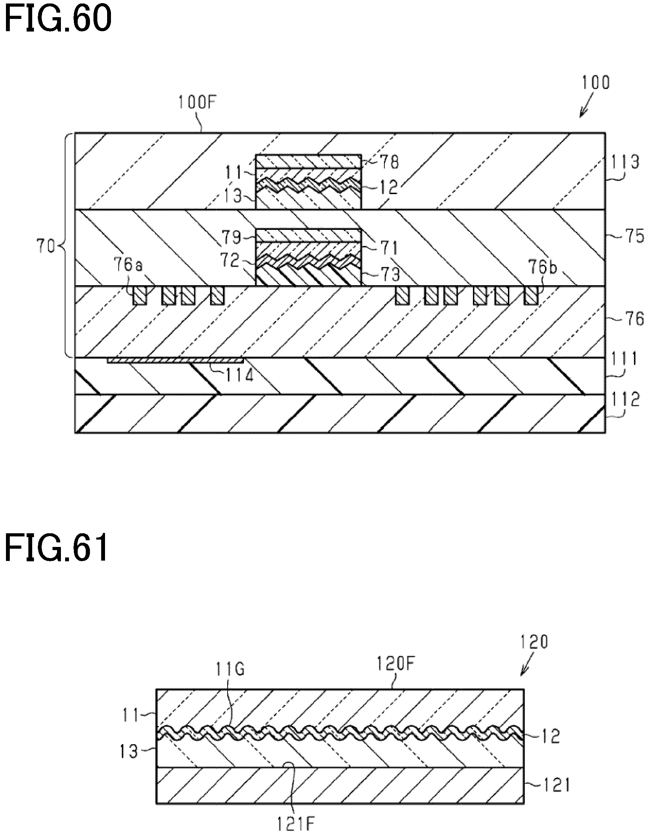

With reference to Figs. 59 and 60, an authentication medium of a tenth embodiment will be described. The tenth embodiment is in accordance with the claimed invention if the authentication medium comprises an optical element having all features as recited in appended claim 1. In the following description, a card as an example of the authentication medium will be described. Examples of the card include ID cards, licenses, license cards, member cards, and credit cards. Such a card which is outside the scope of the claimed invention includes the third example of the optical element 70 of the seventh embodiment as a part of the card.

[Configuration of Card]

As shown in Fig. 59, a card 100 has a plate shape extending two-dimensionally in plan view, as viewed perpendicular to a first surface 100F of the card 100. The card 100 displays a first image 101, a second image 102, and a third image 103 via the first surface 100F. Further, the card 100 displays a first image P1 and a second image P2 via the first surface 100F.

In the present embodiment, the first image 101 includes a facial image 101a and a background image 101b. The facial image 101a is an image showing the face of the owner of the card 100. The background image 101b includes the facial image 101a inside the background image 101b, and constitutes the background of the facial image 101a. The second image 102 includes information on the owner of the card 100. The second image 102 includes information represented by characters and numbers. The third image 103 includes information on the card 100. The information included in the third image 103 is the name of the card 100. The facial image 101a and the second image 102 are identification information for identifying the owner of the card. The card 100 may display the first image P1 and the second image P2 via the first surface 100F. The image described above is an example of the image that can be displayed by the card 100.

Fig. 60 shows the cross-sectional structure of the card 100 taken along the line XIV-XIV of Fig. 59.

As shown in Fig. 60, the card 100 as an example of the authentication medium includes an optical element 70. The optical element 70 may cover on top of the identification information. If the optical element 70 covers on top of the identification information, and the optical element 70 has all features as recited in appended claim 1, the authentication medium is in accordance with the claimed invention. In the optical element 70 included in the card 100, a first multilayer body having the first layer 11, the second layer 12, and the third layer 13 further includes a peeling layer 78 corresponding to the resin layer of claim 1. The peeling layer 78 covers the first layer 11. A second multilayer body having the relief layer 71, the reflective layer 72, and the adhesive layer 73 further includes a peeling layer 79. The peeling layer 79 covers the relief layer 71. In the optical element 70, the second multilayer body is covered with the first substrate 75.

The entire second substrate 76, before irradiation of a laser beam, has characteristics of being capable of developing a color when irradiated with a laser beam. The second substrate 76 included in the card 100 includes a first color developing section 76a and a second color developing section 76b, which are portions developing a color by irradiation with a laser beam. The first color developing section 76a is a portion that displays the facial image 101a, and the second color developing section 76b is a portion that displays the second image 102.

The card 100 includes a white layer 111, a lower protective layer 112, and an upper protective layer 113. The white layer 111 is a layer colored white, and is in contact with the second substrate 76. A printed part 114 is provided in a portion of the white layer 111 that is in contact with the second substrate 76. The printed part 114 is located in a region overlapping the first color developing section 76a when viewed in the thickness direction of the card 100. The printed part 114 displays the background image 101b.

The lower protective layer 112 is located on a surface of the white layer 111 on a side opposite to that in contact with the second substrate 76. The upper protective layer 113 covers the first substrate 75, and includes the first multilayer body between the first substrate 75 and the upper protective layer 113. The upper protective layer 113 is light transmissive. On the other hand, the lower protective layer 112 may be light transmissive, or may not be light transmissive.

[Modifications of Tenth Embodiment]

[Authentication Medium]

· The authentication medium is not limited to being a card, and may be, for example, implemented as other identification media for authenticating an owner, such as a passport.

[Optical Element]

· The authentication medium may include the optical element 10 of the first embodiment, the optical element 20 of the second embodiment, the optical element 30 of the third embodiment, the optical element 40 of the fourth embodiment, the optical element 60 of the sixth embodiment, and the optical element 90 of the ninth embodiment, instead of the above optical element 70. This authentication medium is outside the scope of the claimed invention. Further, the authentication medium may include the optical element 70 of the first example, the second example, and the fourth example of the seventh embodiment, instead of the above optical element 70. In this case, the authentication medium is outside the scope of the claimed invention.

[Eleventh Embodiment]

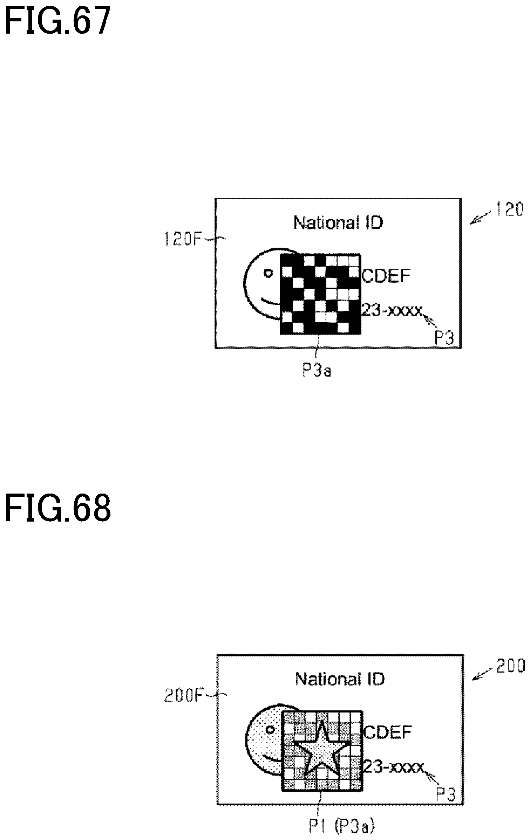

With reference to Figs. 61 and 68, an authentication medium of an eleventh embodiment of the present invention will be described. The eleventh embodiment is in accordance with the claimed invention if the authentication medium comprises an optical element having all features as recited in appended claim 1. In the following description, another example of the card as an example of the authentication medium will be described.

[Configuration of Card]

With reference to Fig. 61, a configuration of a card will be described below. An example of the card will be described by way of illustration by using the card including the optical element 10 of the first embodiment, which is however

**EP 3 770 653 B1**

outside the scope of the claimed invention. However, the card is not limited to the optical element 10 of the first embodiment, and may include the optical element of each of the second embodiment to the ninth embodiment. If the card includes the optical element of any of the second to ninth embodiments other than the fifth embodiment, it is outside the scope of the claimed invention.

The card 120 may further include a display layer 121, in addition to the first layer 11, the second layer 12, and the third layer 13. The display layer 121 can display predetermined information. The display layer 121 can display predetermined information by using, for example, characters, numbers, figures, and QR codes (registered trademark). The card 120 may include a first surface 120F as a surface of the first layer 11 on a side opposite to that in contact with the second layer 12.

The display layer 121 can display predetermined information by printing on a display surface 121F that is in contact with the third layer 13. The method of printing on the display surface 121F may be, for example, letterpress printing, gravure printing, offset printing, or screen printing. Printing can be performed by using functional ink. The functional ink may be ink that changes color depending on the type or state of the light source illuminating the card 120 or ink that changes color or gloss depending on the observation angle of the observer. Examples of the ink that changes color depending on the type or state of the light source may include phosphorescent ink and photochromic ink. Examples of the ink that changes color or gloss depending on the observation angle may include pearl ink, magnetic ink, and color shift ink.

The phosphorescent ink has a function of absorbing and storing light energy emitted for example from sunlight or a fluorescent lamp, and gradually emitting light in the dark. The photochromic ink is an ink that develops color in response to ultraviolet light. The photochromic ink has a function of exhibiting different colors such as red, blue, purple, and yellow depending on the irradiation amount of the ultraviolet light to the photochromic ink. The pearl ink is an ink to which pearl pigments are added. The gloss of pearl ink varies depending on the observation angle. The pearl ink, including a pearl pigment made of polarized pearl as a pearl pigment, changes tone depending on the observation angle. According to the functional ink, it is possible to easily examine whether the color printed on the display surface 121F is changed or not. Therefore, the authenticity of the card 120 can be reliably verified based on the printed color.

Further, the method of printing on the display surface 121F may be ink jet printing, thermal printing or laser printing. According to these methods, the information formed on the display surface 121F can be set for each card 120. Therefore, it is preferred that patterns common to a plurality of cards 120 are printed at a relatively high speed by the above-mentioned printing method, and identification information to be identified for each card 120 is printed by ink jet printing, thermal printing or laser printing.

As described above, the optical element included in the card 120 is not limited to the optical element 10 of the first embodiment (in which case the card is not in accordance with the claimed invention), and may be the optical element of each of the fifth embodiment and the sixth embodiment (in which latter case the card is not in accordance with the claimed invention). That is, if the optical element included in the card 120 is the element of the fifth embodiment, it is in accordance with the claimed invention. That is, the card 120 may also be configured to display the first image P1 displayed by the grating structure 11G, the second image P2 displayed by the relief surface, and the third image displayed by the display layer 121. In such a card 120, when the luminance of the first image P1 and the luminance of the second image P2 are sufficiently high, it is unlikely for the third image to be observed at the observation angle at which the first image P1 is displayed and the observation angle at which the second image P2 is displayed. On the other hand, at the observation angle at which both the first image P1 and the second image P2 are not displayed, the third image is observed. Thus, the observer can observe the third image.

The observation angle at which each of the first image P1, the second image P2, and the third image is observed can be set to any angle according to the observation angle at which each of the first image P1 and the second image P2 appears, that is, the shape of the grating structure 11G and the relief surface.

In the card 120, the multilayer body composed of the first layer 11, the second layer 12, and the third layer 13 can have a transmittance of 70% or more in the direction in which the three layers are laminated. This allows for easy observation of the image displayed by the card 120. In this case particularly, when the optical element, which is the multilayer body composed of the first layer 11, the second layer 12, and the third layer 13 covers on top of the identification information, the ease of identification is improved. For example, article 195 of the safety standard for road transport vehicles in Japan requires the vehicle windshield and side window glasses to have a transmittance of 70% or more. As can be seen from such a standard, the transmittance of a light-transmissive body that transmits light for displaying information should be 70% or more for ensuring clear and reliable observation of the information.

The transmittance of a transparent multilayer body can be measured by using a spectrophotometer. In the environment in which the card 120 is observed, the light source is assumed to be sunlight or a fluorescent lamp. Accordingly, in measurement of the transmittance of the multilayer body used for the card 100, the transmittance at 500 nm wavelength is preferably measured. The transmittance of the multilayer body is preferably measured by a method in accordance with JIS K7375:2008 "Determination of total luminous transmittance and reflectance of plastics."

[Effect of Card]

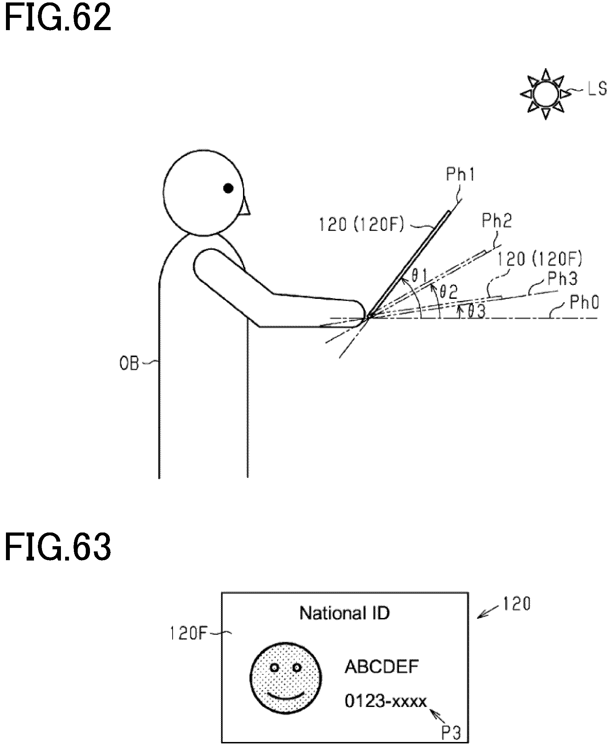

With reference to Figs. 62 to 68, an effect of the card 120 will be described. In the following description, an effect of the first example of the card 120 and an effect of the second example of the card 120 will be sequentially described. The first example of the card 120 includes an optical element having a grating structure 11G and a relief surface, and is configured such that the authenticity of the card 120 can be verified by visual inspection by the observer. On the other hand, the second example of the card 120 includes an optical element that include a grating structure 11G but does not include a relief surface, and the authenticity of the card 120 can be verified by using a verifier.

[First Example]

With reference to Figs. 62 to 65, an effect of the first example of the card 120 will be described.
Fig. 62 schematically shows how the authenticity of the card 120 is verified by visual inspection by the observer OB.
As shown in Fig. 62, the observer OB observes the card 120 while holding the card 120 with his or her hand. A reference plane Ph0 is a plane in which the card 120 is oriented when the observer OB starts observing the card 120. The reference plane Ph0 is a reference plane in authenticity verification of the card 120. The observer OB tilts the card 120 oriented in the reference plane Ph0 to be in parallel to each of a first plane Ph1, a second plane Ph2, and a third plane Ph3. The observer OB observes the card 120 when the card 120 is oriented in each of the planes Ph1, Ph2, and Ph3. The angle formed between the reference plane Ph0 and the first plane Ph1 is a first angle $\theta1$, the angle formed between the reference plane Ph0 and the second plane Ph2 is a second angle $\theta2$, and the angle formed between the reference plane Ph0 and the third plane Ph3 is a third angle $\theta3$. The first angle $\theta1$ is larger than each of the second angle $\theta2$ and the third angle $\theta3$, and the second angle $\theta2$ is larger than the third angle $\theta3$.
The light source LS is located on the opposite side of the card 120 to the observer OB. In other words, the light source LS is located in front of the observer OB. The light source LS, the card 120, and the observer OB are relatively positioned such that the light from the light source LS incident on the card 120 is reflected by the card 120 toward the observer OB. In observation of the card 120, it is preferred that the light from a point light source is incident on the card 120 in one direction. However, in reality, in observation of the card 120, light from a fluorescent lamp or external light is incident on the card 120 from various directions. In this case as well, as long as the light incident on the card 120 includes the light reflected by the card 120 toward the observer OB, the observer OB can observe the information displayed by the card 120 although the light reflected by the card 120 has low luminance.

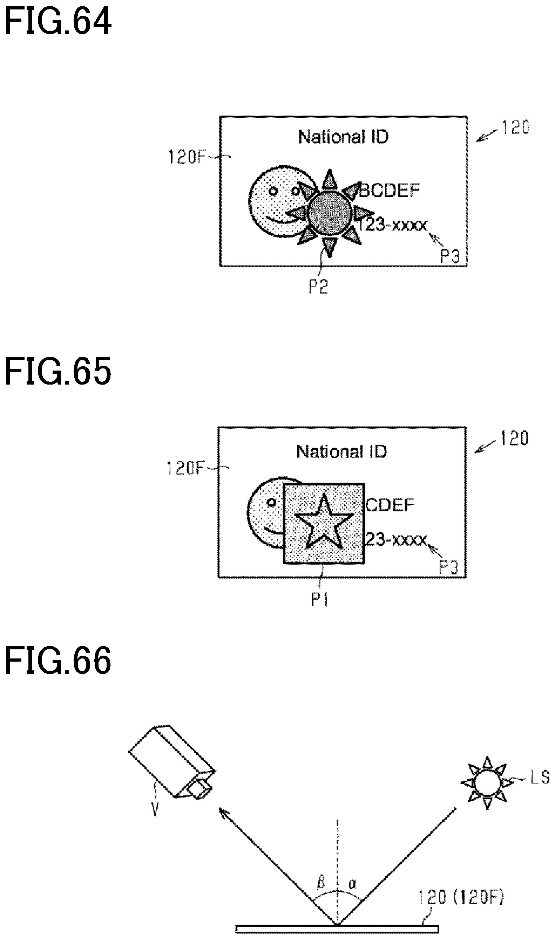

Figs. 63 to 65 each illustrate an image displayed by the card 120. Fig. 63 is an image displayed by the card 120 when the card 120 is oriented in the first plane Ph1, and Fig. 64 is an image displayed by the card 120 when the card 120 is oriented in the second plane Ph2. Fig. 65 is an image displayed by the card 120 when the card 120 is oriented in the third plane Ph3. Further, the card 120 is configured to be able to display the first image P1, the second image P2, and the third image P3.
As shown in Fig. 63, when the card 120 is oriented in the first plane Ph1 by the observer OB, the card 120 displays only the third image P3. Further, the third image P3 includes identification information for identifying the owner of the card 120. The third image P3 includes, for example, a facial image of the owner, and identification information such as a name and an ID number. When the card 120 is oriented in the first plane Ph1 by the observer OB, the card 120 displays the entire third image P3 to the outside via the first surface 120F.
As shown in Fig. 64, when the card 120 is oriented in the second plane Ph2 by the observer OB, the card 120 displays the second image P2. In plan view, as viewed perpendicular to the first surface 120F of the card 120, the second image P2 overlaps a part of the third image P3. Accordingly, in the present embodiment, a part of the third image P3 is hidden by the second image P2. In addition, the luminance of the second image P2 may be of a degree that does not completely hide a part of the third image P3.
As shown in Fig. 65, when the card 120 is oriented in the third plane Ph3 by the observer OB, the card 120 displays the first image P1. On the other hand, the card 120 does not display the second image P2. In plan view, as viewed perpendicular to the first surface 120F of the card 120, the first image P1 overlaps a part of the third image P3. Accordingly, in the present embodiment, a part of the third image P3 is hidden by the first image P1. In addition, the luminance of the first image P1 may be of a degree that does not completely hide a part of the third image P3.
As described above, when the observer OB tilts the card 120 forward from the reference plane Ph0, the card 120 displays the first image P1 and the second image P2 depending on the position of the card 120. In other words, when the observer OB brings the first surface 120F of the card 120 close to the observer OB in an observation space while substantially fixing the position of the card 120 held by the observer OB, the card 120 displays the first image P1 and the second image P2 depending on the position of the card 120.
Further, when the observer OB tilts the card 120 to the left or right, for example, from the second plane Ph2 as a reference plane, the observer OB can still observe the first image P1 and the second image P2 displayed by the card 120. In other words, when the observer OB tilts the card 120 in an observation space while substantially fixing the distance between the first surface 120F of the card 120 and the observer OB, the observer OB can still observe the first image P1 and the second image P2. However, while the observer OB can easily observe the second image P2, the observer OB can observe the first image P1 only under limited observation conditions for the following reasons.

As described above, the first image P1 is observed by the observer OB only when the light source LS and the observer OB are located at angular positions symmetrical about the plane including the normal to the first surface of the card 120. Accordingly, when the card 120 is tilted to the left or right from the second plane Ph2 as a reference plane, the angle formed between the second plane Ph2 and the reference plane Ph0 is required to be equal to the third angle $\theta3$. The second plane Ph2 is a plane in which the card 120 is oriented by the observer OB when the observer OB holds the card 120 with his or her hands naturally. Accordingly, the probability that the angle formed between the second plane Ph2 and the reference plane Ph0 is equal to the third angle $\theta3$ is low. On the other hand, when the observer OB tilts the card 120 forward or backward relative to the reference plane Ph0, the probability that the card 120 is oriented in the third plane Ph3 by the observer OB is high.

Therefore, in observation of the card 120, it is desired that the observer OB tilts the card 120 forward or backward with the light source LS positioned obliquely above the plane including the gaze of the observer OB. Accordingly, the probability that the observer OB observes both the first image P1 and the second image P2 increases. As a result, the authenticity verification of the card 120 performed by the observer OB is more likely to be accurate.

[Second Example]

With reference to Figs. 66 to 68, an effect of the second example of the card 120 will be described.

Fig. 66 schematically shows how the authenticity of the card 120 is verified by using a verifier V.

As shown in Fig. 66, an environment for verifying the authenticity of the card 120 is set, in which the first surface 120F of the card 120 is irradiated with light from the light source LS at an incidence angle $\alpha$, and reflected light reflected at an emission angle $\beta$ enters the verifier V. The verifier V may be, for example, a camera capable of reading an image or a sensor capable of reading luminance distribution. The verifier V may be any device capable of processing each of the first image P1 and the second image P2 as an image or optical information such as luminance.

Fig. 67 illustrates an image displayed by a genuine card 120. On the other hand, Fig. 68 illustrates an image displayed by a counterfeit card 200. Figs. 67 and 68 illustrate images displayed by the cards 120 and 200, respectively, under specific observation conditions.

As shown in Fig. 67, the genuine card 120 displays a QR code (registered trademark) P3a as part of the third image P3.

On the other hand, the counterfeit card 200 displays the QR code P3a as part of the third image P3, together with the first image P1 via the first surface 200F. Under the above observation conditions, when the verifier V reads the QR code P3a displayed by the card 100, the verifier V determines that the card 120 is genuine. In this case, the card 120 displays the QR code P3a as part of the third image P3, and the QR code P3a does not overlap other images. Accordingly, the verifier V determines that the card 120 is genuine. On the other hand, the card 200 displays the QR code P3a as part of the third image P3, together with the first image P1 overlapping the QR code P3a when viewed in the thickness direction of the card 120. In other words, information other than the QR code is included in the information read by the verifier V. Accordingly, the verifier V determines that the card 200 is fake.

In the present embodiment, the QR code P3a is shown as an example of codes displayed by the cards 120 and 200. However, codes displayed by the cards 120 and 200 may be other codes that can be read by the verifier V. For example, a barcode can be used. In addition, instead of the third image P3, the first image P1 or the second image P2 may also be used for verification by the verifier V.

Furthermore, although the verifier V in the examples described above is fixed at a single position, the verifier V may be movable, and the verifier V may be configured to read the light emitted from the card 120 at an angle $\gamma$, which is different from the emission angle $\beta$, in addition to the light emitted at the emission angle $\beta$. In this case, two pieces of information obtained at different angles can be used to verify the authenticity of the card 120 in two steps. Accordingly, the probability of determination as to whether the card 120 is genuine or fake can be further improved.

[Materials of Optical Element]

Materials for forming the optical element will be described below. The following description, materials for forming each of the first layer 11, the second layer 12, and the third layer 13 in the optical element will be described.

[First Layer and Third Layer]

Materials for forming each of the first layer 11 and the third layer 13 can essentially include various resins described below, provided the materials of the first layer and third layer are as defined in appended claim 1, namely, the first layer 11 is made of an ultraviolet curable resin and the third layer 13 is made of a thermoplastic resin. Examples of the materials for forming each of the layers include poly(meth)acrylic resin, polyurethane resin, fluorine resin, silicone resin, polyimide resin, epoxy resin, polyethylene resin, polypropylene resin, methacrylic resin, polymethyl pentene resin, cyclic polyolefin resin, polystyrene resin, polyvinyl chloride resin, polycarbonate resin, polyester resin, polyamide resin, polyamide imide resin, polyaryl phthalate resin, polysulfone resin, polyphenylene sulfide resin, polyethersulfone resin, polyethylene naphthalate resin, polyether imide resin, acetal resin, and cellulose resin. These resins can be used singly, or two or more thereof can be mixed or combined for forming the first layer and the third layer. Materials for forming the first layer 11 and the third layer 13 may include at least one of a curing agent, a plasticizer, a dispersant, various leveling agents, an ultraviolet absorber, an antioxidant, a viscosity modifier, a lubricant, and a photostabilizer.

Each of the first layer 11 and the third layer 13 can be formed for example by a thermal embossing method, a casting method or a photopolymerization method. In the photopolymerization method, a radiation-curable resin is introduced into a space between a flat substrate such as a plastic film and a metal stamper. Then, the radiation-curable resin is cured by irradiation, and the cured resin film together with the substrate is removed from the metal stamper. The photopolymerization method is preferred compared with a pressing method and a casting method using a thermoplastic resin in that it has high accuracy in transfer of a fine concavo-convex structure, and is excellent in thermal stability and chemical resistance.

[Second Layer]

Materials forming the second layer 12 may be a dielectric having light transmissive properties. The dielectric may be a metal, a metal compound, a silicon compound, or a mixture thereof. Examples of the dielectric include $ZnS$, $ZnO$, $ZnSe$, $SiN_x$, $SiO_x$, $Ti_xO_x$, $Ta_2O_5$, $Cr_2O_3$, $ZrO_2$, $Nb_2O_5$, and ITO.

The second layer 12 can be formed by, for example, physical vapor deposition or chemical vapor deposition. The physical vapor deposition may be a vacuum vapor deposition, sputtering, ion plating, or ion cluster beam method. The chemical vapor deposition may be plasma chemical vapor deposition, thermal chemical vapor deposition, or photochemical vapor deposition. Vacuum vapor deposition is likely to increase productivity. Ion plating is likely to form a high quality reflective layer. Further, film formation conditions in physical vapor deposition and chemical vapor deposition can be selected depending on the material for forming the reflective layer.

The second layer 12 can also be formed by various printing methods, casting methods, and die coating methods. In this case, the second layer 12 can be formed by using a resin in which at least one of the above dielectrics is dispersed.

[Test Examples]

[Test Example 1]

In the following description, Test Example 1 will be described. Example 1 is a test example corresponding to the authentication medium of the above tenth embodiment. In the test example 1, a first transfer foil including the first layer 11, and a second transfer foil including the relief layer 71 were prepared. Then, a part of the first transfer foil was transferred to the first substrate 75, and a part of the second transfer foil was transferred to the second substrate 76. A substrate that develops a color when irradiated with a laser beam was used as the second substrate 76. By laminating the first substrate 75 and the second substrate 76, an ID card was obtained as the authentication medium of the test example 1.

More specifically, in manufacturing of a first transfer foil, a 38 $\mu$m-thick PET film (Lumirror (registered trademark), Toray Industries, Inc.) was prepared as a support layer. A peeling layer ink was applied to one of the surfaces of the support layer, and then dried to obtain a peeling layer. The thickness of the peeling layer 78 was 1 $\mu$m. Then, a first layer ink was applied to a surface of the peeling layer 78 by gravure printing, and then dried. The dry thickness of the first layer ink was 2 $\mu$m. Then, an original plate for forming a grating structure 11G was pressed against the dried first layer ink to mold a grating structure 11G. In molding, the press pressure was set to 2 kgf/cm$^2$, the press temperature was set to 80°C, and the press speed was set to 10 m/min.

Simultaneously with molding, the first layer ink was irradiated with ultraviolet light from the opposite side of the support layer to the peeling layer 78. A high-pressure mercury lamp was used for irradiation of ultraviolet light, and the output of the high-pressure mercury lamp was set to 300 mJ/cm$^2$. Thus, the first layer ink was cured to obtain a first layer 11. Then, a 50nm-thick $TiO_2$ film was formed on the first layer 11 by vacuum vapor deposition. Thus, a second layer 12 was obtained. Then, an adhesive layer ink was applied, and then dried to form a third layer 13 with a thickness of 2.5 $\mu$m or more and 4 $\mu$m or less as an adhesive layer. The temperature and time for drying were respectively set to 120°C and 45 seconds. Further, the second transfer foil was formed in the same manner as the first transfer foil except that the original plate used for forming the relief surface 71Re was different from the original plate used for forming the grating structure 11G.

Ink having the following composition was used as each of the peeling layer ink, the first layer ink, the relief layer ink, the third layer ink, and the adhesive layer ink.

[Peeling Layer Ink]

| | |
|---|---|
| Acrylic resin | 70.0 parts by mass |
| Methyl ethyl ketone | 30.0 parts by mass |

[First Layer Ink/Relief Layer Ink]

| | |
|---|---|
| UV curable acrylic acrylate resin | 70.0 parts by mass |
| Methyl ethyl ketone | 30.0 parts by mass |

[Third Layer Ink/Adhesive Layer Ink]

| | |
|---|---|
| Urethane resin | 50.0 parts by mass |
| Silica filler | 10.0 parts by mass |
| Methyl ethyl ketone | 40.0 parts by mass |

A transparent polycarbonate substrate (LEXAN (registered trademark) SD8B14, manufactured by SABIC) having a thickness of 100 $\mu$m was prepared as the first substrate 75. A polycarbonate substrate (LEXAN SD8B94, manufactured by SABIC corporation) having a thickness of 100 $\mu$m that develops a color when irradiated with a laser beam was prepared as the second substrate 76. After the first transfer foil was transferred to the first substrate 75, the support layer was removed. Further, after the second transfer foil was transferred to the second substrate 76, the support layer was removed. In transfer, an electric hot stamper was used, and the temperature of the surface in contact with the transfer foil was set to 120°C, the pressure was set to 1.05t/cm$^2$, and the pressing time was set to 1 second.

Then, a white resin film (LEXAN SD8B24, manufactured by SABIC) having a thickness of 400 $\mu$m was prepared as the white layer 111. A transparent resin film (LEXAN SD8B14) having a thickness of 100 $\mu$m was prepared as the lower protective layer 112 and the upper protective layer 113. Then, the lower protective layer 112, the white layer 111, the second substrate 76, the first substrate 75, and the upper protective layer 113 were stacked in this order and laminated. In lamination, the temperature was set to 200°C, the pressure was set to 80N/cm$^2$, and the time for applying heat and pressure was set to 25 minutes. Then, the laminated multilayer body was partially cut out into a card shape.

The multilayer body was irradiated with a laser beam at a wavelength of 1064 nm by using a laser maker. Accordingly, a first color developing section 76a and a second color developing section 76b were formed on the second substrate 76. Thus, a card was obtained as the authentication medium of Test Example 1.

[Test Example 2]

In the following description, Test Example 2 will be described. Test Example 2 is for reference and outside the scope of the claimed invention. The transfer foil of Test Example 2 is a test example corresponding to the transfer foil of the above eighth embodiment. In Test Example 1, first, a support layer 82 which is the same as that in Test Example 1 was prepared. A peeling layer 83 was formed on one of the surfaces of the support layer in the same manner as Test Example 1. Then, a first layer 11 was formed on the peeling layer 83, and a second layer 12 was formed on the first layer 11 in the same manner as Test Example 1.

Then, a third layer ink was applied, and then dried in the same manner as that when the first layer 11 was formed by using the first layer ink. Then, an original plate for forming a relief surface 13Re was pressed against the dried third layer ink to mold a relief surface 13Re. Various conditions in molding were set to the same conditions as those under which the grating structure 11G was formed.

Subsequently, a fourth layer 61 was formed on the relief surface 13Re in the same manner as that in which the second layer 12 was formed. An adhesive layer 81 was formed on the fourth layer 61 in the same manner as that in which

# EP 3 770 653 B1

the third layer 13 was formed in Test Example 1. Thus, a transfer foil of Test Example 2 was obtained. Further, ink having the same composition as the first layer ink in Test Example 1 was used as the third layer ink for forming the third layer 13 in Test Example 2.

While the embodiments of the present invention have been described in detail with reference to the drawings, specific configurations are not limited to the above embodiments.

The terms "part," "element," "pixel," "segment," "unit," "print," and "article" as used herein refer to physical entities. The physical entities can refer to a physical form or a spatial form surrounded by a substance. The physical entities may be a structure. The structure may be one having a specific function. A combination of structures having a specific function can perform a synergistic effect due to a combination of the respective functions of the structures.

The terms used in the present disclosure and especially in the appended claims (for example, the text of the appended claims) are generally intended as "open" terms (for example, the term "has" should be interpreted as "at least has," and the term "includes" should be interpreted as "includes, but is not limited to,").

In addition, in interpretation of terms, configurations, features, aspects, and embodiments, the drawings should be referred to as appropriate. Matters that can be directly and uniquely derived from the drawings, as well as the text, should be taken as grounds of correction.

Furthermore, when the claim recitation for introduction of a specific number is intended, such intention is expressly stated in the claims. Unless such a statement is provided, such intention does not exist. For example, in order to facilitate understanding, the following appended claims may include the use of introductory phrases "at least one" and "one or more" to introduce listing of claims. However, the use of such terms should not be construed as meaning that introducing the claim recitation by the indefinite article "a" or "an" limits a specific claim including the above claim to an embodiment which includes only one such recitation. The introductory phrase "one or more" or "at least one" and the indefinite article "a" or "an" (for example, "a" and/or "an") should be at least interpreted as meaning "at least one or more." The same applies to the use of definite articles, which are used for introduction of claim recitation.

[Reference Signs List]

    10, Optical element,
    30, 40, 50, 60, 70, 90 ... Optical element,
    10S ... Observation surface,
    11, 91 ... First layer,
    11G ... Grating structure,
    11G1 ... First grating structure,
    11G2 ... Second grating structure,
    11R, 12R, 13R, 71R ... Second surface,
    11Re, 12Re, 13Re, 71Re ... Relief surface,
    11S, 12F, 13F, 42F, 100F ... First surface,
    11S1 ... Motif region,
    11S2 ... Background region,
    11S3 ... Boundary region,
    12 ... Second layer,
    12V ... Virtual layer,
    13 ... Third layer,
    14 ... Resin layer,
    15 ... Protective layer,
    16 ... Imprint layer,
    17 ... White layer,
    20A ... First portion,
    20AG ... First grating,
    20B ... Second portion,
    20BG ... Second grating,
    20C ... Third portion,
    20CG ... Third grating,
    31, 41 ... Filler,
    42, 61 ... Fourth layer,
    50C, 90C, 100 ... Card,
    71 ... Relief layer,

72 ... Reflective layer,

73, 81 ... Adhesive layer,

74 ... Substrate,

75 ... First substrate,

76 ... Second substrate,

76a ... First color developing section,

76b ... Second color developing section,

78, 79, 83 ... Peeling layer,

80 ... Transfer foil,

82 ... Support layer,

101 ... First image,

101a ... Facial image,

101b ... Background image,

102 ... Second image,

103 ... Third image,

111 ... White layer,

112 ... Lower protective layer,

113 ... Upper protective layer,

114 ... Printed part

**Claims**

1. An optical element (10, 50) comprising:

   a first layer (11); a second layer (12) in contact with the first layer; and a third layer (13) in contact with the second layer, each layer having light transmitting properties, wherein
   the first layer (11) is a resin layer having a first refractive index n1, and has a first surface (11S) in contact with the second layer, and includes a grating structure (11G) composed of concave and convex portions in at least part of the first surface (11S),
   the second layer (12) is a dielectric layer having a second refractive index n2 higher than the first refractive index n1, and has a concavo-convex shape that follows the grating structure (11G),
   the third layer (13) is a resin layer having a third refractive index n3 lower than the second refractive index n2,
   the first surface (11S) has a concavo-convex surface,
   the grating structure (11G) includes a first grating structure (11G1) and a second grating structure (11G2),
   the concavo-convex surface includes a first region (11S1) in which the first grating structure (11G1) is located, and a second region (11S2) in which the second grating structure (11G2) is located and which is located close to the first region (11S1) in plan view, as viewed perpendicular to the first surface (11S),
   an azimuth angle of the first grating structure (11G1) and an azimuth angle of the second grating structure (11G2) are equal to each other,
   the first grating structure (11G1) and the second grating structure (11G2) have a grating period d in a range of 250 nm or more and 500 nm or less, and
   a difference between the grating period d1 of the first grating structure (11G1) and the grating period d2 of the second grating structure (11G2) is 20 nm or more,
   wherein the difference between the first refractive index n1 and the third refractive index n3 is 0.2 or less, and
   wherein the optical element (10, 50) further comprises a resin layer (14) located on a side of the first layer (11) opposite to that facing the second layer (12), wherein
   the first layer (11) has a hardness higher than a hardness of the resin layer (14) and higher than a hardness of the third layer (13),
   the first layer (11) is made of an ultraviolet curable resin,
   the first layer (11) has a thickness in a range of 1 $\mu$m or more and 10 $\mu$m or less, and
   the resin layer (14) and the third layer (13) are made of a thermoplastic resin.

2. The optical element (10, 50) according to claim 1, further comprising

   a third region (11S3) located between the first region (11S1) and the second region (11S2), wherein,
   when the optical element (10, 50) is irradiated with light from a light source positioned on a side of the second layer (12) opposite to that facing the third layer (13) and observed at a certain observation angle in a direction facing towards the side of the second layer (12), the third region (11S3) exhibits a color different from colors exhibited by the first region (11S1) and the second region (11S2).

3. The optical element (10, 50) according to claim 2, wherein

the third region (11S3) is formed of a flat surface on the first surface (11S) of the first layer (11), and
the flat surface has an average roughness Sa of 20 $\mu$m or less.

4. The optical element (10, 50) according to claim 2, wherein the third region (11S3) includes a scattering structure having directivity in a direction different from a specular reflection direction of light incident on the third region (11S3), or an anti-reflection structure.

5. The optical element (10, 50) according to any one of claims 2 to 4, wherein the third region (11S3) has a constant width.

6. The optical element (10, 20, 50) according to any one of claims 2 to 4, wherein the third region (11S3) includes a first portion (20A) and a second portion (20B), and the first portion (20A) has a width different from a width of the second portion (20B).

7. The optical element (10, 50) according to any one of claims 2 to 6, wherein the third region (11S3) has a width in a range of 30 $\mu$m or more and 3000 $\mu$m or less.

8. The optical element (10, 50) according to any one of claims 1 to 7, wherein

the first region (11S1) and the second region (11S2) each include a plurality of cells (Px) that are partitioned to each have an area of 0.1 mm$^2$ or less, and
the first region (11S1) and the second region (11S2) include the grating structure (11G) in at least some of the cells (Px).

9. The optical element (10, 20, 30, 40, 50) according to any one of claims 1 to 8, further comprising

a resin layer (14) located on a side of the first layer (11) opposite to that facing the second layer (12), wherein
at least one of the first layer (11), the third layer (13), and the resin layer (14) contains a filler (31, 41), and
the filler (31, 41) has an average particle size of 400 nm or less.

10. An authentication medium (100) comprising the optical element (10, 20, 30, 40, 50) according to any one of claims 1 to 9, wherein the optical element (10, 20, 30, 40, 50) covers on top of identification information.

**Patentansprüche**

1. Optisches Element (10, 50), das folgendes umfasst:

eine erste Schicht (11); eine zweite Schicht (12) in Kontakt mit der ersten Schicht; und eine dritte Schicht (13) in Kontakt mit der zweiten Schicht, wobei jede Schicht Lichtdurchlässigkeitseigenschaften besitzt, wobei
die erste Schicht (11) eine Harzschicht mit einem ersten Brechungsindex n1 ist, eine erste Oberfläche (11S) in Kontakt mit der zweiten Schicht besitzt und eine Gitterstruktur (11G), die aus konkaven und konvexen Teilen zusammengesetzt ist, in zumindest einem Teil der ersten Oberfläche (11S) einschließt,
die zweite Schicht (12) eine dielektrische Schicht mit einem zweiten Brechungsindex n2 höher als der erste Brechungsindex n1 ist und eine konkav-konvexe Form besitzt, die der Gitterstruktur (11G) folgt,
die dritte Schicht (13) eine Harzschicht mit einem dritten Brechungsindex n3 niedriger als der zweite Brechungsindex n2 ist,
die erste Oberfläche (11S) eine konkav-konvexe Oberfläche besitzt,
die Gitterstruktur (11G) eine erste Gitterstruktur (11G1) und eine zweite Gitterstruktur (11G2) einschließt,
die konkav-konvexe Oberfläche einen ersten Bereich (11S1), in dem sich die erste Gitterstruktur (11G1) befindet, und einen zweiten Bereich (11S2), in dem sich die zweite Gitterstruktur (11G2) befindet und der sich in Draufsicht, senkrecht zu der ersten Oberfläche (11S) gesehen, nahe an dem ersten Bereich (11S1) befindet, einschließt,
ein Azimutwinkel der ersten Gitterstruktur (11G1) und ein Azimutwinkel der zweiten Gitterstruktur (11G2) gleich zueinander sind,

die erste Gitterstruktur (11G1) und die zweite Gitterstruktur (11G2) eine Gitterperiode d in einem Bereich von 250 nm oder mehr und 500 nm oder weniger haben und

ein Unterschied zwischen der Gitterperiode d1 der ersten Gitterstruktur (11G1) und der Gitterperiode d2 der zweiten Gitterstruktur (11G2) 20 nm oder mehr ist,

wobei der Unterschied zwischen dem ersten Brechungsindex n1 und dem dritten Brechungsindex n3 0,2 oder weniger ist und

wobei das optische Element (10, 50) ferner eine Harzschicht (14), die sich auf einer Seite der ersten Schicht (11) entgegengesetzt zu derjenigen, die der zweiten Schicht (12) gegenüberliegt, befindet, umfasst, wobei

die erste Schicht (11) eine Härte größer als eine Härte der Harzschicht (14) und größer als eine Härte der dritten Schicht (13) besitzt,

die erste Schicht (11) aus einem Ultraviolett-härtbaren Harz hergestellt ist,

die erste Schicht (11) eine Dicke in einem Bereich von 1 $\mu$m oder mehr und 10 $\mu$m oder weniger besitzt und

die Harzschicht (14) und die dritte Schicht (14) aus einem thermoplastischen Harz hergestellt sind.

2. Optisches Element (10, 50) gemäß Anspruch 1, das ferner folgendes umfasst:

einen dritten Bereich (11S3), der sich zwischen dem ersten Bereich (11S1) und dem zweiten Bereich (11S2) befindet, wobei,

wenn das optische Element (10, 50) mit Licht aus einer Lichtquelle bestrahlt wird, die auf einer Seite der zweiten Schicht (12) entgegengesetzt zu derjenigen, die der dritten Schicht (13) gegenüberliegt, positioniert ist und in einem bestimmten Beobachtungswinkel in einer Richtung, die in Richtung der Seite der zweiten Schicht (12) weist, beobachtet wird, der dritte Bereich (11S3) eine Farbe zeigt, die sich von Farben unterscheidet, die von dem ersten Bereich (11S1) und dem zweiten Bereich (11S2) gezeigt werden.

3. Optisches Element (10, 50) gemäß Anspruch 2, in dem

der dritte Bereich (11S3) aus einer ebenen Oberfläche auf der ersten Oberfläche (11S) der ersten Schicht (11) gebildet ist und

die ebene Oberfläche eine mittlere Rauigkeit Sa von 20 $\mu$m oder weniger hat.

4. Optisches Element (10, 50) gemäß Anspruch 2, in dem der dritte Bereich (11S3) eine Streustruktur mit Richtwirkung in einer Richtung verschieden von einer Spiegelrelexionsrichtung für Licht, das auf den dritten Bereich (11S3) fällt, oder eine Antireflexionsstruktur einschließt.

5. Optisches Element (10, 50) gemäß mindestens einem der Ansprüche 2 bis 4, in dem der dritte Bereich (11S3) eine konstante Breite hat.

6. Optisches Element (10, 20, 50) gemäß mindestens einem der Ansprüche 2 bis 4, in dem der dritte Bereich (11S3) einen ersten Teil (20A) und einen zweiten Teil (20B) einschließt, wobei der erste Teil (20A) eine Breite verschieden von einer Breite des zweiten Teils (20B) hat.

7. Optisches Element (10, 50) gemäß mindestens einem der Ansprüche 2 bis 6, in dem der dritte Bereich (11S3) eine Breite innerhalb eines Bereichs von 30 $\mu$m oder mehr und 3.000 $\mu$m oder weniger hat.

8. Optisches Element (10, 50) gemäß mindestens einem der Ansprüche 1 bis 7, in dem

der erste Bereich (11S1) und der zweite Bereich (11S2) jeweils mehrere Zellen (Px) einschließen, die so unterteilt sind, dass sie jeweils eine Fläche von 0,1 mm$^2$ oder weniger haben, und

der erste Bereich (11S1) und der zweite Bereich (11S2) die Gitterstruktur (11G) in mindestens einigen der Zellen (Px) einschließen.

9. Optisches Element (10, 20, 30, 40, 50) gemäß mindestens einem der Ansprüche 1 bis 8, das ferner folgendes umfasst:

eine Harzschicht (14), die sich auf einer Seite der ersten Schicht (11) entgegengesetzt zu derjenigen, die der zweiten Schicht (12) gegenüberliegt, befindet, wobei

mindestens eine von der ersten Schicht (11), der dritten Schicht (13) und der Harzschicht (14) einen Füllstoff (31, 41) enthält und

der Füllstoff (31, 41) eine mittlere Partikelgröße von 400 nm oder weniger hat.

10. Authentifizierungsmedium (100), das das optische Element (10, 20, 30, 40, 50) gemäß mindestens einem der Ansprüche 1 bis 9 umfasst, wobei das optische Element (10, 20, 30, 40, 50) oberhalb von Identifikations-Information bedeckt.

**Revendications**

1. Élément optique (10, 50) comprenant :

une première couche (11) ; une deuxième couche (12) en contact avec la première couche ; et une troisième couche (13) en contact avec la deuxième couche, chaque couche présentant des propriétés de transmission de lumière, dans lequel
la première couche (11) est une couche de résine présentant un premier indice de réfraction n1, et a une première surface (11S) en contact avec la deuxième couche, et inclut une structure de réseau (11G) composée de portions concaves et convexes dans au moins une partie de la première surface (11S),
la deuxième couche (12) est une couche diélectrique présentant un deuxième indice de réfraction n2 supérieur au premier indice de réfraction n1, et a une forme concavo-convexe qui suit la structure de réseau (11G),
la troisième couche (13) est une couche de résine présentant un troisième indice de réfraction n3 inférieur au deuxième indice de réfraction n2,
la première surface (11S) présente une surface concavo-convexe,
la structure de réseau (11G) inclut une première structure de réseau (11G1) et une seconde structure de réseau (11G2),
la surface concavo-convexe inclut une première région (11S1) dans laquelle est située la première structure de réseau (11G1), et une deuxième région (11S2) dans laquelle est située la seconde structure de réseau (11G2) et qui est située à proximité de la première région (11S1) dans une vue en plan, comme on peut le voir perpendiculairement à la première surface (11S),
un angle d'azimut de la première structure de réseau (11G1) et un angle d'azimut de la seconde structure de réseau (11G2) sont égaux l'un à l'autre,
la première structure de réseau (11G1) et la seconde structure de réseau (11G2) présentent une période de réseau d dans une plage supérieure ou égale à 250 nm et inférieure ou égale à 500 nm, et
une différence entre la période de réseau d1 de la première structure de réseau (11G1) et la période de réseau d2 de la seconde structure de réseau (11G2) est supérieure ou égale à 20 nm,
dans lequel la différence entre le premier indice de réfraction n1 et le troisième indice de réfraction n3 est inférieure ou égale à 0,2, et
dans lequel l'élément optique (10, 50) comprend en outre une couche de résine (14) située sur un côté de la première couche (11) opposé à celui en regard de la deuxième couche (12), dans lequel
la première couche (11) présente une dureté supérieure à une dureté de la couche de résine (14) et supérieure à une dureté de la troisième couche (13),
la première couche (11) est constituée d'une résine durcissable aux ultraviolets,
la première couche (11) présente une épaisseur dans une plage supérieure ou égale à 1 $\mu$m et inférieure ou égale à 10 $\mu$m, et
la couche de résine (14) et la troisième couche (13) sont constituées d'une résine thermoplastique.

2. Élément optique (10, 50) selon la revendication 1, comprenant en outre

une troisième région (11S3) située entre la première région (11S1) et la deuxième région (11S2), dans lequel, lorsque l'élément optique (10, 50) est irradié avec de la lumière en provenance d'une source lumineuse positionnée sur un côté de la deuxième couche (12) opposé à celui en regard de la troisième couche (13) et observé sous un certain angle d'observation dans une direction en regard vers le côté de la deuxième couche (12), la troisième région (11S3) présente une couleur différente des couleurs présentées par la première région (11S1) et la deuxième région (11S2).

3. Élément optique (10, 50) selon la revendication 2, dans lequel

la troisième région (11S3) est formée d'une surface plane sur la première surface (11S) de la première couche (11), et

la surface plane présente une rugosité moyenne Sa inférieure ou égale à 20 $\mu$m.

4. Élément optique (10, 50) selon la revendication 2, dans lequel la troisième région (11S3) inclut une structure de diffusion présentant une directivité dans une direction différente d'une direction de réflexion spéculaire de la lumière incidente sur la troisième région (11S3) ou une structure antireflet.

5. Élément optique (10, 50) selon l'une quelconque des revendications 2 à 4, dans lequel la troisième région (11S3) présente une largeur constante.

6. Élément optique (10, 20, 50) selon l'une quelconque des revendications 2 à 4, dans lequel la troisième région (11S3) inclut une première portion (20A) et une seconde portion (20B), et la première portion (20A) présente une largeur différente d'une largeur de la seconde portion (20B).

7. Élément optique (10, 50) selon l'une quelconque des revendications 2 à 6, dans lequel la troisième région (11S3) présente une largeur comprise dans une plage supérieure ou égale à 30 $\mu$m et inférieure ou égale à 3 000 $\mu$m.

8. Élément optique (10, 50) selon l'une quelconque des revendications 1 à 7, dans lequel

la première région (11S1) et la deuxième région (11S2) incluent chacune une pluralité de cellules (Px) qui sont partitionnées pour présenter chacune une surface inférieure ou égale à 0,1 mm$^2$, et
la première région (11S1) et la deuxième région (11S2) incluent la structure de réseau (11G) dans au moins certaines des cellules (Px).

9. Élément optique (10, 20, 30, 40, 50) selon l'une quelconque des revendications 1 à 8, comprenant en outre

une couche de résine (14) située sur un côté de la première couche (11) opposé à celui en regard de la deuxième couche (12), dans lequel
au moins une couche parmi la première couche (11), la troisième couche (13) et la couche de résine (14) contient une charge (31, 41), et
la charge (31, 41) présente une taille de particule moyenne inférieure ou égale à 400 nm.

10. Support d'authentification (100) comprenant l'élément optique (10, 20, 30, 40, 50) selon l'une quelconque des revendications 1 à 9, dans lequel l'élément optique (10, 20, 30, 40, 50) recouvre sur le dessus des informations d'identification.

# FIG.1

# FIG.2

# FIG.3

# FIG.4

# FIG.5

# FIG.6

# FIG.7

s=TM
p=TE

# FIG.8

s=TE
p=TM

# FIG.9

# FIG.10

# FIG.11

# FIG.12

(a)

(b)

# FIG.13

(a)

(b)

# FIG.14

(a)

(b)

FIG.15

FIG.16

FIG.17

FIG.18

# FIG.19

# FIG.20

# FIG.21

# FIG.22

FIG.23

FIG.24

# FIG.25

(b)  11S3

Wb

(a)  11S3

11R1

11P1

(c)  Wb1  11S3

Wb2

# FIG.26

11S3

11S2       11S1

# FIG.27

# FIG.28

# FIG.29

11S3

11S

11S1

# FIG.30

VII

11G

VII

Ø

Y

X

# FIG.31

# FIG.32

# FIG.33

(a)

(b)

(c)

(d)

# FIG.34

(a)

(b)

# FIG.35

# FIG.36

# FIG.37

# FIG.38

FIG.39

FIG.40

FIG.41

# FIG.42

# FIG.43

FIG.44

FIG.45

FIG.46

EP 3 770 653 B1

# FIG.47

# FIG.48

# FIG.49

66

# FIG.50

# FIG.51

## FIG.52

## FIG.53

FIG.54

FIG.55

# FIG.56

# FIG.57

(a)

(b)

# FIG.58

(a)        (b)        (c)

# FIG.59

IDENTITY CARD

NATIONALITY:XXX
NAME:XXX
BIRTH:XXX
NUMBER:XXX

FIG.60

FIG.61

# FIG.62

# FIG.63

# FIG.64

# FIG.65

# FIG.66

# FIG.67

# FIG.68

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1739751 A1
- JP 2013527938 T